(19) Europäisches Patentamt
European Patent Office
Office européen des brevets

(11) EP 2 822 780 B1

(12) **EUROPEAN PATENT SPECIFICATION**

(45) Date of publication and mention of the grant of the patent:
**17.02.2021 Bulletin 2021/07**

(21) Application number: **13757725.0**

(22) Date of filing: **05.03.2013**

(51) Int Cl.:
***B41N 10/04*** (2006.01) ***B32B 25/02*** (2006.01)
***B32B 25/10*** (2006.01) ***B32B 25/20*** (2006.01)
***B32B 27/02*** (2006.01) ***B32B 27/12*** (2006.01)
***B32B 33/00*** (2006.01) ***B32B 7/02*** (2019.01)
***B32B 7/12*** (2006.01) ***C09D 183/04*** (2006.01)
***C09J 179/00*** (2006.01) ***C09J 183/04*** (2006.01)
***G03G 15/14*** (2006.01) ***G03G 15/20*** (2006.01)
***B41M 5/03*** (2006.01) ***B41M 5/035*** (2006.01)
***B32B 7/06*** (2019.01) ***B32B 25/04*** (2006.01)
***G03G 15/16*** (2006.01) ***C08K 5/57*** (2006.01)
***C08L 83/00*** (2006.01)

(86) International application number:
**PCT/IB2013/051743**

(87) International publication number:
**WO 2013/132432 (12.09.2013 Gazette 2013/37)**

(54) **INTERMEDIATE TRANSFER MEMBERS FOR USE WITH INDIRECT PRINTING SYSTEMS**

ZWISCHENÜBERTRAGUNGSELEMENTE ZUR VERWENDUNG MIT INDIREKTEN DRUCKSYSTEMEN

ÉLÉMENTS DE TRANSFERT INTERMÉDIAIRE UTILISABLES AVEC DES SYSTÈMES D'IMPRESSION INDIRECTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**05.03.2012 US 201261606913 P**
**06.03.2012 US 201261607537 P**
**15.03.2012 US 201261611557 P**
**15.03.2012 US 201261611564 P**
**15.03.2012 US 201261611566 P**
**15.03.2012 US 201261611552 P**
**15.03.2012 US 201261611497 P**
**18.04.2012 US 201261635180 P**
**01.05.2012 US 201261640893 P**
**01.05.2012 US 201261641258 P**

(43) Date of publication of application:
**14.01.2015 Bulletin 2015/03**

(73) Proprietor: **Landa Corporation Ltd.**
**7612301 Rehovot (IL)**

(72) Inventors:
- **LANDA, Benzion**
  **7405135 Nes Ziona (IL)**
- **ABRAMOVICH, Sagi**
  **4339320 Ra'anana (IL)**
- **SORIA, Meir**
  **9354826 Jerusalem (IL)**

(74) Representative: **Harrison IP Limited**
**3 Ebor House**
**Millfield Lane**
**Nether Poppleton, York YO26 6QY (GB)**

(56) References cited:
**EP-A1- 2 270 070** **EP-A2- 0 457 551**
**EP-A2- 0 613 791** **EP-A2- 0 784 244**
**EP-A2- 0 843 236** **WO-A1-01/70512**
**WO-A1-98/21251** **WO-A1-98/55901**
**WO-A1-2004/113450** **WO-A1-2006/069205**
**WO-A1-2006/073696** **WO-A2-2007/009871**
**US-A- 3 697 551** **US-A- 4 093 764**
**US-A- 5 679 463** **US-A- 5 733 698**
**US-A- 5 884 559** **US-A1- 2003 186 147**
**US-A1- 2003 234 849** **US-B1- 6 303 215**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 822 780 B1

**Description**

FIELD AND BACKGROUND OF THE INVENTION

The invention relates to the field of printing and to intermediate transfer members of printing systems.

In the art of indirect printing it is known, during a printing cycle when a specific image is printed on a specific substrate, to:

a. apply at (e.g., an image forming station) one or more inks, (each ink comprising a coloring agent in a liquid carrier) as a plurality of ink droplets to form an ink image on the image transfer surface of a release layer of an intermediate transfer member;
b. while the ink image is being transported by the intermediate transfer member, evaporate the carrier to leave an ink residue film including the coloring agents on the image transfer surface; and
c. transfer (e.g., at an impression station) the residue film from the image transfer surface to the substrate (e.g., paper, cardboard, cloth), thereby printing the desired image on the substrate.

Typically, the inks are in an oil-based (e.g., in liquid electrographic printing (LEP)) or water-based carrier. Such liquid inks may be applied to the image transfer surface of the intermediate transfer member of such printing systems by ink jetting of ink droplets, typically in a drop on demand mode.

For better printing results, an additional step to the previously described process may be needed. For instance, in LEP technology it is known to use an energy generated physical conditioning of the intermediate transfer member prior to the application of the ink. This physical conditioning causes the formation of electrophoretic attraction between charged coloring agent particles in the ink and the laser exposed image forms on the surface of a transfer surface, thereby fixing the coloring agent particles to the release layer.

Chemical conditioning methods are also known, which generally include the application of a chemical agent to the surface of the intermediate transfer member prior to the application of the inks. Such agents usually interact chemically with molecules of the inks and therefore typically need to be present in significant amount (e.g., thick coating, high concentration, prolonged presence during the process, etc.)

An intermediate transfer member is typically a laminated drum or looped blanket, also called a belt, the outermost layer of which, (i.e., the layer that defines the image transfer surface to which the inks are applied and from which the residue film is released to print the image on the substrate) is called the release layer.

Any given release layer has a specific set of physical and chemical properties to allow printing of a desired quality. Such release layer properties, the importance of which may vary from a printing process to another, include for example:

an image transfer surface (to which the ink droplets are applied) having properties such as affinity and wettability to the inks so that applied ink droplets remain localized where applied without excess spreading or beading, and allowing the ink image to be neatly transferred to the substrate without leaving substantial residue on the image transfer surface;
sufficiently adhesive to other layers of the intermediate transfer member;
sufficiently compressible to conform to the surface of the substrate during transfer, while preventing any distortion of the residue film during transfer to the substrate;
sufficiently resistant to the method used to fix the ink image, including for instance the heat applied to evaporate the ink carrier, or inert to the conditioning method, if needed; and sufficiently abrasion resistant and smooth to have a reasonably long life-time.

EP0613791 discloses a multi-layered sleeve-like printing blanket mountable on gapless cylinders or tubular blanket carriers, thereby minimizing vibration when operated at high rotational speeds comprising a seamless outer printing surface layer; at least one reinforced elastomer layer, the elastomer layer being reinforced by fibers substantially parallel with the inward and outward sides of the cylindrical tube defined by the reinforced elastomer layer; and a resiliently compressible layer. The oriented fibers reinforce the elastomer layer such that the modulus of elasticity in the circumferential direction of rotation is increased.

US5884559 discloses a printing blanket formed by laminating a non-stretchable layer obtained by winding a thread in helical fashion in the circumferential direction, a compressible layer comprising an elastomer and in a porous and a seamless cylindrical shape, and a surface printing layer similarly comprising an elastomer and in a seamless cylindrical shape.

EP0784244 discloses an intermediate transfer member suitable for full-color image formation by electrophotography that is formed by an elastic base layer and a fibrous core member embedded within the base layer. The core

member is formed of fibers which are disposed within the base layer at a spacing between adjacent fibers of 50 - 3000 μm.

SUMMARY OF THE INVENTION

The invention relates to intermediate transfer members suitable for use with indirect printing systems having substantially greater lateral elasticity than longitudinal elasticity.

As is discussed in greater detail hereinbelow, belt-type intermediate transfer members formed from a continuous flexible blanket loop may stretch to a substantial extent during use, especially when exceptionally long and/or when operated at relatively high temperatures under tensile stress. When substantial such stretching occurs, an intermediate transfer member provides insufficient printing performance and must be replaced.

According to the present invention, there is provided an intermediate transfer member as hereinafter set forth in Claim 1 of the appended claims.

Features of desirable embodiments of the invention are set forth in Claims 2 to 12 of the appended claims.

BRIEF DESCRIPTION OF THE FIGURES

Some embodiments of the invention are described herein with reference to the accompanying figures. The description, together with the figures, makes apparent to a person having ordinary skill in the art how some embodiments of the invention may be practiced. The figures are for the purpose of illustrative discussion and no attempt is made to show structural details of an embodiment in more detail than is necessary for a fundamental understanding of the invention. For the sake of clarity, some objects depicted in the figures are not to scale.

In the Figures:

FIG. 1A is a schematic cross-sectional view of an embodiment of an intermediate transfer member, having a release layer directly attached to a surface of the body of the intermediate transfer member;

FIG. 1B is a schematic cross-sectional view of an embodiment of an intermediate transfer member, having a release layer attached to a surface of the body of the intermediate transfer member with an adhesive;

FIG. 2 is a schematic cross-sectional view of an embodiment of an intermediate transfer member, comprising a release layer adhered to a body having a reinforcement layer;

FIG. 3 is a schematic cross-sectional view of an embodiment of an intermediate transfer member, comprising a release layer adhered to a body having a reinforcement layer and a low-friction layer;

FIG. 4 is a schematic cross-sectional view of an embodiment of an intermediate transfer member, comprising a release layer adhered to a body having a compressible layer, a reinforcement layer and a low-friction layer;

FIG. 5 is a schematic cross-sectional view of an embodiment of an intermediate transfer member, comprising a release layer adhered to a body having a compressible layer and a reinforcement layer;

FIG. 6 is a schematic cross-sectional view of an embodiment of an intermediate transfer member, comprising a release layer adhered to a body having a conformational layer, a compressible layer, a reinforcement layer and a low-friction layer;

FIG. 7 is a schematic cross-sectional view of an embodiment of an intermediate transfer member, comprising a release layer adhered to a body having a conformational layer, an electrically-conductive layer, a compressible layer, a reinforcement layer and a low-friction layer;

FIG. 8 is a schematic cross-sectional view of an embodiment of an intermediate transfer member, comprising a release layer adhered to a body having a conformational layer, an electrically-conductive layer, a thermally-insulating layer, a compressible layer, a reinforcement layer and a low-friction layer;

FIG. 9 is a schematic cross-sectional view of an embodiment of an intermediate transfer member, comprising a release layer adhered to a body having a conformational layer, an electrically-conductive layer, a thermally-conducting layer, a compressible layer, two reinforcement layers connected by a connective layer and a low-friction layer;

FIG. 10 is a schematic cross-sectional view of an embodiment of an intermediate transfer member, comprising a release layer adhered to a body having a reinforcement layer and an inner (multi)layer;

FIG. 11 is a schematic cross-sectional view of an embodiment of an intermediate transfer member, comprising a release layer adhered to a body having an intermediate (multi)layer, a reinforcement layer and an inner (multi)layer;

FIG. 12 is a schematic cross-sectional view of an embodiment of an intermediate transfer member, comprising a release layer adhered to a body having an intermediate (multi)layer and a reinforcement layer;

FIG. 13 is a schematic cross-sectional view of an embodiment of an intermediate transfer member, comprising a release layer adhered to a body having an intermediate (multi)layer, a first reinforcement layer, an intervening (multi)layer, a second reinforcement layer and an inner (multi)layer;

FIG. 14 is a schematic cross-sectional view of an embodiment of an intermediate transfer member, comprising a release layer directly attached to a body having a conformational layer, an electrically-conductive layer, a compressible layer, a reinforcement layer and a low-friction layer;

FIG. 15 is a schematic cross-sectional view of an embodiment of an intermediate transfer member, comprising a release layer directly attached to a body with a conformational layer, an electrically-conductive layer, a thermally-insulating layer, a compressible layer, a reinforcement layer and a low-friction layer;

FIG. 16 is a schematic cross-sectional view of an embodiment of an intermediate transfer member, comprising a release layer adhered to a body with a conformational layer, a reinforcement layer and a high-friction layer;

FIG. 17 is a graph showing elongation of a blanket with time with 750N tension at 23°C;

FIG. 18 is a graph showing elongation of a blanket with time with 350N tension at 150°C;

FIG. 19 is a graph showing elongation of an isolated single ply cotton fabric with time with 750N tension at 23°C;

FIG. 20 is a graph showing elongation of a single ply isotropic Kevlar fabric with time with 750N tension at 23°C;

FIG. 21 is a graph showing elongation of a single ply isotropic glass fiber fabric with time with 750N tension at 23°C;

FIG. 22 is a graph showing elongation of a blanket including an anisotropic reinforcement layer according to the teachings herein with time with 350N in a longitudinal direction at 23°C;

FIG. 23 is a graph showing elongation of a blanket including an anisotropic reinforcement layer according to the teachings herein with time with 350N in a lateral direction at 23°C;

FIG. 24 is a schematic depiction of a cross section along a lateral direction of an embodiment of a body of an intermediate transfer member having longitudinal primary fibers embedded in silicone rubber matrix as a supporting component;

FIG. 25 is a schematic depiction of a cross section along a lateral direction of an embodiment of a body of an intermediate transfer member having longitudinal primary fibers embedded in silicone rubber matrix and an elastomer sheet as a supporting component;

FIG. 26 is a schematic depiction of a cross section along a lateral direction of an embodiment of a body of an intermediate transfer member having longitudinal primary fibers and secondary fibers woven therewith as a supporting component;

FIG. 27 is a schematic depiction of an embodiment of a body of an intermediate transfer member having a ply of longitudinal primary fibers in direct physical contact with two plies of secondary fibers as supporting components; and

FIG. 28 is a schematic depiction of a cross section along a lateral direction of an embodiment of a body of an intermediate transfer member having a ply of longitudinal primary fibers and two plies of secondary fibers as supporting components.

## DESCRIPTION OF SOME EMBODIMENTS OF THE INVENTION

The invention relates to intermediate transfer members having anisotropic stretching properties.

The principles, uses and implementations of the teachings herein may be better understood with reference to the accompanying description and figures. Upon perusal of the description and figures present herein, one skilled in the art is able to implement the invention without undue effort or experimentation. In the figures, like reference numerals refer to like parts throughout.

A number of problems are associated with release layers of known intermediate transfer members and the preparation thereof.

One such problem is the susceptibility of the release layer to abrasive wear, defined by the American Society for Testing and Materials as the loss of material due to hard particles or hard protuberances that are forced against and move along a solid surface. Abrasive wear can be measured as loss of mass by the Taber Abrasion Test. Alternatively, abrasion resistance of a surface can be measured by moving a test piece across the surface of an abrasive film mounted to a revolving drum and expressing the loss of gloss of the surface in percent, as described in further detail below. Low resistance to abrasive wear (also referred to herein as low abrasion resistance) reduces the useful lifetime of the intermediate transfer component.

An additional problem associated with known release layers is contamination of the image transfer surface of the release layer during manufacture of an intermediate transfer member. Typically, release layers are fashioned by application of a layer of a curable fluid polymer composition to an incipient intermediate transfer member, followed by curing that leads to solidification of the curable composition to form the release layer and adhesion to the intermediate transfer member. In the art, an image transfer surface of a release layer is often contaminated by dirt that settles on the surface of the curable polymer layer during the curing process, prior to complete curing. It is known that faster curing compositions having shorter curing times are less prone to such contamination. However, as fast curing is known to yield heterogeneous cross linking, such method is avoided when elastomers having good and uniform mechanical properties are sought. As reported herein, the inventors have found that surprisingly the use of a fast curing catalyst according to the teachings herein allowed the preparation of a release layer having good abrasion resistance.

CURABLE COMPOSITIONS, ELASTOMERS AND RELEASE LAYERS

Herein are disclosed, *inter alia,* curable polymer compositions and elastomers resulting from the curing of such compositions, which elastomers can be used to make a release layer of an intermediate transfer member suitable for printing inks including an aqueous liquid carrier.

Some embodiments of the curable polymer compositions are comparatively fast-curing and have relatively shorter curing time. In some such embodiments, image transfer surfaces of intermediate transfer member release layers fashioned from the corresponding elastomers apparently having lower-levels of contamination by dirt.

Some embodiments of the elastomers demonstrate superior abrasion resistance as well as other characteristics, rendering the elastomers useful for making intermediate transfer members of printing systems.

CURABLE COMPOSITIONS

Thus according to an aspect of some embodiments of the teachings herein, there is provided a curable polymer composition, comprising at least one silicone-related polymer selected from the group consisting of:

a silanol and/or silane functional polydialkylsiloxane,
a silanol and/or silane functional polyalkylarylsiloxane,
a silanol and/or silane functional polydiarylsiloxane and combinations thereof
a cross-linker; and
a fast-curing heat activated condensation-cure catalyst.

In some embodiments, at least one silanol-functional polymer is a silanol-terminated polymer. In some embodiments, at least one silane-functional polymer is a silane-terminated polymer.

The viscosity of the curable composition is any suitable viscosity, and is in part a function of the molecular weight of the component silicone-related polymer. In some embodiments, the curable composition has a viscosity of up to 20,000 cp, up to 30,000 cp, up to 40,000 cp, and even up to 50,000 cp. As noted above, in some preferred embodiments, a curable composition is devoid of isoparaffins (and even other non-volatile solvents) that are typically used to reduce viscosity when needed. In some embodiments, a curable composition includes one or more volatile solvents (that substantially evaporate away during curing or by heating to temperartures at which the elastomer is typically used) to adjust viscosity as needed. Typical such volatile solvents include xylene and toluene.

Silicone-related polymer

In some embodiments, the silicone-related polymer has a molecular weight of between about 13,000 and about 140,000 g / mole, in some embodiments between about 14,000 and about 50,000 g / mole, and in some embodiments even between about 16,000 and about 23,000 g / mole.

*Silanol-terminated silicone-related polymers*

In some embodiments, the at least one silicone-related polymer of the curable composition is a silanol-terminated polymer. In some embodiments, substantially all of the silicone-related polymers of the curable composition are silanol-terminated polymers.

In some embodiments, a silanol-terminated polymer is a polymer having at least one functional group -Si(Ra)(Rb)(OH), where Ra and Rb are independently selected from the group consisting of H and alkyl (e.g., methyl).

In some embodiments, the at least one silicone-related polymer of the curable composition is a silanol-terminated polydialkylsiloxane and/or silanol-terminated polyalkylarylsiloxane and/or silanol-terminated polydiarkylsiloxane. In some embodiments, substantially all of the silicone-related polymers of the curable composition are silanol-terminated polydialkylsiloxanes and/or silanol-terminated polyalkylarylsiloxane and/or silanol-terminated polydiarkylsiloxane.

In some embodiments, the silanol-terminated polydialkylsiloxane is of the formula:

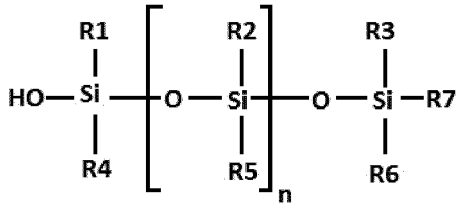

where R1 to R6 are each independently a $C_1$ to $C_6$ alkyl group (linear and/or branched), R7 is selected from the group consisting of OH, H or a $C_1$ to $C_6$ alkyl group (linear and/or branched); and, n is an integer from 50 to 1900. In some embodiments, n is an integer between 200 and 675. In some embodiments, R1 to R6 are all $CH_3$ and R7=OH, so that the silanol-terminated polydialkylsiloxane is a silanol-terminated polydimethylsiloxane. In some such embodiments the silanol-terminated polydimethylsiloxane has an average molecular weight of between about 13,000 and about 140,000 g / mole, between about 14,000 and about 50,000 g / mole, between about 13,000 and about 26,000 g / mole, between about 15,000 and about 26,000 g / mole and even of between about 16,000 and about 23,000 g / mole.

In some embodiments, the silanol-terminated polyalkylarylsiloxane is of the above formula, wherein: R1, R2 and R3 are each independently a $C_1$ to $C_6$ alkyl group (linear and/or branched), R4, R5 and R6 are each independently an aromatic group, R7 is selected from the group consisting of OH, H or a $C_1$ to $C_6$ alkyl group (linear and/or branched); and, n is an integer from 50 to 1900. In some embodiments, n is an integer between 200 and 675. In some embodiments, R1, R2 and R3 are all $CH_3$; R4, R5 and R6 are all $C_6H_6$; and R7=OH, so that the silanol-terminated polyalkylarylsiloxane are a silanol-terminated polymethylphenylsiloxane. In some such embodiments the silanol-terminated polymethylphenylsiloxane has an average molecular weight of between about 13,000 and about 140,000 g / mole, between about 14,000 and about 50,000 g / mole, between about 13,000 and about 26,000 g / mole, between about 15,000 and about 26,000 g / mole and even of between about 16,000 and about 23,000 g / mole.

In some embodiments, the silanol-terminated polydilarylsiloxane is of the above formula, where R1 to R6 are each independently an aromatic group, R7 is selected from the group consisting of OH, H or an aromatic group; and, n is an integer from 50 to 1900. In some embodiments, n is an integer between 200 and 675. In some embodiments, R1 to R6 are all $C_6H_6$, so that the silanol-terminated polydiarylsiloxane is a silanol-terminated polydiphenylsiloxane. In some such embodiments the silanol-terminated polydiphenylsiloxane has an average molecular weight of between about 13,000 and about 140,000 g / mole, between about 14,000 and about 50,000 g / mole, between about 13,000 and about 26,000 g / mole, between about 15,000 and about 26,000 g / mole and even of between about 16,000 and about 23,000 g / mole.

*Silane-terminated silicone-related polymers*

In some embodiments, the at least one silicone-related polymer of the curable composition is a silane-terminated polymer. In some embodiments, substantially all of the silicone-related polymers of the curable composition are silane-terminated polymers. In some embodiments, substantially all of the silicone-related polymers of the curable composition are either silane-terminated polymers or silanol-terminated polymers.

In some embodiments, a silane-terminated polymer is a polymer having at least one functional group -Si(Rd)(Re)(Rf), where at least one of Rd, Re and Rf is an O-alkyl group, the alkyl group preferably having not more than four carbon atoms, for example, at least one of Rd, Re and Rf is $OCH_3$, $OC_2H_5$, $OC_3H_7$ or $OC_4H_9$.

In some embodiments, the at least one silicone-related polymer of the curable composition is a silane-terminated polydialkylsiloxane. In some embodiments, substantially

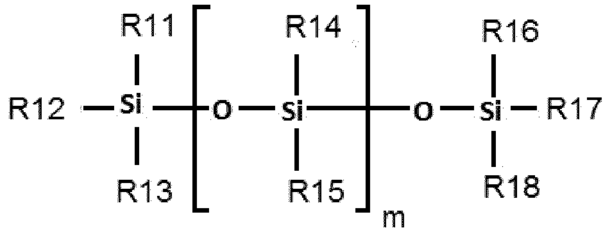

all of the silicone-related polymers of the curable composition are silane-terminated polydialkylsiloxanes. In some embodiments, the silane-terminated polydialkylsiloxane is substantially of the formula:
wherein:

- R14 and R15 are each independently selected from the group consisting of $C_1$ to $C_6$ alkyl group (linear and/or branched) and an aromatic group;
- R11, R12 and R13 are each independently selected from the group consisting of (O-alkyl) and (alkyl), the alkyl groups each independently a $C_1$ to $C_4$ alkyl group (linear and/or branched), with at least one of R11, R12, and R13 being (O-alkyl);
- R16, R17 and R18 are each independently selected from the group consisting of (O-alkyl) and (alkyl), the alkyl groups each independently a $C_1$ to $C_4$ alkyl group (linear and/or branched), with at least one of R16, R17, and R18 being (O-alkyl); and

m is an integer from 50 to 1900.

In some embodiments, m is an integer between 200 and 675.

In some embodiments one of R11, R12, and R13 is (O-alkyl). In some embodiments two of R11, R12, and R13 are (O-alkyl). In some embodiments all three of R11, R12, and R13 are (O-alkyl).

In some embodiments one of R16, R17, and R17 is (O-alkyl). In some embodiments two of R16, R17, and R18 are (O-alkyl). In some embodiments all three of R16, R17, and R18 are (O-alkyl).

In some such embodiments the silane-terminated polymer has an average molecular weight of between about 13,000 and about 140,000 g / mole, between about 14,000 and about 50,000 g / mole, between about 13,000 and about 26,000 g / mole, between about 15,000 and about 26,000 g / mole and even of between about 16,000 and about 23,000 g / mole.

In some embodiments, R14 and R15 are each independently a $C_1$ to $C_6$ alkyl group (linear and/or branched) so that the silane-terminated silicone-related polymer is a silane-terminated polydialkylsiloxane. In some such embodiments, R14 and R15 are all $CH_3$, so that the silane-terminated polydialkylsiloxane is a silane-terminated polydimethylsiloxane.

In some embodiments, R14 is a $C_1$ to $C_6$ alkyl group (linear and/or branched) and R15 is an aromatic group so that the silane-terminated silicone-related polymer is a silane-terminated polyalkylarylsiloxane. In some such embodiments, R14 is $CH_3$ and R15 is $C_6H_6$, so that the silane-terminated polyalkylarylsiloxane is a silane-terminated polymethylphenylsiloxane.

In some embodiments, R14 and R15 are each independently an aromatic group so that the silane-terminated silicone-related polymer is a silane-terminated polydiarylsiloxane. In some such embodiments, R14 and R15 are all $C_6H_6$, so that the silane-terminated polydiarylsiloxane is a silane-terminated polydiphenylsiloxane.

In some embodiments, the curable composition is a low to high viscosity RTV silicone polymer composition, wherein the at least one (and in some embodiments, substantially all) silicone-related polymer includes a silanol-terminated polydimethyl siloxane; the fast-curing catalyst comprising a condensation-cure catalyst; and the curable composition is substantially devoid of a filler such as carbon black. In some embodiments, the silanol-terminated polydimethyl siloxane has an average molecular weight of between about 3,000 and about 140,000 g/mole and a viscosity of between about 65 to about 150000 mPas.

In some embodiments, the curable composition is a low to high viscosity RTV silicone polymer composition, wherein the at least one (and in some embodiments, substantially all) silicone-related polymer is selected from the group consisting of: a silanol-terminated polydiphenylsiloxane; a silanol-terminated copolymer of dimethyl diphenyl siloxane; a silanol-terminated polymethylphenylsiloxane; a silanol-terminated copolymer of dimethyl methylphenyl siloxane; and combinations thereof.

In some embodiments, the curable composition is a low to high viscosity RTV silicone polymer composition, wherein the at least one (and in some embodiments, substantially all) silicone-related polymer is selected from the group consisting of a silanol-terminated polytrifluoropropyl methyl siloxane and a silanol-terminated copolymer of dimethyl trifluoropropyl methyl siloxane and combinations thereof.

<u>Cross-linker</u>

Any suitable cross-linker may be used in implementing a curable polymer composition according to the teachings herein. The amount of cross-linker in the composition is any suitable amount. In some embodiments, the cross-linker is present in the composition at between about 3% and about 26%; between about 5% and about 17%; and even between about 6% and about 17% of the weight of the silicone-related polymer.

In some embodiments, the cross-linker comprises (and in some embodiments, substantially all the cross-linker is) a cross-linker selected from the group consisting of ethylsilicate (tetraethoxysilane, CAS Nr. 78-10-4), polyethylsilicate and combinations thereof, collectively called ethylsilicates. By "polyethylsilicate" is meant oligomers of ethylsilicate (TEOS monomer), having the formula $(C_2H_5O)_3Si\text{-}[O\text{-}Si(OC_2H_5)2]_m\text{-}OC_2H_5$, where *m* is an integer between 3 and 15, preferably *m* is an integer between 3 and 12.

Suitable such crosslinkers that are commercially available include PSI021 and/or PSI023 (Gelest Inc, Morrisville, PA, USA) and Ethylsilicate 48 (Colcoat Company, Ltd., Tokyo, Japan).

In some embodiments, the ethylsilicates are present in the curable composition at not less than about 3%, not less than about 5% and even not less than about 6% of the weight of the silicone-related polymer.

In some embodiments, the ethylsilicates are present in the curable composition at not more than about 26%, not more than about 17% and even not more than about 12% of the weight of the silicone-related polymer.

In some embodiments, the ethylsilicates are present in the composition at between about 3% and about 26%; between about 5% and about 26%; between about 6% and about 26%; between about 6% and about 17%; and even between about 9% and about 12% of the weight of the silicone-related polymer.

It has been found that the elastomer resulting from curing a curable polymer composition comprising such a crosslinker together with the above-described silicone-related polymers cures relatively quickly, reducing the amount of contamination entrapped in the elastomer, especially on the image transfer surface thereof. It has also been found that such an elastomer is particularly compatible with inks having an aqueous carrier.

Fast-curing catalyst

Any suitable fast-curing catalyst may be used in implementing a curable polymer composition according to the teachings herein, in any suitable amount.

As used herein the term "fast-curing catalyst" refers to a catalyst (in terms of type and amount) that when added to a curable polymer composition, results in sufficient curing within 2 minutes at 100°C so that the composition is no longer tacky.

*Condensation-cure catalyst*

In some embodiments, the fast-curing catalyst is a condensation-cure catalyst. Any suitable amount of condensation-cure catalyst may be used. In some embodiments, the amount of condensation-cure catalyst is between about 0.1% and about 3%, between about 0.1% and about 2%, between about 0.1% and about 1.8%, between about 0.5% and about 1.8% and even between about 0.8% and about 1.2% of the weight of the silicone-related polymer.

In some embodiments, the condensation-cure catalyst is a tin catalyst. In some embodiments, the condensation-cure tin catalyst is selected from the group consisting of dibutyltin bis (acetylacetonate), dioctyl tin stannoxane, stannous octoate, and dioctyl tin bis (acetylacetonate), and combinations thereof. In a preferred embodiment, the tin catalyst is dioctyl tin bis (acetylacetonate).

In a preferred embodiment, the condensation-cure tin catalyst is dioctyl tin bis(acetylacetonate) present at 0.8 to 1.2% of weight of the silicone related polymer.

In a preferred embodiment, the polymerizable composition consists essentially of silanol-terminated polydimethylsiloxane, polyethylsilicate, and dioctyl tin bis (acetylacetonate).

ELASTOMER

According to an aspect of some embodiments of the teachings herein, there is provided an elastomer, resulting from curing of a curable polymer composition according to the teachings herein.

INTERMEDIATE TRANSFER MEMBER INCLUDING ELASTOMER RELEASE LAYER

According to an aspect of some embodiments of the teachings herein, there is provided an intermediate transfer member for use with a printing system, comprising a release layer having an image transfer surface; and the release layer attached to a body supporting the release layer, wherein the release layer is of an elastomer according to the teachings herein.

The Inventors have experimentally demonstrated that elastomers resulting from the curing of a curable polymer composition according to the teachings herein where the silicone-related polymer is one of silyl-terminated polyethers, silyl-terminated polyacrylates, silane-terminated polyurethanes and silane-terminated polypropyleneglycols are unsuitable for use as a release layer for an intermediate transfer member. Specifically, such elastomers have been found to be one or more of: not thermally-stable under printing conditions, insufficiently abrasion resistant, insufficiently adherent to an intermediate transfer member body, or providing insufficient transfer of an ink image to a substrate.

In some embodiments, the release layer is attached to the body with an adhesive layer.

In some embodiments, the release layer is directly attached to the body, without an adhesive.

As discussed in greater detail hereinbelow, in some embodiments, the body includes at least one layer selected from the group consisting of a conformational layer, a compressible layer, a thermally-insulating layer, a thermally-conductive layer, an electrically-conductive layer, a low-friction layer, a high-friction layer, a reinforcement layer and a connective layer.

INTERMEDIATE TRANSFER MEMBER STRUCTURE

As noted above, an intermediate transfer member is typically a laminated drum or blanket. A laminated drum may be a rigid drum upon which a blanket according to the teachings herein is mounted. By blanket is meant a flexible intermediate transfer member configured to be mounted on a support structure within a printing system to form a continuous loop or belt, so that the belt can travel around the support structure. The ends of an elongated blanket strip are

secured to one another releasably or permanently to form the seam of a continuous belt.

The outermost layer of an intermediate transfer member is the release layer to which outer surface, the image transfer surface, the ink droplets are applied, on which the ink residue film is formed and from which the residue film is transferred to the substrate to print a desired image on the substrate. As noted above, in some embodiments the release layer is formed from an elastomer according to the teachings herein.

The release layer is attached to and supported by the body (also called "body portion") of the intermediate transfer member. The body of the intermediate transfer member is a laminated structure including at least one, in some embodiments more than one, distinct layers. Typically, each of the layers of the body serves one or more purposes that allow a given intermediate transfer member to provide sufficient printing performance.

An elastomer according to the teachings herein may be used for making a release layer attached to any suitable body, including suitable bodies known in the art, to make an intermediate transfer member. That said, in some embodiments, it is preferred that an elastomer according to the teachings herein is used for making a release layer attached to a body according to the teachings herein to make an intermediate transfer member. Importantly, although in typical embodiments it is preferred that an elastomer according to the teachings herein is used for making a release layer attached to a body according to the teachings herein, in some embodiments other release layers made of other suitable materials are attached to a body according to the teachings herein to make an intermediate transfer member.

An intermediate transfer member is a laminated structure comprising a body having one or more layers and a surface (of the last one of the one or more layers) and a release layer attached to the surface, in some embodiments through an adhesive layer. In some embodiments, the body of the intermediate transfer member comprises one or more of a conformational layer, a compressible layer, a thermally-insulating layer, a thermally-conductive layer, an electrically-conductive layer, a low-friction layer, a high-friction layer, a reinforcement layer and a connective layer.

Thus according to an aspect of some embodiments of the teachings herein, there is provided an intermediate transfer member for use with a printing system, comprising: a release layer having an image transfer surface; the release layer attached to a body supporting the release layer. In preferred embodiments, the release layer is of an elastomer as described herein. Although aspects of the teachings herein are applicable to any intermediate transfer member, in preferred embodiments, the intermediate transfer member is a flexible blanket or continuous belt.

In some embodiments, the body comprises one or more layers selected from the group consisting of a conformational layer, a compressible layer, a thermally-insulating layer, a thermally-conductive layer, an electrically-conductive layer, a low-friction layer, a high-friction layer, a reinforcement layer and a connective layer.

## *Release Layer*

As noted above, a release layer of an intermediate transfer member according to the teachings herein may be any suitable release layer attached to and supported by the body. In some embodiments, the release layer is directly bonded to, and thereby attached to, the body, see for example hereinbelow. In some embodiments, the release layer is bonded to, and thereby attached to, the body with an adhesive layer, see for example hereinbelow.

In preferred embodiments, the release layer is of an elastomer according to the teachings herein. That said, in some embodiments the release layer is any suitable release layer made of any suitable material, for example, as known in the art.

In some embodiments, the image transfer surface of the release layer is hydrophobic. In some such embodiments, the release layer is configured so that when droplets of aqueous ink are applied to the image transfer surface, each droplet spreads on impact covering an area of the image transfer surface dependent on the mass of the droplet. In some embodiments, the image transfer surface of the release layer is treatable to (at least temporarily) counteract the tendency of the spread-out ink droplets to subsequently contract and form a globule on the image transfer surface but without causing the droplet to spread by wetting the image transfer surface of the intermediate transfer member, and at the same time, the image transfer surface of the release layer is configured to transfer the residue film (formed by evaporation of the ink carrier) to a suitable substrate upon contact therewith. In some embodiments, the image transfer surface of the release layer is treatable to (at least temporarily) counteract the tendency of the applied aqueous ink droplets to contract by application of a chemical agent to the image transfer surface, for example polyethyleneimine (PEI) or epoxylated PEI. Further details on chemical agents suitable to treat release layers according to the teachings herein are disclosed in WO2013/132339*. The "*" added to the latter publication number, and to other publication numbers mentioned below, is to indicate that the publication dates occurred later that the date of filing of the present application but the priority dates precede the filing date of the present application.

In some embodiments, wherein release layers of the art, which may be compatible either with oil-based or water-based inks, are attached to an embodiment of a body according to the teachings herein or using an adhesive layers according to the teachings herein to form intermediate transfer members, the image transfer surface of such release layers can be treated to counteract the tendency of the applied ink droplets to contract by application of a layer of electrical charge or by a corona discharge to the image transfer surface. In some embodiments, the image transfer

surface of the release layer is treatable to counteract the tendency of the applied ink droplets to contract by heating of the image transfer surface.

Preferably, the material from which the release layer is made (e.g., an elastomer according to the teachings herein) renders the release layer non-absorbent to the ink compositions used. In some embodiments, the material from which the release layer is made is selected so that the intermediate transfer member does not substantially swell by the carrier liquid of the ink or of any other fluid that may be applied to the release layer during the intended use. In a preferred embodiment, an intermediate transfer member according to the teachings herein is to be used with an aqueous ink, and it is preferred that the release layer be substantially non-absorbent and does not substantially swell in contact with an aqueous ink composition. A release layer is said to be substantially non-absorbent or non-swelling if it gains 1.5% or less of its weight in a swelling experiment exposing the release layer to the ink carrier for 20 hours at 100°C.

In some embodiments, a material from which a release layer is made has a low thermal conductivity, for example in the range of between about 0.001 and about 10 W/(m K), or between about 0.01 and about 5 W/(m K) or between about 0.1 and about 2.5 W/(m K). Such low thermal conductivity allows the release layer to cool upon application of ink droplets, and to gradually heat, allowing evaporation of the (aqueous) ink carrier from the applied ink drop without substantial boiling or bubbling.

In some embodiments, the image transfer surface of a release layer is highly smooth, for example has a gloss of at least 85%, thereby improving image quality, *inter alia,* by reducing the variation in distance between the print head that applies the ink and the image transfer surface, allowing to decrease it so as to reduce the negative effect of droplets deflecting across larger gaps on image quality.

In some embodiments, the image transfer surface of the release layer has a high gloss value. Gloss of a release layer may be tested by a BYK Gardner Micro-gloss® 4554 meter at an incident angle of 75°. In some embodiments, the gloss of the release layer is greater than 85%.

In some embodiments, a release layer has an average roughness Ra of less than 1 micrometer, according to American Standard ASME B46.1-2002, Surface Texture, and International Standards ISO 4287 and ISO 4288. In some embodiments, Ra roughness is less than 0.5 μm, or less than 0.2 μm, or less than 0.1 μm. In some embodiments, a release layer has a mean roughness depth Ra of less than 3 micrometer, or of less than 2 μm, or of less than 1 μm.

A release layer is of any suitable thickness. In some embodiments, a release layer has a thickness of no greater than about 200 micrometer, and in some embodiments no greater than about 100 μm. In some embodiments, the release layer has a thickness of between about 0.1 μm and about 100 μm and between about 1 and about 50 μm. In some embodiments, not less than about 1 μm and not more than about 30 μm. In some embodiments, between about 1 μm and about 30 μm, between about 1 μm and about 20 μm, between about 5 μm and about 20 μm, and even between about 5 μm and about 15 μm.

When attached to an intermediate transfer member body with the help of an adhesive, any suitable adhesive thickness is used. In some embodiments, an adhesive layer is between about 0.1 micrometer to about 10 μm thick, in some embodiments between about 1 μm to about 5 μm thick, more typically between about 1 μm and about 3 μm thick.

*Conformational layer*

In some embodiments, a body of an intermediate transfer member according to the teachings herein comprises a conformational layer.

A conformational layer is configured to enable an image transfer surface of a release layer of an intermediate transfer member to conform and adapt to the topography of a substrate surface and increases the area of the intermediate transfer member that can be in close proximity to a substrate during impression (the transfer of the residue film to the substrate), thereby improving ink film residue transfer.

A conformational layer is made of any suitable (typically compliant) material or combination of materials, having mechanical properties suitable for the operability of the intermediate transfer member. In some embodiments, a conformational layer is of a material selected from the group consisting of silicone rubber, acrylic rubber (ACM), cured acrylic rubber, hydrogenated nitrile butadiene rubber (HNBR), or combinations thereof.

In some embodiments, a conformational layer has a hardness in the range of from 20 to 65 Shore A.

In some embodiments, a conformational layer comprises a soft layer, in some embodiments having a hardness in the range of from 20 to 40 Shore A. In some embodiments, the thickness of a soft conformational layer ranges from about 50 μm to about 1000 μm. In some preferred embodiments, the thickness of a soft conformational layer is about 150 μm.

In some embodiments, a conformational layer comprises a hard layer, in some embodiments having a hardness in the range of from 40 to 65 Shore A. In some embodiments, the thickness of a hard conformational layer ranges from about 5 μm to about 100 μm, from about 10 μm to about 50 μm, and even from about 5 μm to about 30 μm,

In some embodiments, a conformational layer comprises more than one sublayer, each sub-layer optionally having a different hardness. In some such embodiments, a conformational layer comprises both a soft conformational

sublayer (substantially as described above for a soft conformational layer) and a hard conformational sublayer (substantially as described above for a hard conformational layer).

In some embodiments, a conformational layer has a glossy surface finish.

In some embodiments, a conformational layer also functions as an electrically-conductive layer as described below. In some such embodiments, the conformational layer has a resistivity that ranges between about 5 $\Omega$/cm and about 1000 $\Omega$/cm, and in some embodiments a resistivity of about 500 $\Omega$/cm.

*Compressible layer*

In some embodiments, a body of an intermediate transfer member according to the teachings herein comprises a compressible layer. In alternative embodiments, the compressible layer can be the outer compressible surface of a pressure cylinder at an impression station of a printing system.

A compressible layer provides for at least part of the desired compressibility of an intermediate transfer member which improves transfer of an ink residue film from the image transfer surface of the release layer to the substrate. A compressible layer may improve the contact between the release layer and the substrate by adapting the image transfer surface of the release layer of the intermediate transfer member to inherent geometrical variations of the substrate.

In some embodiment, the compressibility of a compressible layer is at least 10% under a load of P = 2 bars.

A compressible layer is made of any suitable compressible material or compressible combination of materials, having mechanical and optionally thermal properties suitable for the operability of the intermediate transfer member. In some embodiments, a compressible layer comprises (or even consists of) a material selected from the group consisting of room temperature vulcanization RTV and RTV2, liquid silicone LSR, Vinyl Methyl Silicone (VMQ), Phenyl Silicone Rubber (PMQ, PVMQ), fluorosilicone rubber (FMQ, FMVQ), alkyl acrylate copolymer (ACM), ethylene propylene diene monomer (EPDM) rubber, nitrile rubber, void-comprising hydrogenated nitrile butadiene rubber, S-cured and/or peroxide cured rubbers, open-cell rubbers, saturated open-cell rubbers, closed-cell rubbers and combinations thereof. In some embodiments, the rubber is a nitrile rubber having 40-60% (by volume) small voids. In some embodiment, the nitrile rubber is a void-comprising hydrogenated nitrile butadiene rubber (HNBR).

In some embodiments, a compressible layer comprises one or more sponge-like layers. In some embodiments, wherein a compressible layer comprises a single sponge-like layer, the thickness of the compressible layer ranges from about 50 $\mu$m to about 1250 $\mu$m, from about 100 $\mu$m to about 1000 $\mu$m, from about 200 $\mu$m to about 600 $\mu$m, and even from about 300 $\mu$m to about 400 $\mu$m. In some embodiments, a compressible layer has a thickness of not more than about 500 $\mu$m. In some embodiments, a compressible layer is a single sponge layer having a thickness of about 350 $\mu$m.

*Thermally-insulating layer*

In some embodiments, an intermediate transfer member is heated during use, *inter alia,* allowing quick evaporation of the carrier of an ink composition.

In some embodiments, an intermediate transfer member is heated from the outside, that is to say, there is a heat source facing the image transfer surface of the release layer.

In some such embodiments, it is advantageous that the body of the intermediate transfer member be configured for preventing the transfer of heat through the release layer to dissipate in the body. Thus, in some such embodiments, a body of an intermediate transfer member according to the teachings herein comprises a thermally-insulating layer. In some such embodiments, the thermally-insulating layer has a low thermal conductivity, functioning as a thermal insulator to prevent or reduce undesired heat dissipation through the bulk of the body.

A thermally-insulating layer is made of any suitable thermally-insulating material or thermally-insulating combination of materials.

In some embodiments, a thermally-insulating layer has a thickness of at least 100 micrometers.

*Thermally-conductive layer*

As noted above, in some embodiments, an intermediate transfer member is heated during use, *inter alia,* allowing quick evaporation of the carrier of an ink composition.

In some embodiments, an intermediate transfer member is heated from the inside or beneath, that is to say, there is a heat source facing the body of the intermediate transfer member, and the heat is transferred through the body, through the release layer to the image transfer surface.

In some such embodiments, it is advantageous that the body of the intermediate transfer member be configured for sufficient transfer of heat through the body to the release layer. In some embodiments, the thermally conductive layer serves as thermal reservoir allowing maintaining the desired operating temperature for the duration of a printing cycle even if heating is not constantly applied along the path of the belt.

Accordingly, in some embodiments, the body of an intermediate transfer member according to the teachings herein comprises a thermally-conductive layer. Typically, such a thermally-conductive layer is configured to facilitate the transfer of heat from the inside of the body towards the image transfer surface of the release layer.

A thermally-conductive layer is made of any suitable thermally-conductive material or thermally-conductive combination of materials. In some embodiments, a thermally-conductive layer has no or only a low amount of air voids. In some embodiments, a thermally-conductive layer comprises (and in some embodiments substantially consists of) low-void room temperature vulcanization RTV and RTV2, liquid silicone LSR, Vinyl Methyl Silicone (VMQ), Phenyl Silicone Rubber (PMQ, PVMQ), fluorosilicone rubber (FMQ, FMVQ) or hydrogenated nitrile butadiene rubber. In some embodiments, a thermally-conductive layer includes thermally-conductive fillers such as alumina, carbon black, and aluminium nitride, typically in particulate form in a continuous matrix, especially a polymer matrix.

In some embodiments, a thermally-conductive layer has a thickness of not less than 100 micrometers.

In some embodiments, a thermally-conductive layer comprises or essentially consists of low-void hydrogenated nitrile butadiene rubber.

*Electrically-conductive layer*

In some embodiments, the body of an intermediate transfer member according to the teachings herein comprises an electrically-conductive layer.

An electrically-conductive layer allows application of a voltage to an intermediate transfer member, allowing electrowetting of ink droplets applied to an image transfer surface of the release layer, and in some embodiments, also allowing other physical treatments.

An electrically-conductive layer is made of any suitable electrically-conductive material or electrically-conductive combination of materials. In some embodiments, an electrically-conductive layer is or comprises a conductive polymer. In some embodiments, an electrically-conductive layer comprises materials such as carbon black, metal salts or conductive plasticizers, typically in a continuous matrix, especially a polymer matrix, such as silicone rubber. In some embodiments, an electrically-conductive layer comprises or even consists of nitrocellulose loaded with carbon black.

In some embodiments, the thickness of an electrically-conductive layer ranges between about 10 $\mu$m and about 300 $\mu$m. In some such embodiments, the thickness of an electrically-conductive layer is about 100 $\mu$m.

In some embodiments, the resistivity of an electrically-conductive layer ranges between about 5 $\Omega$/cm and about 1000 $\Omega$/cm. In some embodiments, the resistivity of an electrically conductive layer is about 500 $\Omega$/cm.

*Low-friction layer*

In some embodiments, the body of an intermediate transfer member according to the teachings herein comprises a low-friction layer, typically as an innermost layer (furthest from the release layer) of a blanket-type intermediate transfer member. In some embodiments, the low-friction layer has a coefficient of friction of less than 3.

Such intermediate transfer members having a low-friction layer as an innermost layer are exceptionally useful for use with printing systems where the intermediate transfer member is mounted on a supporting structure that includes both rolling supports (rollers) and static supports (e.g., plates, pins) across which the intermediate transfer member slides. A low-friction layer reduces drag and unwanted frictional heating during printing, and helps reduce wear on the printing device support structure and on the intermediate transfer member. Accordingly, in typical embodiments a low-friction layer also comprises an abrasion-resistant surface for contacting a printing system support structure.

In some embodiments, a low-friction layer is configured to allow heat conduction through the body of the intermediate transfer member, especially for use with printing systems where the intermediate transfer member is heated from the inside. In some such embodiments, the low-friction layer is configured to be sufficiently heat-resistant, allowing intermediate transfer member operating temperatures of up to about 250°C.

A low-friction layer is made of any suitable material or combination of materials, in some embodiments polymers, such as thermoplastic, thermoset and elastomer polymers, including rubbers. In some embodiments, a low-friction layer comprises (or even substantially consists of) a material selected from the group consisting of silicone, polytetrafluoroethylene (e.g., Teflon®), fluorinated rubber (FKM), polyethylene terephthalate (PET), hydrogenated nitrile butadiene rubber (HNBR) and combinations thereof. In some embodiments, a suitable polymer is supplemented with additives providing a low coefficient of friction.

In some embodiments wherein the low-friction layer comprises FKM and/or HNBR, a thin layer (e.g., about 4 microns) of a hard rubber (i.e., hardness 70-80 Shore A), is applied to the image transfer surface of the low-friction layer to provide the required texture. In some embodiments, the low-friction layer has a roughness of between about 4 and about 500 microns. In some embodiments, a suitable roughness is achieved, for example, by buffing or by use of a textured mold before curing of the material making up the low-friction layer, or by inclusion in the material making up the low-friction layer with a filler such as silica or calcium carbonate, having sufficiently large particle size such that

particles of the filler are apparent through the surface of the low-friction layer. In some embodiments, the thickness of a low-friction layer is in the range of from about 1 μm to about 250 micrometer. In some embodiment, the thickness of a low-friction layer is not more than about 100 μm, not more than about 50 μm and even not more than about 10 μm. In some typical embodiments, the thickness is between about 3 and about 10 μm, e.g., about 4 to about 5 μm.

*High-friction layer*

In some embodiments, the body of an intermediate transfer member according to the teachings herein comprises a high-friction layer, typically as an innermost layer (furthest from the release layer) of a blanket-type intermediate transfer member. In some embodiments, the high-friction layer has a coefficient of friction of greater than 3.

Such intermediate transfer members are exceptionally useful for use with printing systems where the intermediate transfer member is mounted substantially exclusively on rolling supports (rollers) and does not substantially slide past any supports (e.g., static pins). Such a high-friction layer facilitates non-slip contact of the intermediate transfer member over the support structure (rollers) of the printing system, ensuring that the rollers have sufficient friction to accurately move the intermediate transfer member.

In some embodiments, a high-friction layer is configured to allow heat conduction through the body of the intermediate transfer member, especially for use with printing systems where the intermediate transfer member is heated from the inside. In some such embodiments, the high-friction layer is configured to be sufficiently heat-resistant, allowing intermediate transfer member operating temperatures of up to about 250°C.

A high-friction layer is made of any suitable material or combination of materials, in some embodiments polymers, such as silicone rubbers. Typically, such materials, such as silicone rubbers are relatively soft, allowing high-friction with sufficient mechanical strength and abrasion resistance.

In some embodiments, the thickness of a high-friction layer is in the range of from about 25 μm to about 100 μm and even from about 25 μm to about 50 μm.

*Reinforcement layer*

In some embodiments, the body of an intermediate transfer member according to the teachings herein comprises a reinforcement layer, configured to provide the intermediate transfer member with mechanical strength. Any suitable reinforcement layer may be used in implementing the teachings herein. That said, in some embodiments it is preferred to use a reinforcement layer according to the teachings herein.

*Properties of reinforcement layer*

In some embodiments, the tensile and tear properties of a reinforcement layer are as follows: tensile strength > 10 kg/cm in the longitudinal (printing) direction and tear strength > 30 kg/cm in the longitudinal direction.

*Low crimp fabric*

As discussed herein, in some embodiments, a blanket-type intermediate transfer member as described herein includes a fabric layer, typically as part of a reinforcement layer. A fabric allows stretching according to two modes.

The first mode is crimp stretching. As used herein, crimp refers to the extent (in percent of initial length) that a woven fabric used in reinforcing a blanket-type intermediate transfer member can be elongated in a direction as a result of the properties of the weave properties applying substantial stretching forces to the constituent fibers. When a intermediate transfer member is stretched in a direction (e.g., longitudinally or laterally), initially resistance to stretching is only from the other components, and the fabric component only crimps.

The second mode is elastic stretching of the constituent fibers of the fabric

In some embodiments, a fabric used as a reinforcement component of an intermediate transfer member has low crimp of from about 0.1% to about 1.5% in the longitudinal (printing) direction as measured with a tensile meter recording elongation over time under a constant load. Preferably, the low crimp properties of a reinforcement layer are maintained at the printing operating conditions, especially temperature and tension.

*Low creep*

Creep is a material property (e.g., of fabrics fibers and elastomers) and refers to permanent elongation that occurs when a material is stretched within the elastic limit for a sustained period of time. For most, if not all, materials, creep over a given period of time increases with higher applied tension and temperature.

As used herein, creep is a measure of the permanent elongation of an intermediate transfer member compared

to its starting dimension over a certain time period. Creep typically depends upon operating conditions (e.g., the tension to which the intermediate transfer member is subjected during operation, the operating temperatures, etc.).

In some embodiments, an intermediate transfer member is configured to have low creep under operating tension at the operating temperatures.

Preferably, a reinforcement layer (and consequently the intermediate transfer member) is such that the creep of the intermediate transfer member is less than about 1.5%, less than about 1% less than about 0.5% and more preferably less than about 0.1% in the longitudinal (printing) direction during a period of at least about 1 day, and more preferably at least about 3 days of continuous use at a typical operating temperature of 150-200°C. In a preferred embodiment, there is substantially no creep (~0 %) of the intermediate transfer member in the longitudinal direction during the lifetime (typically not less than about 1 day, not less than about 3 days) of the intermediate transfer member at an operating temperature of 150-200°C.

*Fibers*

In some embodiments, a reinforcement layer comprises a plurality of fibers. In some embodiments, at least some of the fibers are predominantly unidirectional fibers. In some embodiments, the unidirectional fibers are oriented substantially parallel to the longitudinal (printing) direction. In some embodiments, the unidirectional fibers are oriented substantially parallel to the lateral direction, that is to say, substantially perpendicular to the longitudinal direction.

*Fabric layers*

In some embodiments, the reinforcement layer comprises at least one layer of fabric fashioned from a plurality of fibers, that is to say at least some of the plurality of fibers constitute a layer of fabric. In some embodiments, at least one layer of fabric comprises one or more fabric ply.

In some embodiments, where a reinforcement layer is of a single fabric layer, the thickness of the reinforcement layer ranges from about 100 μm to about 600 μm, from about 100 μm to about 200 μm, from about 400 μm to about 600 μm, from about 200 μm to about 500 μm, and even from about 450 μm to about 550 μm. In some embodiments, a reinforcement layer with a single fabric layer has a thickness of about 350 μm.

In some embodiments, where a reinforcement layer comprises two distinct fabric layers, the thickness of each fabric layers ranges from about 100 μm to about 600 μm, from about 100 μm to about 200 μm, from about 400 μm to about 600 μm, from about 200 μm to about 500 μm, from about 450 μm to about 550 μm, and even from about 100 μm to about 400 μm.

In some embodiments, a reinforcement layer comprises two fabric layers each having a thickness of between about 50 micrometer and about 350 μm. In some embodiments, a reinforcement layer comprises two fabric layers each having a thickness of about 300 μm. In some embodiments, a reinforcement layer comprises two fabric layers, one having a thickness of about 200 μm and the other having a thickness of about 350 μm.

*Fiber types*

Each layer of fabric is fashioned from any suitable fiber, twisted or non-twisted. The fibers may be in any suitable form including monofilaments, grouped filaments and yarns. In embodiments including a yarn, the yarn may be of a single type of fiber, or a blend of two or more different types of fibers. In some embodiments, at least some of the fibers (and in some embodiments, substantially all of the fibers) making up a given layer of fabric are selected from the group consisting of meta-aramide polymers (e.g., Nomex® fibers), para-aramide polymers (e.g., Kevlar® fibers), ceramic-based fibers, nylon-based fibers, twisted nylon based fibers, cotton-based fibers, twisted cotton-based fibers, polyester-based fibers, twisted polyester-based fibers, glass-based fibers, carbon-fiber (graphite) based fibers, and metal-based fibers, or a combination thereof. In some embodiments, all of the layers of fabric are of the same fiber or combination of fibers. In some embodiments, at least one layer of fabric is of substantially different fiber composition.

*Types of fabric*

In some embodiments, at least one fabric layer of the reinforcement layer is a non-woven fabric.

In some embodiments, at least one fabric layer of the reinforcement layer is a woven fabric. In woven fabrics, there are two distinct sets of fibers interlaced at right angles. The longitudinally-oriented fibers are called the warp while the laterally-oriented fibers are called the weft (the filling). Any suitable weave may be used in implementing such embodiments, for example, in some embodiments, a woven fabric layer has a weave selected from the group consisting of plain weave, twill weave, basket weave, satin weave, leno weave and mock leno weave.

In one embodiment, the longitudinally oriented fibers are selected from the group of high performance fibers

comprising aramide polymers, carbon-based fibers, ceramic-based fibers, glass-based fibers, and combinations thereof.

In some embodiments, the fibers of a reinforcement layer are fully or partially embedded in (or impregnated with) a solid (non fibrous) elastomer matrix as known in the art of fabrics. A fully-impregnated fabric is a fabric in which the interstices between the filaments/yarns are completely filled with the matrix. In some embodiments, such impregnation improves thermal conductivity and/or enables a better distribution of the mechanical stress between the reinforcement layer and adjacent layers and/or improves mechanical properties of the reinforcement layer, such as reducing crimp. Preferably, the elastomer matrix is compatible with (can be bonded to) adjacent layers of the intermediate transfer member. In some embodiments, the elastomer matrix is a thermally-conductive elastomer, for example an elastomer prepared by extrusion such that polymeric chains of the elastomer are oriented in the direction of extrusion. Any suitable elastomer may be used. In some embodiments, a suitable elastomer is selected from the group consisting of silicone rubber (e.g., VMQ, PMQ, FMQ, PVMQ), neoprene rubber, hydrogenated nitrile butadiene rubber (HNBR), nitrile butadiene rubber (NBR), alkyl acrylate copolymer (ACM), or ethylene propylene diene monomer (EPDM), or combinations thereof.

*Anisotropic*

As noted above, any suitable reinforcement layer may be used in implementing the teachings herein, and preferably, a reinforcement layer according to the teachings herein.

That said, in some embodiments, especially when the intermediate transfer member is a blanket, it is preferable to use an anisotropic reinforcement layer according to the teachings herein as discussed hereinbelow. As used herein, the term "anisotropic" means having different physical or mechanical properties when measured along different axes.

As used herein, the term "printing direction" means a direction from the image forming station where printing heads apply ink to the release layer towards the location of the impression station, where the ink image is transferred to the printing substrate.

In the art, blanket-type intermediate transfer members are preferably substantially elastic in the longitudinal direction. When such an intermediate transfer member is mounted on a printing system, elements of the supporting structure (e.g., rollers and pins) are moved parallel to the printing direction as known in the art of belt-driven wheels so that the intermediate transfer member is stretched and held taut. Since the intermediate transfer member is held taut, the image transfer surface is flat and smooth, providing superior transfer of ink residue to the desired substrate. Further, the longitudinal elasticity and tension allow such an intermediate transfer to conform to, and thereby compensate for, minor imperfections and missalignments of the printing system supporting structure and substrate. In order to avoid lateral narrowing as a result of longitudinal tension, known blanket-type intermediate transfer members are preferably inelastic and stretch-resistant in the lateral direction.

In the art, it is known to provide a blanket-type intermediate transfer member that includes a reinforcement layer having a woven fabric element. Woven fabrics inherently possess give (in all directions) so a suitable woven fabric element of an intermediate-transfer member does not compromise the required longitudinal elasticity. At the same time, a fabric element renders a reinforcement layer tear resistant without compromising flexibility.

A challenge to known reinforcement layer design relates to exceptionally-long (longitudinal direction) intermediate transfer members. For example, the Applicant has contemplated a printing system requiring belts at least about 5 meters, about 6 meters, about 7 meters and even at least about 9 meters long. In one case, the Applicant has considered a printing system requiring a 10 meter long belt. Due to the great length, components of the printing system for stretching and maintaining the required intermediate transfer member tension must have an unusually large range of motion. Further, it has been found that due to the great length, typical fabrics used in a reinforcement layer provide insufficient tear-resistance in the longitudinal direction.

An additional challenge, when taken alone but also compounded by exceptionally-long intermediate transfer members, relates to high-temperature operation. Specifically, the Applicant has contemplated a printing system where a belt-type intermediate transfer member is routinely maintained at temperatures greater than 70°C, greater than 90°C, greater than 110°C, greater than 130°C and even greater than 140°C, and locally exposed to temperatures greater than 180°C and even greater than 190°C. Such temperatures have been found useful when printing with aqueous-based inks, to allow sufficient evaporation of the aqueous carrier before transfer of an ink residue to a substrate. As is known in the field of material science, the yield strength of a material is typically reduced with increasing temperature. A material that is maintained at relatively high temperatures (even well below the softening temperature) under tension (even when well within the elastic limit) eventually undergoes inelastic deformation and loss of elasticity, a creep process as discussed above. As a result, it has been found that known blanket-type intermediate transfer members with known reinforcement layers including a fabric, quickly lose longitudinal elasticity and are inelastically stretched in the longitudinal direction, losing tension, becoming slack, and providing inferior printing results.

Applicant has found that in some instances one or both challenges can be at least partially ameliorated by rendering a flexible intermediate transfer member substantially inelastic in the longitudinal direction. Specifically, such an intermediate transfer member does not substantially stretch in the longitudinal direction when mounted in and during

use in a suitable printing system. At the same time, to ensure that the image transfer surface is flat and smooth during use, as well as allow conforming to and compensation for minor imperfections and misalignments of the printing system supporting structure and substrate, such an intermediate transfer member is substantially elastic in the lateral direction. Preferably, such an intermediate transfer member is stretched taut in the lateral direction during use, e.g., is used with a printing system configured to stretch the intermediate transfer member in the lateral direction (perpendicular to the printing direction, also known as transverse direction). Operating tensions applied are preferably sufficient to hold the intermediate transfer member sufficiently taut to provide the desired flatness. Operating tensions applied can flatten the blanket so as to facilitate the transfer of at least 95% of the ink residue film from the image transfer surface of the release layer to the substrate. Preferably, the intermediate transfer member may sustain operating tensions enabling the transfer of at least 99%, and preferably 100%, of an ink residue film.

Thus, in some embodiments of the intermediate transfer member described above, the reinforcement layer is anisotropic, having a different elasticity in the longitudinal and lateral directions, that in some embodiments solves the problem of insufficient elasticity in the lateral direction, thereby improving the flatness of the blanket under applied tension during printing. In some embodiments, the anisotropic reinforcement layer has a greater elasticity in the lateral direction than in the longitudinal direction.

Thus, according to an aspect of some embodiments of the teachings herein, there is provided an intermediate transfer member (preferably, a flexible belt) for use with a printing system, comprising:

a longitudinal direction and a lateral direction;
a release layer (in some embodiments, of an elastomer according to the teachings herein) having an image transfer surface; and
the release layer attached to a body supporting the release layer, the body configured so that the intermediate transfer member has a substantially greater elasticity in the lateral direction than in the longitudinal direction.

Typically, the body is a laminated structure as described above, and includes at least one distinct anisotropic reinforcement layer, the anisotropic reinforcement layer or layers being responsible for the desired elasticity properties. That said, in some embodiments, the body does not comprise a reinforcement layer, or does not comprise an anisotropic reinforcement layer, and some other feature is responsible for the desired anisotropic elasticity properties.

As noted above, when the intermediate transfer member is mounted for use in a suitable printing system, the longitudinal direction is the direction parallel to the motion vector of the intermediate transfer member between the image forming station and the image transfer or impression station of the printing system, and the lateral direction is perpendicular to the longitudinal direction.

*Length to width ratio*

The ratio of the length (longitudinal dimension) to width (lateral dimension) of the intermediate transfer member is any suitable ratio, and typically depends on the construction of the printing system with which the intermediate transfer member is intended for use. That said, the length of the intermediate transfer member is typically greater than the width. Thus, in some embodiments, the ratio of the longitudinal dimension to the lateral dimension of the intermediate transfer member is at least about 1.1:1, at least about 2:1, at least about 3:1, at least about 4:1, at least about 5:1, at least about 6:1, at least about 7:1, at least about 8:1, at least about 9:1, and even at least about 10:1.

*Creep*

The body is configured to allow the intermediate transfer member to be used under tension in both the longitudinal and the lateral direction.

In some embodiments, the intermediate transfer member is configured to be used under tension in the lateral direction of between about 2 and about 20 N per cm of length.

For example, in such embodiments, a total lateral tension of between about 400 N and 4000 N is applied to a 200-cm long intermediate transfer member and a total lateral tension of between about 800 N and 8000 N is applied to a 400-cm long intermediate transfer member.

By "configured to be used" is meant that the intermediate transfer member, is configured to be regularly subjected to the given lateral tension at a temperature of at least about 70°C, or at least about 90°C, at least about 110°C, or at least about 130°C, or at least about 150°C, or at least about 200°C, 140°C (more typically between 150°C-200°C) for a substantial period of time, e.g., at least about 1 day (in some embodiments at least about 3 days, and even at least about 1 week) without substantial permanent lateral deformation (lateral creep), that is to say less than about 0.5% and more preferably less than about 0.1%, and even more preferably ~0 % creep. In some embodiments, the entire length of the intermediate transfer member is continuously maintained at the given lateral tension during use. That said, in

some embodiments, during use only a portion of the intermediate transfer member is subjected to the given lateral tension at any one instant.

In some embodiments, the intermediate transfer member is configured to be used under longitudinal tension of between about 3 and about 200 N per cm of width. For example, in such embodiments, a total longitudinal tension of between about 30 N and 2000 N is applied to a 10-cm wide intermediate transfer member and a total longitudinal tension of between about 60 N and 4000 N is applied to a 20-cm long intermediate transfer member. By "configured to be used" is meant that the intermediate transfer member is configured to be regularly subjected to the given tension at a temperature of at least 70°C, or at least about 90°C, at least about 110°C, or at least about 130°C, or at least about 150°C, or at least about 200°C, for a substantial period of time, e.g., at least about 1 day (in some embodiments at least about 3 days, and even at least about 1 week) without substantial permanent longitudinal deformation (longitudinal creep), that is to say less than about 0.5% and more preferably less than about 0.1%, and even more preferably ~0 %.

*Elasticity*

In some embodiments, the intermediate transfer member is substantially inelastic in the longitudinal direction, that is to say, configured so that during normal operation the length (longitudinal direction dimension) of the intermediate transfer member does not substantially change. Specifically, in some embodiments, the intermediate transfer member is configured so that during normal operation (including being maintained at an elevated temperature, e.g., of about 150°C) the length of the intermediate transfer member does not increase by more than about 1.5%, not more than about 1%, more than about 0.5% and even does not increase by more than about 0.2%.

For example, in some embodiments, an intermediate transfer member, when maintained at a temperature of 150°C, is configured to stretch in the longitudinal direction by not more than about 1.5% under 100 Newton per cm width longitudinally-applied tension, by not more than about 1% under 100 Newton per cm width longitudinally-applied tension, by not more than about 0.5% under 100 Newton per cm width longitudinally-applied tension, and even by not more than about 0.2% under 100 Newton per cm width longitudinally-applied tension.

Such inelasticity can be tested by taking a test strip from the intermediate transfer member, 1 cm wide in the lateral direction and 1 meter long in the longitudinal direction. While being maintained at 150°C, the test strip is suspended from one (upper) end, a 0.1 kg weight attached to the other (lower end) and the length of the test strip measured so that the ends of the test strip correspond to the edges of the longitudinal direction. Subsequently, an additional 1 kg weight is attached to the lower end and the resulting increase in length is determined. For example, a change of 5 mm length of such a meter-long strip after addition of the 1 kg weight indicates a 0.5% stretch in the longitudinal direction.

In some embodiments, the intermediate transfer member is substantially elastic in the lateral direction, that is to say, configured so that during normal operation the width (lateral direction dimension) of the intermediate transfer member can substantially elastically increase. Specifically, in some embodiments, the intermediate transfer member is configured so that during normal operation (including being maintained at an elevated temperature, e.g., of about 150°C) the width of the intermediate transfer member increases by not less than about 5%, not less than about 10% and even not less than about 20%.

For example, in some embodiments, an intermediate transfer member, when maintained at a temperature of 150°C, is configured to elastically stretch in the lateral direction by not less than about 10% under 2 Newton per cm length applied tension, by not less than about 15% under 2 Newton per cm length applied tension, and even by not less than about 20% under 2 Newton per cm length applied tension.

Such elasticity can be tested by taking a test strip from the intermediate transfer member, 10 cm wide in the longitudinal direction and 20 cm long in the lateral direction. While being maintained at 150°C, the test strip is suspended from one (upper) end, a 0.05 kg weight attached to the other (lower end) so that the ends of the test strip correspond to the edges of the lateral direction and the length of the test strip measured. Subsequently, an additional 0.2 kg weight is attached to the lower end and the resulting increase in length is determined. For example, a change of 20 mm length of such a 20 cm-long strip after addition of the 0.2 kg weight indicates a 10% stretch in the lateral direction.

*Tensile and tear*

In some embodiments, the tensile and tear properties of an anisotropic intermediate transfer member according to the teachings herein: tensile strength > 0.2 N per cm width in the longitudinal (printing) direction and tear strength > 10 N per cm width in the longitudinal direction; tensile strength > 0.1 N per cm length in the lateral direction; and tear strength > 0.4 N per cm length in the lateral direction.

*Primary fibers*

The required anisotropic elasticity properties of the intermediate transfer member can be implemented in any

suitable way. That said, in some embodiments, the body includes a plurality of primary fibers oriented substantially parallel to the longitudinal direction. Preferably, the primary fibers are sufficiently inelastic so as to provide the intermediate transfer blanket with the desired longitudinal inelasticity. In some such embodiments, the primary fibers are substantially inelastic. In some such embodiments, the primary fibers are made of a material that is substantially inelastic, that is to say, does not substantially stretch at the applied tensions. In some such embodiments, the primary fibers are straight, e.g., devoid of features such as curls, twists or bends: such features typically provide an elasticity unsuitable for implementing the teachings herein. It is important to note that fibers making up a woven fabric are typically not straight, being bent by the force applied by the perpendicular fibers of the weave.

In some embodiments, the primary fibers are a component of and found in at least one distinct anisotropic reinforcement layer. That said, in some embodiments, the primary fibers are not a component of a reinforcement layer.

Primary fibers are of any suitable structure. In some embodiments, each primary fiber is a single monofilament. In some embodiments, each primary fiber is an aggregate of monofilaments or is a thread (a group of short filaments spun or twisted together to make single continuous fiber).

Primary fibers are of any suitable material. For example, in some embodiments, the primary fibers comprises a material selected from the group consisting of organic polymer fibers such as meta-aramid (e.g., Nomex®, Conex®, Kermel®), para-aramid (e.g., Kevlar®, Twaron®), polyamide (Nylon), nylon fibers (twisted or not twisted) and polyester fibers (twisted or not twisted); natural fibers such as cotton (twisted or not twisted); inorganic fibers such as glass fibers, carbon fiber (graphite) fibers, ceramic fibers and metal fibers (wires); and combinations thereof.

That said, a disadvantage of organic polymer and natural fibers is that such fibers are typically elastic, both as an inherent material property and as a result of an inherent curly structure (especially cotton), and may therefore be less suitable as primary fibers for some embodiments. In some embodiments, such fibers are pre-stressed (stretched) to an extent to be substantially inelastic. However, as noted above, pre-stressed fibers eventually lose the stress by creep, especially when maintained at elevated temperature under stress.

Similarly, a disadvantage of metal fibers for some embodiments is metal fatigue. Typically, during use an intermediate transfer member snakes and bends around a plurality of rollers, frequently changing direction, all the while maintained at an elevated temperature, conditions that may lead to failure of the metal fibers due to fatigue.

Accordingly, in some preferred embodiments, the primary fibers comprise a material selected from the group consisting of aramid polymers, glass fibers, carbon-fibers, ceramic-fibers and combinations thereof. In some such embodiments, the primary fibers consist essentially of a material selected from the group consisting of aramid polymers, glass fibers, carbon-fibers, ceramic fibers and combinations thereof. In some such embodiments, the primary fibers consist of a material selected from the group consisting of glass fibers, carbon-fiber fibers and combinations thereof. Suitable such fibers are commercially availble from many manufacturers.

*Supporting Component*

In some embodiments, the body of the intermediate transfer member further comprises at least one supporting component different from the primary fibers. Such a reinforcement component serves one or more functions such as facilitating keeping primary fibers properly oriented and positioned in the body, providing the intermediate transfer member strength in the lateral and/or longitudinal direction, providing the intermediate transfer a desired elasticity in the lateral direction and distributing stress and other forces more homogenously within the intermediate transfer member.

Matrix supporting component

In some embodiments, a supporting component of the at least one supporting components comprises a matrix of non-fibrous elastomer. Such a supporting component may be made of any suitable elastomer. In some embodiments, the elastomer comprises a material selected from the group consisting of silicone rubber, neoprene rubber, hydrogenated nitrile butadiene rubber (HNBR), nitrile butadiene rubber (NBR), alkyl acrylate copolymer (ACM), ethylene propylene diene monomer (EPDM) and combinations thereof. In some embodiments, the elastomer consists essentially of a material selected from the group consisting of silicone rubber, neoprene rubber, hydrogenated nitrile butadiene rubber (HNBR), nitrile butadiene rubber (NBR), alkyl acrylate copolymer (ACM), ethylene propylene diene monomer (EPDM) and combinations thereof. In some embodiments, the elastomer consists of a material selected from the group consisting of silicone rubber, neoprene rubber, hydrogenated nitrile butadiene rubber (HNBR), nitrile butadiene rubber (NBR), alkyl acrylate copolymer (ACM), ethylene propylene diene monomer (EPDM) and combinations thereof.

In some embodiments, the primary fibers are impregnated with such a non-fibrous elastomer. In some embodiments, the primary fibers are embedded in such a non-fibrous elastomer. In some such embodiments, such a supporting component constitutes a layer of the body that defines a (distinct) reinforcement layer. In some such embodiments, the elastomer serves, *inter alia,* in helping adhesion to other layers making up the body of intermediate transfer component. In some embodiments, silicone rubber is preferred as being heat resistant, tough (even when heated) and having relatively

high-friction with mechanical components, allowing such an elastomer to serve as a high-friction layer. In Figure 24, an intermediate transfer member **80** including such a supporting component is schematically depicted in lateral cross section, including a release layer **12** having an image transfer surface **14** directly secured to a body comprising a reinforcement layer **28** made up of primary fibers **82** embedded in a non-fibrous matrix **84** of rubber (e.g., silicone rubber).

Solid polymer sheet supporting component

In some embodiments, a supporting component comprises a distinct sheet of non-fibrous elastomer, e.g, a sheet of elastomer. In some embodiments, primary fibers are in direct physical contact with such a supporting component. In some such embodiments, primary fibers are associated with such a sheet of elastomer by binding (e.g., with the use of adhesive), stitching or stapling. In Figure 25, an intermediate transfer member **86** including such a supporting component is schematically depicted in lateral cross section, including a release layer **12** having an image transfer surface **14** directly secured to a body comprising a reinforcement layer **28** made up of primary fibers **82** embedded in a non-fibrous matrix **84** of silicone rubber, and secured to an elastic sheet of silicone rubber **88.**

Fiber supporting component

In some embodiments, a supporting component of the at least one supporting components comprises secondary fibers, distinct from the primary fibers. In some embodiments, the secondary fibers are oriented substantially not-parallel to the primary fibers. In some such embodiments, the secondary fibers are oriented to diverge by at least about 30° from parallel, at least about 45°, at least about 60° and even at least about 75° to the primary fibers. In some embodiments, the secondary fibers are oriented substantially parallel to the lateral direction, thereby substantially perpendicular to the longitudinal direction and the primary fibers.

In some embodiments, the secondary fibers are substantially elastic.

Any suitable fibers of any suitable material may be used as secondary fibers to implement the teachings herein. In some embodiments, the secondary fibers are selected from the group of fibers consisting of single monofilaments, aggregated monofilaments and threads. In some embodiments, the secondary fibers comprise a material selected from the group consisting of: cotton (twisted or untwisted), polyester (twisted or untwisted), polyamide (twisted or untwisted), elastane (spandex, Lycra®) and combinations thereof. In some embodiments, the secondary fibers consist essentially of a material selected from the group consisting of: cotton (twisted or untwisted), polyester (twisted or untwisted), polyamide (twisted or untwisted), elastane (spandex, Lycra®) and combinations thereof. In some embodiments, the secondary fibers consist of a material selected from the group consisting of: cotton (twisted or untwisted), polyester (twisted or untwisted), polyamide (twisted or untwisted), elastane (spandex, Lycra®) and combinations thereof.

When the primary and secondary fibers are distinct, not only by properties, but also by chemical composition, the reinforcement layer or fabric within which such fibers would be combined may be referred to as "hybrid". For example, in some embodiments the longitudinally oriented fibers are substantially inelastic while the laterally oriented fibers are elastic. In one embodiments, a 100-200 gram fabric 100 to 300 micrometer thick is used, having substantially inelastic fibers (e.g., glass fibers) in one direction (preferably warp) and elastic fibers (e.g., twisted cotton, polyester or nylon) in the other direction (preferably weft). Suitable fabrics may be designed (e.g., warp fibers, weft fibers, type of weave) as desired and ordered from many commercial sources that provide custom-woven fabrics.

In some embodiments, the body of the intermediate transfer member comprises a single fiber ply in which substantially all fibers (primary and, if present, secondary) are located. In some such embodiments, the thickness of the single ply is: from about 100 μm to about 600 μm, from about 300 μm to about 600 μm, from about 200 μm to about 500 μm, and in some embodiments, and even from about 300 μm to about 550 μm. In some embodiments, thickness of the single fiber ply is about 350 μm.

In some embodiments, the body of the intermediate transfer member comprises at least two distinct fiber plies in which all fibers (primary and, if present, secondary) are located, each of the distinct fiber plies including at least some of the fibers. In some such embodiments, the thickness of each one of the at least two fiber plies is: from about 100 μm to about 600 μm, from about 100 μm to about 200 μm, from about 400 μm to about 600 μm, from about 200 μm to about 500 μm, from about 450 μm to about 550 μm, and even from about 100 μm to about 400 μm. In some embodiments, the body comprises two distinct fiber plies, each fiber ply having a thickness of about 100 μm.

In some embodiments, the body comprises two distinct fiber plies, a thickness of a first of two fiber plies being about 100 μm and a thickness of a second of two fiber plies being about 200 μm.

In some embodiments, where the body of the intermediate transfer member comprises at least two distinct fiber plies, at least some fibers of a first fiber ply are in direct physical contact with at least some fibers of an adjacent second fiber ply.

In some embodiments, where the body of the intermediate transfer member comprises at least two distinct fiber plies, a first fiber ply and an adjacent second fiber ply are physically separated by an intervening sublayer of material

substantially devoid of fibers.

In some embodiments, at least one fiber ply is of a woven fabric. In some embodiments, at least one fiber ply is of a non-woven fabric.

*Primary and secondary fibers together in a single ply*

In some embodiments, a supporting component of the at least one supporting components comprises primary fibers and secondary fibers aggregated together to constitute a single ply of fabric. In some embodiments, the fabric is impregnated (partially or completely) with a non-fibrous elastomer as discussed above.

In some such embodiments, primary fibers and secondary fibers are aggregated together to constitute a single ply of non-woven fabric.

In some such embodiments, primary fibers and secondary fibers are aggregated together by weaving, thereby together constituting a woven fabric. In some such embodiments, the primary fibers constitute the warp and the secondary fibers constituted the weft of the woven fabric. Any suitable weave can be used. In some embodiments, the weave is selected from the group of weaves consisting of plain weave, twill weave, basket weave, satin weave, leno weave and mock leno weave.

*Primary and secondary fibers in separate plies*

It is important to note that typically fabrics, especially woven-fabrics, have an inherent structural elasticity (e.g., from the weave structure) independent of the elasticity of the constituent fibers. Accordingly in some instances, such structural elasticity renders a fabric including primary fibers unsuitable for use in implementing the teachings herein.

In some embodiments, at least some, or even substantially all, primary fibers are in a ply of primary fibers substantially devoid of secondary fibers. In some embodiments, substantially all primary fibers are in a ply of primary fibers substantially devoid of secondary fibers.

In some embodiments, at least some, or even substantially all, secondary fibers are in a ply of secondary fibers substantially devoid of primary fibers. In some embodiments, substantially all secondary fibers are in a ply of secondary fibers substantially devoid of primary fibers.

In some such embodiments, a supporting component of the at least one supporting components comprises secondary fibers aggregated to constitute a fabric.

In some embodiments, such a fabric is a non-woven fabric.

In some such embodiments, such a fabric is a woven fabric. Any suitable weave can be used. In some embodiments, the weave is selected from the group of weaves consisting of plain weave, twill weave, basket weave, satin weave, leno weave and mock leno weave.

In some such embodiments, the secondary fibers are substantially all arranged substantially in parallel one to the other.

In Figure 26, an intermediate transfer member **90** is schematically depicted having longitudinally-oriented primary fibers **82** of glass woven together with secondary fibers **92** of cotton, fully impregnated with and embedded in non-fibrous matrix **84** of silicone rubber, where primary fibers **82** are the warp and secondary fibers **92** are weft of the resulting woven fabric.

In Figure 27, an intermediate transfer member **94** is schematically depicted having a ply of longitudinally-oriented primary fibers **82** of glass in direct physical contact with two distinct plies of woven polyamide fabric **96a** and **96b,** all three plies fully impregnated with and embedded in non-fibrous matrix of silicone rubber. In other similar embodiments, the plies of woven polyamide fabric **96a** and **96b** are non-woven fabric. In other similar embodiments, the plies of **96a** and **96b** are simply laterally-oriented polyamide fibers that are not part of a fabric.

In Figure 28, an intermediate transfer member **98** is schematically depicted having a ply of longitudinally-oriented primary fibers **82** of glass and two distinct plies of woven polyamide fabric **96a** and **96b,** all three plies fully impregnated with and embedded in non-fibrous matrix of silicone rubber, the plies separated by 20 micrometer thick layers of silicone rubber **100a** and **100b.** In other similar embodiments, the plies of woven polyamide fabric **96a** and **96b** are non-woven fabric. In other similar embodiments, the plies of **96a** and **96b** are simply laterally-oriented polyamide fibers that are not part of a fabric.

*Additional features*

In some embodiments, the intermediate transfer member is a blanket which may be looped to form a continuous flexible belt and further comprises: lateral projections from sides thereof, the projections configured to engage guiding components of a suitable printing system, optionally including driving components such as toothed wheels.

In some embodiments, the blanket further comprises: fasteners at ends thereof, allowing the intermediate

transfer member to be formed into a loop by engaging fasteners at a first end with fasteners at a second end of the intermediate transfer member. The fasteners when engaged form a seam and in some embodiments, the intermediate transfer member is a seamless belt.

In some embodiments, the flexible belt further comprises: markings detectable by a detector of a suitable printing system, allowing registration of a relative positioning of the intermediate transfer member when mounted on such a suitable printing system.

In some embodiments, the flexible belt further comprises, a component (e.g., RFID tag) allowing monitoring of data relating to the intermediate transfer member, the data entry selected from the group consisting of a catalogue number, a manufacturing date, a manufacturing batch number, a manufacturing plant identifier, a technical datasheet identifier, a regulatory datasheet identifier, and an online or remote support identifier. In some embodiments, the monitoring component may record data from the printing system, including monitoring data relating to the use of the intermediate transfer member in operation, the recorded data relating to any of, the duration of use of the transfer member since installation, the number of sheets of substrate or length of web printed using this transfer member and any such data of relevance to the user of such printing system.

Further details on exemplary lateral projections suitable to maintain the blanket under desired lateral tension, on fasteners suitable the ends of the blanket and on representative markings or monitoring components are disclosed in WO2013/136220*. Monitoring methods suitable for certain printing systems are disclosed in WO2013/132424*.

*Connective layer*

In some embodiments, the body of an intermediate transfer member according to the teachings herein comprises a connective layer. A connective layer is typically a layer placed between any two functional layers such as described above, and serves to improve adherence therebetween. Specifically, in some embodiments where two functional layers have insufficient mutual adherence, a connective layer able to adequately bond to both is interposed between the two layers. A connective layer is of any suitable thickness. That said, a connective layer is typically between about 100 micrometers and about 300 μm thick, more typically between about 150 μm and about 250 μm thick. In some embodiments, a connective layer is about 200 μm thick.

For example, in some embodiments, the body of an intermediate transfer member comprises two or more distinct reinforcement layers (anisotropic or not). In some such embodiments, there is a connective layer between the two distinct reinforcement layers. For example, in some embodiments, there are two distinct reinforcement layers each comprising fibers embedded in (or impregnated with) and elastomer matrix, and a connective layer disposed between the two reinforcement layers is of an elastomer that binds to both elastomer matrices, for example, all three layers (first and second reinforcement layers and the connective layer) comprise the same elastomer.

Specific embodiments of intermediate transfer members

As noted, an intermediate transfer member according to the teachings herein is a laminated structures comprising a body having one or more layers and a surface (of the last one of the one or more layers) and a release layer attached to the surface, in some embodiments through an adhesive layer. The body of the intermediate transfer member comprises one or more of a conformational layer, compressible layer, thermally-insulating layer, thermally-conductive layer, electrically-conductive layer, low-friction layer, high-friction layer, reinforcement layer and connective layer. In some embodiments, one or more reinforcement layers are anisotropic reinforcement layers as described above. The number, identity and order of the layers of the body of the intermediate transfer member is selected so that the resulting intermediate transfer member has the desired combination of properties.

In some embodiments, the body of an intermediate transfer member comprises a single layer, e.g., an (anisotropic) reinforcement layer. In some embodiments, the body comprises an additional layer between the (anisotropic) reinforcement layer and the release layer, and/or the (anisotropic) reinforcement layer is between an additional layer and the release layer. In some embodiments, the body of an intermediate transfer member comprises at least two (anisotropic) reinforcement layers. In some embodiments, two of the layers are adjacent one to the other. In some embodiments, there is some intervening layer between two of the (anisotropic) reinforcement layers, e.g., of any of the other types of layers.

A number of specific embodiments of intermediate transfer members according to the teachings herein are discussed hereinbelow, some with reference to the Figures.

In Figure 1A, an intermediate transfer member **10** in the form of a blanket according to the teachings herein is seen in side cross section. Intermediate transfer member **10** comprises a release layer **12** having an image-transfer surface **14** (e.g., of an elastomer according to the teachings herein) attached to and supported by a body **16** through surface **18.** Body **16** includes a second surface that defines an inner surface **20** of intermediate transfer member **10** that contacts various mechanical components, such as rollers, of a printing system when intermediate transfer member **10**

is mounted therein. In intermediate transfer member **10** release layer **12** is directly attached to surface **18** of body **16** without the use of an adhesive.

In Figure 1B, an intermediate transfer member **22** is schematically depicted in side cross section. Intermediate transfer member **22** is substantially identical to intermediate transfer member **10** except that release layer **12** is attached to surface **18** of body **16** through a layer of adhesive **24.**

In Figure 2, an intermediate transfer member **26** is schematically depicted in side cross section, having a body **16** of a single layer, a reinforcement layer **28** (e.g., a 200 micrometer thick layer, of a neoprene rubber impregnated woven fabric) as described herein. In some embodiments, reinforcement layer **28** is an anisotropic reinforcement layer as described herein, (e.g., a 200 μm thick layer, of a neoprene rubber impregnated woven fabric having longitudinal inelastic primary fibers of glass warp and lateral elastic secondary fibers of twisted cotton weft).

In Figure 3, an intermediate transfer member **30** is schematically depicted in side cross section, having a body **16** with two layers, a reinforcement layer **28** as described herein and a low-friction layer **32** as described herein (e.g., a 150 micrometer thick layer of PTFE).

In Figure 4, an intermediate transfer member **34** is schematically depicted in side cross section, having a body **16** with three layers, a reinforcement layer **28** as described herein, a low-friction layer **32** as described herein, and a compressible layer **36** as described herein (e.g., a single 350 micrometer thick sponge-like layer of hydrogenated nitrile butadiene rubber having 50% by volume small voids).

In Figure 5, an intermediate transfer member **38** is schematically depicted in side cross section, having a body **16** with two layers, a reinforcement layer **28** as described herein and a compressible layer **36** as described herein.

In Figure 6, an intermediate transfer member **40** is schematically depicted in side cross section, having a body **16** with four layers, a reinforcement layer **28** as described herein, a low-friction layer **32** as described herein, a compressible layer **36** as described herein and a conformational layer **42** as described herein (e.g., a 150 micrometer thick layer of soft hydrogenated nitrile butadiene rubber having a hardness of 30 Shore A).

In Figure 7, an intermediate transfer member **44** is schematically depicted in side cross section, having a body **16** with five layers, a reinforcement layer **28** as described herein, a low-friction layer **32** as described herein, a compressible layer **36** as described herein, a conformational layer **42** as described herein, and an electrically-conductive layer **46** as described herein (e.g., a 100 micrometer thick layer of nitrocellulose loaded with carbon black). The release layer **12** is adhered to the outermost surface of the body (here, conformational layer **42)** through adhesive layer **24.**

In Figure 8, an intermediate transfer member **48** is schematically depicted in side cross section, having a body **16** with six layers, a reinforcement layer **28** as described herein, a low-friction layer **32** as described herein, a compressible layer **36** as described herein, a conformational layer **42** as described herein, an electrically-conductive layer **46** as described herein, and a thermally-insulating layer **50** as described herein (e.g., a 100 micrometer thick of thermally-insulating rubber). The release layer **12** is adhered to the outermost surface of the body (here, conformational layer **42)** through adhesive layer **24.**

In Figure 9, an intermediate transfer member **52** is schematically depicted in side cross section, having: a release layer **12** (e.g., 10 μm thick having a hardness of 30 to 40 Shore A, and made of any suitable material, such as an elastomer according to the teachings herein), attached to a body **16** with a layer of adhesive **24,** and a body **16** with eight layers: a conformational layer **42** as described herein (e.g., 150 μm thick layer of cured acrylic rubber ACM having a hardness of 25 to 35 Shore A and an electrical resistance of $10^{10}$ ohm/cm); an electrically-conductive layer **46** as described herein (e.g., 100 μm thick layer of cured acrylic rubber ACM having an electrical resistance of 500 ohm/com substantially the same as used in conformational layer **42** but with suitable conductive additives (e.g., carbon black); a thermally-conducting layer **56** as described herein (e.g., 300 μm thick HNBR rubber with a low amount of voids; a compressible layer **36** as described herein (e.g., 350 μm thick void-comprising HNBR rubber having a compressibility of 80 μm at P=2kg/cm$^2$; a first reinforcement layer **28a** as described herein (e.g., a 300 μm thick layer of neoprene rubber impregnated anisotropic woven fabric); a connective layer **54** as described herein (e.g., a 200 μm thick layer of neoprene rubber); a second reinforcement layer **28b** as described herein (e.g., a 300 micrometer thick layer of neoprene rubber impregnated anisotropic woven fabric); and a low-friction layer **32** as described herein (e.g., a 4 μm thick layer of FMQ fluorinated silicone rubber).

In Figure 10, an intermediate transfer member **58** is schematically depicted in side cross section, having a body **16** with two or more layers: a (anisotropic) reinforcement layer **28** as described herein and an inner (multi)layer **60** selected from any one or more of a conformational layer, a compressible layer, a thermally conductive layer, a thermally isolating layer, an electrically-conductive layer, a high-friction layer and a low-friction layer.

In Figure 11, an intermediate transfer member **62** is schematically depicted in side cross section, having a body **16** with at least three layers: an intermediate (multi)layer **64** selected from any one or more of a conformational layer, a compressible layer, a thermally conductive layer, a thermally isolating layer, an electrically-conductive layer, a high-friction layer and a low-friction layer; a (anisotropic) reinforcement layer **28** as described herein; and an inner (multi)layer **60** wherein each one or more layer is selected from any one or more of a conformational layer, a compressible layer, a thermally conductive layer, a thermally isolating layer, an electrically-conductive layer, a high-friction layer and a low-friction layer. Intermediate (multi-)layer **64** and inner (multi)layer **60** may be the same or different.

In Figure 12, an intermediate transfer member **66** is schematically depicted in side cross section, having a body **16** with at least two layers: an intermediate (multi)layer **64** wherein each one or more layer is selected from any one or more of a conformational layer, a compressible layer, a thermally conductive layer, a thermally isolating layer, an electrically-conductive layer, a high-friction layer, and a low-friction layer; and a (anisotropic) reinforcement layer **28** as described herein.

In Figure 13, an intermediate transfer member **68** is schematically depicted in side cross section, having a body **16** with at least five layers: an intermediate (multi)layer **64** wherein each one or more layer is selected as previously described for **64;** a first (anisotropic) reinforcement layer **28a** as described herein; an intervening (multi)layer **70** selected from any one or more of a conformational layer, a compressible layer, a thermally conductive layer, a thermally isolating layer, an electrically-conductive layer, a high-friction layer, and a low-friction layer; a second (anisotropic) reinforcement layer **28b** as described herein; and an inner (multi)layer **60** wherein each one or more layer is selected from any one or more of a conformational layer, a compressible layer, a thermally conductive layer, an electrically-conductive layer, a low-friction layer and a high-friction layer). Intermediate (multi-)layer **64,** inner (multi)layer **60** and intervening (multi)layer **70** may be the same or different.

In Figure 14, an intermediate transfer member **72** is schematically depicted in side cross section, having: a release layer **12** (e.g., 5 to 8 micrometer thick and made of any suitable material, such as an elastomer according to the teachings herein), directly attached to a body **16** without adhesive **24,** body **16** with five layers: a conformational layer **42** as described herein (e.g., a 100 μm thick layer of cured acrylic rubber ACM having a hardness of 25 to 35 Shore A and an electrical resistance of $10^{10}$ ohm/cm); an electrically-conductive layer **46** as described herein (e.g., 100 μm thick layer of cured acrylic rubber ACM having an electrical resistance of 500 ohm/com substantially the same as used in conformational layer **42** but with suitable conductive additives (e.g., carbon black); a compressible layer **36** as described herein (e.g., 350 μm thick void-comprising HNBR rubber having a compressibility of 80 μm at P=2kg/$cm^2$; a reinforcement layer **28** as described herein (e.g., a 250 μm thick layer of neoprene rubber impregnated anisotropic woven fabric); and a low-friction layer **32** as described herein (e.g., a 40 μm thick layer of fluorinated rubber).

In Figure 15, an intermediate transfer member **74** is schematically depicted in side cross section, having: a release layer **12** (e.g., 10 micrometer thick and made of any suitable material, such as an elastomer according to the teachings herein), directly attached to a body **16** without adhesive **24,** body **16** with six layers: a conformational layer **42** as described herein (e.g., a 150 μm thick layer of cured acrylic rubber ACM having a hardness of 25 to 35 Shore A and an electrical resistance of $10^{10}$ ohm/cm); an electrically-conductive layer **46** as described herein (e.g., 100 μm thick layer of cured acrylic rubber ACM having an electrical resistance of 500 ohm/com substantially the same as used in conformational layer **42** but with suitable conductive additives (e.g., carbon black); a thermally-insulating layer **50** as described herein (e.g., a 80 μm thick layer of soft rubber); a compressible layer **36** as described herein (e.g., 350 μm thick void-comprising HNBR rubber having a compressibility of 80 μm at P=2kg/$cm^2$; a reinforcement layer **28** as described herein (e.g., a 250 μm thick layer of neoprene rubber impregnated anisotropic woven fabric); and a low-friction layer **32** as described herein (e.g., a 10 μm thick layer of fluorinated rubber).

In WO2013/132420* is described an indirect printing system where some of the functions ordinarily served by some layers in an intermediate transfer member are served by one or more elements of the transfer member supporting structure, for example, one or more of the layers described above can be "separated" and/or "transferred" to a roller. In particular, it is advantageous to have a thin flexible belt including the release layer, while the compressible layer is now "separated" to form the outer surface of a pressure cylinder which at the impression station urges the thin belt against the impression cylinder, to transfer the ink image from the release layer of the belt to the substrate. It is desired, for reasons already explained in the context of the previous "thick" blanket which included the compressible layer, that such thin belt further comprises a reinforcement layer, and optionally a layer controlling the frictional drag of the belt over supporting surfaces of its support structure.

In Figure 16, an embodiment of an intermediate transfer member **76** exceptionally suitable for use with such a printing system is schematically depicted in side cross section. Intermediate transfer member **76** comprises, a release layer **12** (e.g., a layer of elastomer according to the teachings herein) having a thickness between about 0.1 micrometer and about 100 μm, and even between about 1 and about 50 μm; in some embodiments not less than about 1 μm and not more than about 30 μm, thus between about 1 μm and about 30 μm, between about 1 μm and about 20 μm, and even between about 5 μm and about 15 μm), attached to a body **16** with an adhesive layer **24** (e.g., about 0.1 μm to about 10 μm thick layer of any suitable adhesive, preferably between about 1 μm and about 3 μm), body **16** having three layers: a conformational layer **42** as described herein (e.g., soft silicone rubber (20-65 shore A having a thickness of e.g., about 50 μm to about 1000 μm, preferably about 150μm); a reinforcement layer **28** as described herein (e.g., about 100 μm to about 500 μm thick, fabric (preferably woven fiberglass, optionally anisotropic as described herein, for example, comprising primary fibers of inelastic glass parallel to the longitudinal direction and secondary fibers of elastic twisted fibers such as cotton) fully impregnated with silicone rubber) and a high-friction layer **78** as described herein (e.g., soft silicone rubber, having a thickness ranging from about 5 μm to about 250 μm, from about 100 μm to about

200 μm, and even from about 50 μm to about 200 μm). In an alternative embodiment, the release layer of the thin belt can be directly attached to the body without an intermediate adhesive layer.

Such an intermediate transfer member is typically up to about 1 mm thick, more typically between 300 and 500 μm, in contrast with other intermediate transfer members that are typically between about 1.5 mm and about 2 mm thick.

In some such embodiments, where the reinforcement layer includes a single layer of fabric, reinforcement layer is between about 150 μm and about 400 μm thick, in some embodiments about 350 μm thick.

In some such embodiments, where the reinforcement layer includes two distinct layers of fabric, each layer is between about 50 μm and about 250 μm thick, and the reinforcement layer is between about 100 μm and about 500 μm thick.

In the embodiments of intermediate transfer members depicted in the Figures above, layers of a respective body are depicted positioned in a particular order. In some similar embodiments, the order and/or number of layers can be different.

Manufacture of intermediate transfer member

A person having ordinary skill in the art is able to make an intermediate transfer member according to the teachings herein upon perusal of the disclosure herein, using personal judgement standard methods, techniques and materials known in the art, and may optionally include blending, melting, coating, laminating and spraying materials.

In a preferred method, a desired body having a surface is manufactured using known techniques. Subsequently, a release layer is attached to the surface of the body to make the intermediate transfer member.

*Preparing body surface for attaching release layer*

In some embodiments, the surface of the body is provided in a cured state so that the incipient release layer is attached to an already cured surface. In some embodiments, the surface of the body is provided in a partially cured state so that the incipient release layer is attached to a partially cured surface. In some embodiments, the time between manufacture of the surface and attachment of the release layer is sufficiently variable and long that the curing state of the surface of the body is variable and indeterminant. In some such embodiments, the surface of the body is pre-cured (e.g., conditions are applied to substantially fully cure the surface) so that the release layer is attached to a standardized surface.

In some embodiments, a removable foil having a glossy surface finish is applied to the surface of the body prior to attachment of the incipient release layer, typically when the surface is substantially uncured or only partially cured so that the resulting surface of the body is particularly smooth. Such a smooth surface helps in providing a homogenously thick, even and smooth release layer, especially when the incipient release layer is applied as a fluid curable polymer composition, see below. Any suitable foil can be used, for example, a thermoplastic polyester (PET) foil, especially a metallized PET, e.g., an aluminium PET laminate. Prior to application of a release layer precursor or adhesive, the foil is removed.

*Solid incipient release layer*

In some embodiments, the incipient release layer is a solid component (e.g., a solid elastomer sheet) that is attached to the surface of the body, for example with a suitable curable adhesive.

*Fluid incipient release layer*

In some embodiments, a fluid curable composition is applied as a layer on the surface of the body to form an incipient release layer, and upon curing, the fluid curable composition becomes the desired release layer. In some embodiments, the fluid curable composition is applied directly to the surface of the body of the intermediate transfer member. In some embodiments, a layer of an adhesive composition is first applied to the surface of the body of the intermediate transfer member, and subsequently the fluid curable composition is applied on the layer of the adhesive composition. The required thickness of adhesive and/or fluid curable polymer composition can be applied using any suitable method, for example by spraying or with the use of a Meyer rod or offset gravure coater.

In some embodiments, an adhesive layer is first cured (partially or completely) before application of a fluid curable polymer composition. In some embodiments, a fluid curable polymer composition is applied on an uncured adhesive layer.

Preparing a fluid curable composition

A fluid curable composition, such as a composition according to the teachings herein, is generally prepared by combining all of the components in the required relative amounts. The length of time before application that a fluid curable composition is made, and possibly stored, is dependent on how quickly the composition cures in storage conditions. In some embodiments, a prepared composition is storable without substantial curing for a relatively long time (e.g., a week). In some embodiments, a prepared composition must be used within less than an hour.

Curing a fluid incipient release layer

Curing of the applied incipient release layer and/or adhesive layer is achieved using any suitable method that depends on the composition thereof, and includes *inter alia* waiting, applying a chemical curing agent, heating, and exposure to ultraviolet or electron beam radiation.

For example, in some embodiments of a fluid curable composition according to the teachings herein including a condensation cure catalyst, the rate of curing is dependent on humidity and temperature. Complete curing typically occurs within 5 minutes when an applied layer of composition is held at a temperature of between 80°C and 150°C at a relative humidity of above 30%.

*Completing an intermediate transfer member*

Typically, the laminated structure of an intermediate transfer member is made on a planar sheet (if narrow, substantially a strip). Once the laminated structure of the intermediate transfer member is set, it is necessary to give the intermediate transfer member a required form.

When the intermediate transfer member is in the form of a cylinder, typically the sheet is cut to an appropriate size and the laminated structure secured to a rigid (metal, hard plastic) roll base, for example, using adhesive.

When the intermediate transfer member is a blanket, the ends of the sheet are joined together to form a loop. The ends may be joined in any suitable method, as known in the art, Depending on the embodiment, the ends may be joined releasably (e.g., zip fastener, hooks, magnets) or permanently (e.g., soldering, welding, adhesive, taping)

ADHESION OF RELEASE LAYER TO INTERMEDIATE TRANSFER MEMBER BODY

As noted above, intermediate transfer members, including an intermediate transfer member according to the teachings herein, are laminated structures comprising a body having one or more layers and a surface (of the last one of the one or more layers) and a release layer attached to the surface.

In some instances, it is desired that the last layer of the body of an intermediate transfer member be of a rubber so that the release layer is attached to a rubber surface. As noted above, in some embodiments of making such an intermediate transfer member, the body is provided with an uncured rubber layer surface. To the uncured rubber layer surface is applied a layer of a suitable curable adhesive composition, and a layer of fluid curable polymer composition is applied on to the adhesive composition layer. The uncured layers of the thus-formed incipient intermediate transfer member are then allowed to cure, where the uncured adhesive composition cures together with the uncured rubber surface and also cures together with the uncured curable polymer composition. When curing is complete, the thus-produced release layer (e.g., of an elastomer according to the teachings herein) of the intermediate transfer member is securely bonded to the now-cured rubber layer of the body through the now-cured adhesive.

Adhesive compositions suitable for bonding elastomers comprising at least one crosslinked silicone-related polymer (e.g., the cured form of curable polymer compositions including a silicone-related polymer such as a curable polymer compositions according to the teachings herein) to uncured rubbers surfaces are known in the art.

Some adhesive compositions suitable for bonding elastomers comprising at least one crosslinked silicone-related polymer to at least partially-cured or cured rubbers surfaces have been described in the art, see for example, US Patent 3,697,551; US 4,401,500; US 2002/0197481; and US 2008/0138546 and PCT Patent Publications WO 2002/094912 and WO 2010/042784. That said, Applicant has found an adhesive including an azido silane or an organic peroxide that generates free radicals on thermal activation that in some embodiments has advantages compared to other adhesives, as described hereinbelow and especially in the "summary of the invention" section.

Accordingly, if intermediate transfer member manufacture is limited to a method including providing an uncured rubber layer, an adhesive layer and a fluid curable polymer composition layer, and then curing the three layers together, suitable intermediate transfer members can be made. However, it is often desirable to preproduce the body of the intermediate transfer member at one site (e.g., with a subcontractor) and to assemble the intermediate transfer member by attaching an elastomer release layer to the body at a different site. By the time the preproduced body is delivered and ready for attachment of the release layer, an originally uncured rubber surface is already at least partially, if not

substantially completely, cured.

Accordingly, there is a need to increase the adhesion of elastomers comprising at least one crosslinked silicone-related polymer to an at least partially cured or even substantially completely cured rubber surface. In the context of the teachings herein, there is a need for a method for preparing an intermediate transfer member of a printing system that includes attaching a release layer made of an elastomer comprising at least one crosslinked silicone polymer (such as an elastomer according to the teachings herein) to the surface of an at least partially cured rubber layer.

As described immediately hereinbelow, an aspect of the teachings herein provides methods of attaching an elastomer comprising at least one crosslinked silicone-related polymer to an at least partially cured or even substantially completely cured rubber surface.

*Surface of at least partially cured rubber*

In some embodiments, the rubber surface is substantially completely cured. In some embodiments, the rubber surface is partially cured. In some embodiments, the at least partially cured rubber is a rubber which is stable at temperatures of greater than about 100°C. In some embodiments, the rubber is selected from the group consisting of room temperature vulcanization RTV and RTV2, liquid silicone LSR, Vinyl Methyl Silicone (VMQ), Phenyl Silicone Rubber (PMQ, PVMQ), fluorosilicone rubber (FMQ, FMVQ), alkyl acrylate copolymer rubbers (ACM), ethylene propylene diene monomer rubber (EPDM), fluoroelastomer polymers (FKM), nitrile butadiene rubber (NBR), ethylene acrylic elastomer (EAM), and hydrogenated nitrile butadiene rubber (HNBR).

*Elastomer*

The elastomer is any suitable elastomer comprising at least one crosslinked silicone-related polymer, for example, an elastomer according to the teachings herein. Typically, such an elastomer is the cured form of a curable polymer composition including a silicone-related polymer, for example, a curable polymer compositions according to the teachings herein.

In the specific context of the instant application, in some embodiments the laminated product is an intermediate transfer member of a printing system and the elastomer layer constitutes a release layer thereof.

In some embodiments, the elastomer layer is between 1 micrometer and about 200 micrometers thick.

ADHESIVE COMPOSITION

According to an aspect of some embodiments of the teachings herein, sufficient adhesion of an elastomer comprising at least one crosslinked silicone-related polymer to an at least partially cured or even substantially completely cured rubber surface is achieved by first applying a layer of an adhesive composition to the surface, and only subsequently applying a fluid curable composition comprising at least one silicone-related polymer on the applied adhesive composition layer. Subsequent curing of the curable composition forms a cured elastomer bonded to the surface of the rubber layer with an adhesive layer to form the desired product, e.g., an intermediate transfer member.

Any suitable curable adhesive composition may be used for implementing such embodiments. That said, in some embodiments, it is preferable to use a curable adhesive composition according to the teachings herein. In some embodiments, the curable adhesive compositions according to the teachings herein provide a very strong and heat-stable attachment between a release layer for use in printing, and a rubber layer to which attached.

Thus, according to an aspect of some embodiments of the teachings herein, there is also provided a method for bonding an elastomer layer comprising at least one crosslinked silicone-related polymer to an at least partially cured rubber surface to form a laminated product comprising providing a body having a surface of at least partially cured rubber; on the surface of at least partially cured rubber, applying a layer of a curable adhesive composition including at least one organosilane, and material that generates free radicals on activation; on the applied layer of adhesive composition, applying a layer of a fluid curable composition comprising at least one silicone-related polymer (in some embodiments, a fluid curable composition according to the teachings herein), to form an incipient laminated product; and curing the fluid curable composition and the curable adhesive composition, thereby forming a laminated product.

In the specific context of the instant application, in some embodiments: the laminated product is an intermediate transfer member of a printing system; the elastomer layer constitutes a release layer of the intermediate transfer member; the rubber surface is a surface of a body of the intermediate transfer member; and the incipient laminated product is an incipient intermediate transfer member.

According to an aspect of some embodiments of the teachings herein, there is also provided a laminated product, comprising a body having a surface of at least partially cured rubber; an elastomer layer comprising at least one crosslinked silicone-related polymer (in some embodiments, an elastomer according to the teachings herein); and a cured adhesive layer comprising at least one organosilane bonded to the surface through an organic portion of the

organosilane and bonded to the elastomer layer through a silicone portion of the organosilane.

In the specific context of the instant application, in some embodiments: the laminated product is an intermediate transfer member of a printing system; and the cured silicone polymer layer constitutes a release layer of the intermediate transfer member.

*Organosilane*

In some embodiments of the method or laminated product, the at least one organosilane is of the formula:

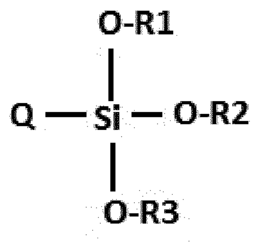

wherein
Q is any organic group having at least three carbon atoms, in some embodiments at least three alkyl carbon atoms.

In some embodiments, Q is a linear or branched alkyl group. In some embodiments, Q includes a functional group such as an epoxide or methacrylate group.

In some embodiments, Q includes at least one aromatic group and/or at least one halogen atom and/or at least one double bond.

In some embodiments, R1, R2, and R3 are each independently an alkyl group having between 1 and 30 carbon atoms. In some embodiments, one, two, or (preferably) all three of R1, R2, and R3 are each independently an alkyl group having between 1 and 4 carbon atoms so that cleavage of the corresponding silyl ether bond produces a relatively volatile alcohol.

In some embodiments of the method or laminated product, the at least one organosilane comprises a single type of organosilane.

In some embodiments of the method or laminated product, the at least one organosilane comprises a combination of at least two different types of organosilane.

In some embodiments, the at least one organosilane is glycidoxypropyl trimethoxysilane and/or methacryloxypropyl trimethoxysilane, both available from Evonik Industries, Essen, Germany under the tradenames Dynasylan® Glymo and Dynasylan® Memo respectively.

In some embodiments of the method or laminated product, the at least one organosilane comprises at least one aminosilane, such as, for example, Dynasylan® AMEO (3-Aminopropyltriethoxysilane) or Dynasylan® AMMO (3-Aminopropyltrimethoxysilane), or mixture thereof. According to a preferred embodiment, the adhesive composition comprises a blend of (3-Aminopropyltriethoxysilane) or Dynasylan® AMMO (3-Aminopropyltrimethoxysilane) and an azido silane, such as, for example, azidosulfonylhexyltriethyoxysilane.

The at least one organosilane comprises any suitable amount of organosilane. In some embodiments, the amount of organosilane is in the range of from 3% to 98% w/w, preferably from 80% to 98% w/w of the curable adhesive composition. In one preferred embodiment, the at least one organosilane comprises about 95% by weight of the curable adhesive composition. More preferably, the composition comprises 95% (w/w) Dynasylan® AMEO or Dynasylan® AMMO and 5% (w/w) azido silane.

*Materials that generate free radicals on activation*

In some embodiments of the method, the material that generates free radicals on activation is a thermally activated material.

In some such embodiments, curing comprises application of heat to the layer of adhesive composition. In some such embodiments, applying heat comprises heating the layer of adhesive composition to a temperature of at least 100°C. When heated above 100°C, suitable thermally activated materials generate free radicals in an amount sufficient to lead to a chemical reaction, such as described below, that generates strong covalent bonds between functional groups of the curable adhesive composition and components of cured rubbers.

Typically, such thermally activated materials are selected from the group consisting of peroxides, azo compounds and azide compounds. In some embodiments, such a thermally activated material is selected from the group consisting of benzoyl peroxide, azo bisisobutyronitrile (AIBN) and azidosulfonylhexyltriethoxysilane (SIA 0780 from

Gelest Inc, Morrisville, PA, USA).

In embodiments wherein the thermally activated material comprises an azide compound such as 6-azidosulfonylhexyltriethoxysilane, the azido group decomposes upon heating to above 110°C, leaving $N_2$ and a nitrene biradical that links by insertion mechanisms to the cured rubber. The hydrolysable part of the azidosulfonylhexyl triethoxysilane links to the fluid silicone composition, using organo titanate or tin catalysts.

In embodiments wherein the thermally activated material comprises peroxide, the free radicals generated upon heating by the decomposition of the peroxide activate the functional part of the organosilane, that undergo crosslinking with the rubber, while the hydolysable part of the organosilane creates links with the fluid silicone composition.

During use, the thermal curing composition is heated, causing the thermally activated material to generate free radicals. The generated free-radicals initiate a chemical reaction with the rubber surface that leads to direct chemical binding of the organo-alkoxysilane through the Q group, wherein the Q group binds to the rubber surface and the Si group to the silicone polymer.

The thermal curing composition comprises any suitable amount of thermally activated material, typically between 2% and 20% by weight of organosilane on a weight basis, preferably between 3% and 7%, and most preferably about 5%.

In some embodiments, the material that generates free radicals on activation is an ultraviolet activated material. In some such embodiments, curing comprises application of ultraviolet radiation to the layer of adhesive composition. In some such embodiments, the ultraviolet activated material comprises a photoinitiator, for example, a benzophenone derivative, or 2-hydroxy 2-methyl 1-phenyl 1-propanol.

*Combined function*

In some embodiments, the curable adhesive composition comprises a single chemical entity that serves as both the thermally activated material component and the organosilane component. For example, in some such embodiments, the curable adhesive composition comprises an azido silane, such as azidosulfonylhexyltriethoxysilane, which can act as both the thermally activated material and the organosilane.

*Condensation cure catalyst*

In some embodiments of the method, the curable adhesive composition further comprises a condensation cure catalyst, that is any catalyst suitable for catalysing binding of the organosilane through the alkoxysilane groups to silanol functions in a silicone precursor composition.

During use, the condensation cure catalyst catalyzes the formation of chemical bonds between the silicon atom of the organosilane to a silanol in a silicone composition, forming a Si-O-Si bond and releasing the R1, R2 or R3 group of the organosilane as an alkyl alcohol.

The condensation cure catalyst comprises any suitable condensation cure catalyst. In a preferred embodiment, the condensation cure catalyst is an organo tin carboxylate, for example dibutyltin dilaurate (CAS No. 77-58-7) or a titanate catalyst such as titanium diisopropoxy (bis-2,4-pentanedionate) commercially available as AKT855 from Gelest Inc, Morrisville, PA, USA.

The thermal curing composition comprises any suitable amount of condensation cure catalyst, typically between 1% and 10% w/w of the organosilane.

*Diluent*

In some embodiments of the method, the curable adhesive composition comprises a diluent that reduces the viscosity of the composition. In some such embodiments, the diluent is an organic solvent, for example, an organic solvent selected from the group consisting of isopropanol, xylene and toluene, or combinations thereof.

In some embodiments, the curable adhesive composition is substantially devoid (*i.e.,* less than 1% by weight and even less than 0.5% of a diluent.

In some embodiments of the method, the curable adhesive composition is applied on the at least partially cured rubber surface as a layer of thickness in the range of from about 0.1 to about 10 micrometer.

In some embodiments of the laminated product, the cured adhesive layer has a thickness in the range of from about 0.1 to about 10 micrometer.

In some embodiments of the method, the fluid curable composition is applied on the layer of adhesive composition as a layer of thickness in the range of from about 1 to about 200 micrometer.

In some embodiments of the laminated product, the elastomer layer has a thickness in the range of from about 1 to about 200 micrometer.

In some embodiments of the method, the curing of the curable adhesive composition is at least partially performed prior to applying the layer of fluid curable composition.

In some embodiments of the method, the curing of the curable adhesive composition is performed subsequent to applying the layer of fluid curable composition.

*Adhesive compositions*

The teachings herein additionally provide specific exceptionally useful curable adhesive compositions.

This, according to an aspect of some embodiments of the teachings herein, there is also provided a curable adhesive composition comprising an aminosilane and an azido silane. In some such embodiments, the curable adhesive composition is a thermally curable adhesive composition. In some such embodiments, the azido silane comprises azidosulfonyl-hexyl-triethyoxysilane.

According to an aspect of some embodiments of the teachings herein, there is also provided a curable adhesive composition comprising an aminosilane and a photoinitiator. In some such embodiments, the adhesive composition is an ultraviolet curable adhesive composition. In some such embodiments, the photoinitiator comprises a benzophenone derivative. In some such embodiments, the photoinitiator comprises 2-hydroxy 2-methyl 1-phenyl 1-propanol.

In some embodiments of the curable adhesive compositions, the aminosilane is selected from the group consisting of 3-aminopropyltriethoxysilane and 3-aminopropyltrimethoxysilane.

In some embodiments of the curable adhesive compositions, the aminosilane is present at a concentration of about 95 weight percent of the curable adhesive composition.

According to an aspect of some embodiments of the teachings herein, there is also provided a thermal curing adhesive composition, comprising: an organosilane; a thermally activated material that generates free radicals on heating; and a condensation-cure catalyst.

*Bonding already-cured silicone polymers*

The methods described above for bonding an elastomer comprising at least one crosslinked silicone-related polymer to an at least partially-cured rubber surface to form a laminated product with an adhesive composition are described where a layer of a fluid curable composition comprising at least one silicone-related polymer is applied to a layer of adhesive composition. Curing of the two layers leads to formation of a desired laminated product such as an intermediate transfer member, where the cured elastomer layer is a release layer thereof.

In a related aspect of the teachings herein, instead of the fluid curable composition, an already-cured elastomer layer (in some embodiments, between 1 and 200 micrometer thick) is contacted with the applied layer of adhesive composition. Curing of the adhesive composition leads to formation of a desired laminated product such as an intermediate transfer member, where the cured elastomer layer is a release layer thereof.

Thus, according to an aspect of some embodiments of the teachings herein, there is also provided a method for bonding an elastomer layer comprising at least one crosslinked silicone-related polymer to an at least partially cured rubber surface to form a laminated product comprising providing a body having a surface of at least partially cured rubber; on the surface of at least partially cured rubber, applying a layer of a curable adhesive composition including at least one organosilane, and a material that generates free radicals on activation; on the applied layer of adhesive composition, placing an elastomer comprising at least one crosslinked silicone-related polymer (in some embodiments, an elastomer according to the teachings herein), to form an incipient laminated product; and curing the adhesive composition; wherein the curing of the adhesive composition binds the elastomer to the surface of the rubber, thereby forming a laminated product.

Features and options of the embodiments of such a method are substantially the same, *mutatus mutandi,* as described above for bonding an elastomer comprising at least one crosslinked silicone-related polymer to an at least partially cured rubber surface to form a laminated product comprising by applying a layer of a fluid curable composition, so are not repeated.

*Other uses*

The bonding methods described herein (using adhesives) have been discussed in the context of bonding an elastomer comprising at least one crosslinked silicone-related polymer to an at least partially cured rubber surface. It is important to note that if desired, the methods can be implemented for bonding an elastomer comprising at least one crosslinked silicone-related polymer to an uncured rubber surface.

<u>Method and device for printing</u>

An intermediate transfer member including a release layer according to the teachings herein can be used with any suitable printing device and/or to implement any suitable printing method to transfer an ink residue film to any suitable

substrate.

A typical suitable method of printing comprises: during a printing cycle when a specific image is printed on a specific substrate, to:

a. apply one or more inks (each ink comprising a coloring agent in a liquid carrier) as a plurality of ink droplets to form an ink image on the image transfer surface of a release layer of an intermediate transfer member;
b. while the ink image is being transported by the intermediate transfer member, evaporating the carrier to leave an ink residue film including the coloring agents on the image transfer surface of the release layer; and
c. transferring the residue film from the image transfer surface of the release layer to the substrate (e.g., paper, cardboard, cloth), thereby printing the desired image on the substrate. In preferred embodiments, the inks are applied as droplets by ink jetting, in the usual way.

The intermediate transfer members of the invention, may in some embodiments thereof, be suitable for use with indirect printing systems as described in WO2013/132418*, WO2013/132419*, and WO2013/132420*, all of which were published after the priority of the present application but have the same priority date.

*Ink compositions*

An intermediate transfer member including a release layer according to the teachings herein can be used with any suitable ink, especially suitable inks having a coloring agent and resin binder in an aqueous carrier. In such embodiments, the residue film that remains on the image transfer surface of the release layer after evaporation of the carrier that is subsequently transferred to the substrate to produce the desired image on the substrate includes both the coloring agent and the resin binder.

In some embodiments, such inks suitable for use in conjunction with the teachings herein contain a coloring agent (e.g., dyes or nanoparticulate pigments) and a water-dispersible or water-soluble organic polymeric resin.

Any suitable coloring agent may be used.

Any suitable water-dispersible or water-soluble resin binder may be used. As discussed in greater detail below, in some embodiments it is preferred that the resin binder include functional groups that are chargeable by proton transfer in an aqueous solution, e.g., carboxylic acid groups that are proton donors in water solutions. In some embodiments, suitable resin binders are styrene-acrylic copolymers having carboxylic acid groups that are proton donors to water, thereby acquiring a negative charge.

Suitable inks are described by the Applicant in WO2013/132439*, which was published after the priority of the present application but has the same priority date.

A specific embodiment of a suitable ink comprises:

| | |
|---|---|
| Carbon Black Mogul L (Cabot Corp., Boston, MA, USA) | 1.3 % w/w |
| Joncryl HPD 296 (35.5 % water solution) (BASF) | 35 % w/w (12.5 % of solid resin) |
| Glycerol (Aldrich) | 15 % w/w |
| Zonyl FSO-100 | 0.2 % w/w |
| Diethanolamine | 1 % w/w |
| Water (distilled) | Balance to 100 % |

The carbon black pigment, water, Joncryl HPD 296 and diethanolamone were mixed and milled using a homemade milling machine. The milling may be performed using any one of many commercially available milling machines deemed suitable by one of ordinary skill in the art. The progress of milling was controlled on the basis of particle size measurement (Malvern, Nanosizer). The milling was stopped when the particle size (D50) reached 70 nm. Then the rest of materials were added to the pigment concentrate and mixed. After mixing the ink was filtered through a 0.5 micron filter. The thus-made ink was found to have a viscosity of 9 cP and a surface tension of 24 mN/m.

*Pretreatment*

As is known to a person having ordinary skill in the art, it is convenient to apply the ink droplets directly to the image transfer surface of the release layer. Accordingly, in some embodiments, an intermediate transfer member including a release layer according to the teachings herein is used for printing as-is, that is to say, the ink droplets are directly applied to the image transfer surface of the release layer.

Although often such direct application of ink to the release layer gives acceptable printing results, it has been found that under some printing conditions using some aqueous ink compositions, the printing results are suboptimal.

Consider that an aqueous ink composition is applied to the image transfer surface of the release layer as droplets, e.g., by inkjetting. As a result of momentum, each (presumably close to spherical) droplet flattens upon impact with the image transfer surface. Subsequently, the surface tension and cohesion of the ink composition together with the hydrophobic properties of the image transfer surface causes each droplet to adopt a more spherical shape to reduce the area of contact with the image transfer surface of the release layer. This more spherical shape is considered to be at least a contributory reason for suboptimal printing results observed under certain conditions.

The Applicant has found that in some embodiments, superior printing results (in some embodiments, expressed in terms of ink-pixel sharpness and/or optical density of the image printed in the substrate) are obtainable by applying a pretreatment that covers the image transfer surface of the release layer with a layer of proton-accepting chemical agent, where the layer of chemical agent does not substantially change the wettability of the image transfer surface of the release layer.

Prior to application of the ink droplets to the image transfer surface, the proton-accepting chemical agent is applied to the image transfer surface of the release layer of the intermediate transfer member (e.g., by spraying or rolling) thereby forming a layer chargeable by proton transfer with the ink.

When the ink droplets are applied to the image transfer surface in the usual way, a proton transfer reaction occurs between the chemical agent of the pretreatment and the polymeric resin of the ink so these are oppositely charged, i.e., protons are transferred from the resin (that becomes negatively charged) to the chemical agent (that becomes positively charged). Without discussing potential reasons or mechanisms therefore, the charging, and electrostatic forces thus enabled, at least temporarily counteracts the tendency of the ink droplets to adopt a more spherical shape, so that the ink droplets adopt a more flattened and less spherical shape for a longer time. This longer time provides sufficient time for the aqueous carrier to be evaporated sufficiently so that the formed ink residue film is distributed over a greater surface area of the image transfer surface as if the droplet had adopted a more flattened shape. It has been found that all other things being equal, in some embodiments such ink residue film distribution provides superior printing results.

Accordingly, in some embodiments, the method of printing comprises: during a printing cycle when a specific image is printed on a specific substrate:

a. pretreating the release layer by applying a chemical agent to the image transfer surface of a release layer to form a layer of a proton-accepting chemical agent on the image transfer surface of the release layer of an intermediate transfer member;
b. applying one or more inks (each ink comprising coloring agent in a liquid carrier) as a plurality of ink droplets to form an ink image on the layer of chemical agent on the image transfer surface, so that protons are transferred from the ink droplets to the layer of chemical agent, thereby forming positive charges on the layer of chemical agent and negative counter-charges in the ink droplets;
c. while the ink image is being transported by the intermediate transfer member, evaporating the carrier to leave an ink residue film including the coloring agents on the image transfer surface of the release layer; and
d. transferring the residue film from the image transfer surface to the substrate, thereby printing the desired image on the substrate. In preferred embodiments, the inks are in an aqueous carrier and applied as droplets by ink jetting, in the usual way.

Suitable ink compositions include components bearing proton-donating functions such as carboxylic acid groups, acrylic acid groups or methacrylic acid groups on resins. The proton-accepting chemical agents are any suitable proton-accepting chemical agent. In some embodiments, the chemical agent is a polymer. In some embodiments, the chemical agent has an average molecular weight of at least 800 and preferably of at least 10,000 g/mole. In some embodiments, the chemical agent includes nitrogen atom-containing proton-accepting functional groups selected from primary, secondary, tertiary amines or quaternary ammonium salts. Typical such chemical agents include linear and branched polyethyleneimine, modified polyethyleneimine, guar hydroxylpropyltrimonium chloride, hydroxypropyl guar hydroxypropyl-trimonium chloride, vinyl pyrrolidone dimethylaminopropyl methacrylamide copolymer, vinyl caprolactam dimethylaminopropyl methacrylamide hydroxyethyl methacrylate, quaternized vinyl pyrrolidone dimethylaminoethyl methacrylate copolymer, poly(diallyldimethylammonium chloride), poly(4-vinylpyridine), and polyallylamine.

Such chemical agents are preferably applied to the release layer as liquids, for example, as a pretreatment solution, especially a pretreatment solution including water as a solvent. In some embodiments, the solution is a dilute solution, e.g., having not more than 1% (w/w) of the chemical agent.

In some embodiments, subsequent to application of the chemical agent as a solution, but prior to application of the ink, at least some and preferably substantially all of the solvent of the pretreatment solution is evaporated or otherwise removed from the image transfer surface of the release layer. Such evaporation is typically not a challenge, as the image transfer surface of the release layer is typically maintained at an elevated temperature (typically at least about 70°C) to assist in evaporation of the ink solvent. Removal can be effected by blowing away the applied pretreatment solution by a stream of high pressure air.

In some embodiments, subsequent to application of the chemical agent (in a pretreatment solution), a layer of chemical agent is formed on the image transfer surface of the release layer, typically not than 20 nm thick, not more than 15 nm thick and even not more than 10 nm thick. In some embodiments, the amount of chemical agent making up the layer of chemical agent is not more than 50 mg/$m^2$, not more than 40 mg/$m^2$, not more than 30 mg/$m^2$, not more than 20 mg/$m^2$ and even not more than 10 mg/$m^2$.

Accordingly, in some preferred embodiments, for printing with an intermediate transfer member including a release layer according to the teachings herein is used with such pretreatment. Such pretreatment is described in detail in WO2013/132339*.

## EXAMPLES

Aspects of the teachings herein were experimentally demonstrated.

### Materials

Materials and chemicals were purchased from various manufacturers, including:

| | |
|---|---|
| Gelest | Gelest Inc, Morrisville, PA, USA |
| Colcoat | Colcoat Company, Ltd., Tokyo, Japan |
| Momentive | Momentive, Columbus OH, USA |
| TIB | TIB Chemicals AG, Mannheim, Germany |
| Evonik | Evonik Industries AG, Essen, Germany |
| Sigma-Aldrich | Sigma-Aldrich Corporation, St. Louis MO, USA |
| ACROS | Thermo Fisher Scientific Inc., Waltham, MA, USA |
| JT Baker | Avantor Performance Materials, Center Valley, PA, USA |
| Hanse Chemie | Evonik Industries AG, Essen, Germany |
| BYK | BYK-Chemie GmbH, Wesel, Germany |
| Genesee | Genesee Polymers Corporation, Burton, MI, USA |
| Ciba/BASF | BASF Schweiz AG, Basel, Switzerland |
| Bayer | Bayer Material Science AG, Leverkusen, Germany |

### Methods

Testing of abrasion resistance

The abrasion resistance of the release layer of embodiments of intermediate transfer members prepared was tested by measuring Gloss Loss:
3M Scotch® transparent tape was used to remove dust particles from the image transfer surface of the release layer of a swatch of the intermediate transfer member.

The gloss of the thus-cleaned image transfer surface was measured using a hand-held gloss meter (BYK-Gardner USA, Columbia, Maryland, USA) at a 75° angle of incidence. Gloss was measured at 3 different locations on the image transfer surface. "Original Gloss" was calculated as the average of the three measurements.

The swatch of intermediate transfer member was mounted on the sample stage of a "Rub-Test" abrasion tester (Test Machine Inc.) fitted with 3M 261X 9 μm Lapping Film.

The abrasion tester was operated at 1000 cycles at a load of 1 kgf.

The swatch was removed and "Abraded Gloss" measured again as described above. The Gloss Loss was calculated as:

$$\text{Gloss Loss} = 100 - ((\text{OriginalGloss} - \text{Abraded Gloss}) / \text{OriginalGloss}) \times 100$$

Printing

*Ink Composition* The following materials were used to make an ink composition:

| | |
|---|---|
| Carbon Black Mogul L (Cabot Corp., Boston, MA, USA) | 1.3 % w/w |
| Joncryl HPD 296 (35.5 % water solution) (BASF) | 35 % w/w (12.5 % of solid resin) |

(continued)

| | |
|---|---|
| Glycerol (Aldrich) | 15 % w/w |
| Zonyl FSO-100 | 0.2 % w/w |
| Diethanolamine | 1 % w/w |
| Water (distilled) | Balance to 100 % |

The carbon black pigment, water, Joncryl HPD 296 and diethanolamone were mixed and milled using a homemade milling machine. The milling may be performed using any one of many commercially available milling machines deemed suitable by one of ordinary skill in the art. The progress of milling was controlled on the basis of particle size measurement (Malvern, Nanosizer). The milling was stopped when the particle size (D50) reached 70 nm. Then the rest of materials were added to the pigment concentrate and mixed. After mixing the ink was filtered through a 0.5 micron filter. The thus-made ink was found to have a viscosity of 9 CP and a surface tension of 24 mN/m.

*Release-layer pretreatment solution*

Commercially-available PEI (polyethylenimine) having an average molecular weight of 25,000 g/mole (as Lupasol® WF from BASF Corporation, Florham Park, New Jersey, USA; CAS 9002-98-6) was diluted with triple-distilled water to give a 0.2% w/w PEI release layer pretreatment solution.

*Printing*

To test the printing performance of a given embodiment of an intermediate transfer member having a release layer in accordance to the teachings herein, an intermediate transfer member was fashioned as a patch of approximately 200 mm x 300 mm. The patch was fixed image transfer surface facing upwards to a hotplate (with clamps) that was heated to 130°C.

A 1 micrometer thick layer of the release-layer pretreatment solution was applied to completely cover the image transfer surface of the release layer. Specifically, the solution was sprayed at the image transfer surface of the release layer and then evened to the desired thickness using a chrome evening roller.

After about 30 seconds, the solvent of the release-layer pretreatment solution had evaporated leaving a nanometric layer of PEI as a chemical agent coating the image transfer surface of the release layer.

An ink cartridge of a Dimatic DMP-2800 inkjet printer (Fujifilm, Akasaka, Minato, Tokyo, Japan) was charged with the ink composition.

The printer was used, in the usual way to deposit a plurality of 10 picoliter ink droplets on the image transfer surface of the release layer, forming an ink image.

After about 30 seconds, the aqueous carrier of the ink had evaporated, living an ink residue film on the image transfer surface of the release layer.

An A4 (210mm x 297 mm) sheet of 135 gram paper (gloss, Condat, le Plessis Robinson, France) was wrapped around a 210mm long - 48 mm radius stainless steel cylinder. The cylinder with paper was manually rolled along the image transfer surface of the release layer so that the ink residue film was transferred to the paper.

To evaluate the print quality, the optical density of the ink transferred to the paper was measured (Model 528 SpectroDensitometer, X-Rite, Grand Rapids, Michigan, USA).

*Effect of pretreatment on print quality*

The optical density of the ink transferred to the paper as described above was compared to the optical density of the ink transferred in substantially the same way using the same ink composition and same image transfer surface of the same release layer, but without the pretreatment that applied the PEI chemical agent. The optical density of the ink was found to be 2.4 times greater when using the pretreatment.

Testing transfer of residue film from a release layer

As discussed above, after ink droplets are applied to a release layer and the ink carrier evaporated, it is necessary to transfer the resulting residue film to the substrate to effect printing. Generally, it is preferred that an image transfer surface of a release layer have a high releasability of an ink residue film to ensure complete transfer of the residue film to the substrate. To evaluate the releasability of ink from image transfer surfaces of release layers according to the teachings herein the following method was used.

An ink residue film was formed on the image transfer surface of a release layer to be tested, substantially as described above. Abutting lengths of 25 mm wide standard pressure-sensitive adhesive tape (Tesa 7475) was applied by light finger pressure on top of the residue film to completely cover the release layer. The release layer with residue film and tape was cleanly cut into 25 mm wide 175 mm long test strips using a sharp knife. Each test strip was rolled twice in each direction using a FINAT test roller at a speed of approximately 10 mm per second. Each thus-rolled test strip was fixed in a tensile tester, and the tensile tester activated to strip the tape from the release layer at an angel of peel of 180° at a rate of 300mm per minute, with release force measured at 10 mm intervals. The average of 5 measurements was calculated.

**Bonding elastomers to rubber surface**

To demonstrate the efficacy of attaching an elastomer layer comprising at least one crosslinked silicone-related polymer to an at least partially cured rubber surface according to the teachings herein, embodiments of the curable adhesive composition as described herein were used to adhere a fluid curable composition comprising at least one silicone-related polymer to a cured acrylic (ACM) rubber layer constituting the uppermost layer of the body of an intermediate transfer member. The ACM rubber was cured, in the usual way, using a combination of sodium stearate and quaternary ammonium salts. Prior to the experiments, the body samples were held at 150°C for 20 hours to ensure full curing of the acrylic rubber layer.

Abrasion resistance of the elastomer layers was tested as described above.

Adhesion of the elastomer layers to the acrylic rubber layer was tested by rubbing with a finger. Results were given based on a scale from 1 to 4, wherein:

1 = poor adhesion (elastomer easily removed from the rubber, rubber surface visible after rubbing);
2 = fair adhesion (elastomer removed with difficulty, rubber surface partially to totally visible after rubbing);
3 = good adhesion (elastomer removed with great effort, only small or localized areas of the rubber layer are visible); and
4 = excellent adhesion (elastomer cannot be removed with rubbing).

<u>Example 1: adhesive composition 1</u>

Fluid curable composition A was formulated by combining silanol-terminated 700-800 cSt polydimethylsiloxane (DMS S-27, Gelest), 9% (of the weight of the silicone) ethylpolysilicate (PSI023, Gelest or Ethylsilicate 48, Colcoat); and 1% (of the weight of the silicone) dioctyl tin bis(acetylacetonate) (CAS No. 54068-28-9, Tib Kat® 223,TIB).

*Thermal curing adhesive composition 1*

A curable adhesive composition 1 was prepared by combining:

| | | |
|---|---|---|
| *Organosilane* | | |
| glycidoxypropyl trimethoxysilane methacryloxypropyl trimethoxysilane | Dynasylan® Glymo (Evonik), Dynasylan® Memo (Evonik) | 48.4% mol 41% (mol) |
| *Condensation cure catalyst* | | |
| titanium diisoproposy (bis-2,4-pentanedionate) | Tyzor AKT855 (Gelest) | 7% (mol) |
| *Thermally activated material / organosilane* | | |
| 6-azidosulfonylhexyl triethoxysilane | SIA0780 (Gelest) | 3.6% (mol) |

*Curing method I: Curing of adhesive composition prior to application of curable polymer composition*

A uniform 1 to 5 micrometer thick layer of adhesive composition 1 was applied to an upper face of a 20 cm by 20 cm sheet of the ACM rubber sheet using a Meyer rod.

The rubber sheet with applied adhesive composition 1 was placed in a curing oven and maintained at an elevated temperature of 120°C for 5 minutes during which time the azido function of the thermally activated material decomposed, generating free radicals that initiated reactions that formed covalent bonds between the organosilane components of the adhesive composition and the cured acrylic rubber.

Subsequently, the rubber sheet was removed from the curing oven and allowed to cool to room temperature (*i.e.,* about 23°C). A uniform 5 to 100 $\mu$m thick layer of the fluid silicone polymer precursor composition was applied on top of the layer of the adhesive composition. The laminated structure comprising the rubber sheet with the layer of

adhesive composition 1 and the layer of fluid curable composition A was allowed to cure 20 hours at room temperature, during which time curable composition A cured to form a solid elastomer bonded to the rubber through the cured adhesive composition 1. The thus partially-cured laminated structure was placed in a curing oven maintained at 140°C for 1 hour to ensure full curing. The thus fully-cured laminated structure was allowed to cool.

Adhesion was tested and rated at 4 "excellent" according to the above scale.

Results of abrasion resistance are presented in Table 1.

*Curing method II: Curing of adhesive composition subsequent to application of polymer composition*

As described above, a uniform 1 to 5 micrometer thick layer of adhesive composition 1 was applied to an upper face of a 20 cm by 20 cm (150 - 250 μm) sheet of a cured acrylic (ACM) rubber layer. A uniform 5 to 100 micrometer thick layer of the fluid curable composition A was applied on top of the uncured layer of adhesive composition 1.

The rubber sheet with the applied composition layers was left for 1 hour at room temperature to ensure that adhesive composition 1 and curable composition A. Then the incipient laminated structure was placed in a curing oven and maintained at an elevated temperature of 140°C for 1 hour during which time the azido function of the thermally activated material decomposed, generating free radicals that initiated reactions that formed covalent bonds between organosilane components of the adhesive composition and the cured acrylic rubber surface. The fluid curable composition cured to form a solid elastomer layer where the organosilane components of adhesive composition 1 bonded to the elastomer layer through the respective alkoxysilane functions. The thus fully-cured laminated structure was allowed to cool.

Adhesion was tested and rated at 4 "excellent" according to the above scale. Results of abrasion resistance are presented in Table 1.

TABLE 1

| **Gloss (75°)** | **Abrasion cycles numbers** | | | | | | **Gloss Loss** |
|---|---|---|---|---|---|---|---|
| **Adhesive 1** | **0** | **200** | **400** | **600** | **800** | **1000** | **%** |
| **curing method I** | 88.5 | 86.8 | 84.4 | 82.1 | 79.3 | 76.8 | 13.3 |
| **curing method II** | 88.5 | 87.1 | 86.1 | 84.8 | 83.7 | 81.9 | 7.5 |

Example 2: adhesive composition 2

A curable adhesive composition 2 was prepared by combining:

| | | |
|---|---|---|
| *organosilane* | | |
| glycidoxypropyl trimethoxysilane | Dynasylan Glymo (Evonik) | 48.4% mol |
| methacryloxypropyl trimethoxysilane | Dynasylan MEMO (Evonik) | 46% mol |
| *Condensation cure catalyst* | | |
| dibutyl tin dilaurate | (Sigma-Aldrich) | 2% mol |
| *Thermally activated material / organosilane* | | |
| 6-azidosulfonylhexyl triethoxysilane | SIA0780 (Gelest) | 3.6% mol |

Adhesion of curable composition A to the rubber surface using adhesive composition 2 using both curing methods I and II was tested as described above for adhesive composition 1. The results for adhesive composition 2 were substantially identical to those of adhesive composition 1.

Example 3: adhesive composition 3

A curable adhesive composition 3 was prepared by combining (per mol):

| | | |
|---|---|---|
| *Organosilane* | | |
| glycidoxypropyl trimethoxysilane | Dynasylan® Glymo (Evonik) | 31.1% |
| Vinyltrimethoxysilane | Dynasylan® Memo (Evonik) | 49.5% |
| *Condensation cure catalyst* | | |
| titanium diisopropoxy (bis-2,4-pentanedionate) | Tyzor AKT855 (Gelest) | 4.7% |

(continued)

| | | |
|---|---|---|
| *Thermally activated material (peroxide)* | | |
| Dibenzoyl peroxide | BP 75% water (ACROS) | 2.7% |
| Water* from peroxide | | 12% |

Fluid curable composition B was formulated by combining polydimethylsiloxane silanol-terminated 700-800 cSt (DMS S-27, Gelest), 7% (of the weight of the silicone) ethylpolysilicate (PSI023, Gelest or Ethylsilicate 48, Colcoat); 6% (of the weight of the silicone) of Oleic Acid (CAS No 112-80-1, JT Baker) and 1.6% (of the weight of the silicone) dibutyl tin dilaurate (CAS No. 77-58-7, Sigma Aldrich).

A uniform 1 to 5 micrometer thick layer of adhesive composition 3 was applied to an upper surface of a 20 cm by 20 cm sheet of a cured acrylic (ACM) rubber using a Meyer rod.

In accordance with curing method I, the rubber sheet with applied adhesive composition 3 was placed in a curing oven and maintained at an elevated temperature of 90°C for 2 minutes during which time the dibenzoyl peroxide material decomposed, generating free radicals that initiated reactions that formed covalent bonds between organosilane components of the adhesive composition and the cured acrylic rubber.

Subsequently, the rubber sheet was removed from the curing oven and allowed to cool to room temperature. A uniform 5 to 100 $\mu$m thick layer of the fluid curable composition B was applied on top of the layer of the adhesive composition. The incipient laminated structure comprising the rubber sheet with the applied layers was allowed to cure 1 hour at room temperature, during which time the fluid curable composition B cured to form a solid elastomer where which the organosilane components of adhesive composition 3 bonded to the elastomer through the respective alkoxysilane functional groups.

The thus partially-cured laminated structure was placed in a curing oven maintained at 140°C for 1 hour to ensure full curing. The thus fully-cured laminated structure was allowed to cool. Adhesion was tested and rated at 4 "excellent" according to the above scale.

Example 4: adhesive composition 4, curing method I

A silane-terminated polymer (STP) fluid curable composition was bonded to a cured acrylic (ACM) rubber layer using a thermal curing adhesive composition.

STP fluid curable composition C was prepared by combining a silane-terminated polypropylene glycol polymer of 20 000 MPa.s viscosity (ST XP 2/1228 grade, Hanse Chemie), 0.5% (of the weight of the STP polymer) of BYK®-333 (BYK) silicone surfactant additive (for wettability and leveling), 2% (of the weight of the STP polymer) of polydimethylsiloxane silanol-terminated 700-800 cSt (DMS S-27, Gelest), 5% (of the weight of the STP polymer) of ethylpolysilicate (PSI023, Gelest or Ethylsilicate 48, Colcoat); and 2% (of the weight of the silicone) of dibutyl tin dilaurate 95% (CAS 77-58-7, Sigma Aldrich).

*Thermal curing adhesive composition 4*

A curable adhesive composition 4 was prepared by combining (per mol):

| | | |
|---|---|---|
| *Organosilane* | | |
| glycidoxypropyl trimethoxysilane | Dynasylan® Glymo (Evonik) | 41% |
| methacryloxypropyl trimethoxysilane | Dynasylan® Memo (Evonik) | 34.7% |
| *Condensation cure catalyst* | | |
| titanium diisoproposy (bis-2,4-pentanedionate) | Tyzor AKT855 (Gelest) | 5.9% |
| *Thermally activated material (peroxide)* | | |
| Dibenzoyl peroxide | BP 75% water (ACROS) | 3.3% |
| Water * from peroxide | | 15% |

*Curing method I: Curing of adhesive composition prior to application of curable polymercomposition*

A uniform 1 to 5 micrometer thick layer of adhesive composition 4 was applied to an upper face of a 20 cm by 20 cm sheet of sheet of a cured acrylic (ACM) rubber layer using a Meyer rod.

The rubber sheet with applied adhesive composition 4 was placed in a curing oven and maintained at an elevated temperature of 100°C for 5 minutes during which time the dibenzoyl peroxide material decomposed, generating

free radicals that initiated reactions that formed covalent bonds between organosilane components of the adhesive composition and the cured acrylic rubber.

Subsequently, the rubber sheet was removed from the curing oven and allowed to cool to room temperature. A uniform 5 to 100 μm thick layer of STP fluid curable composition C was applied on top of the layer of the composition. The laminated structure comprising the rubber sheet with the layers was allowed to cure 20 hours at room temperature, during which time curable composition C cured to form a solid elastomer layer where the organosilane components of adhesive composition 4 bonded to the silicone polymer layer through the respective alkoxysilane functions.

The thus partially-cured laminated structure was placed in a curing oven maintained at 80°C for 1 hour, then at 120°C for 1 hour, and finally at 150°C for 1 hour to ensure full curing. The thus fully-cured laminated structure was allowed to cool. Adhesion was tested and rated at 3 "good" according to the above scale. Abrasion resistance was tested, and the results presented in Table 2.

TABLE 2

| **Gloss (75°)** | **Abrasion cycles numbers** | | | | | | **Gloss Loss** |
|---|---|---|---|---|---|---|---|
| **Adhesive 4 STP 1** | **0** | **200** | **400** | **600** | **800** | **1000** | % |
| **curing method I** | 92.0 | 90.4 | 89.2 | 87.5 | 87.5 | 86.9 | 5.6 |

Example 5: adhesive composition 4, curing method II

As for Example 4, but using curing method II: curing of adhesive composition 4 subsequent to the application of STP fluid curable composition C.

As described above, a uniform 1 to 5 micrometer thick layer of adhesive composition 4 was applied to an upper face of a 20 cm by 20 cm (150 - 250 μm) sheet of a cured acrylic (ACM) rubber layer. A uniform 5 to 100 micrometer thick layer of STP fluid curable composition C was applied on top of the uncured layer of adhesive composition 4.

The rubber layer with applied layers was partially cured for 20 hours at room temperature. The partially cured laminated structure was placed in a curing oven and maintained at an elevated temperature of 80°C for 1 hour, then at 120°C for 1 hour and finally at 150°C for 1 hour to ensure decomposition of dibenzoyl peroxide, generating free radicals that initiated reactions that formed covalent bonds between organosilane components of the adhesive composition 4 and the cured acrylic rubber and to achieve full curing. The thus fully-cured laminated structure was allowed to cool.

Adhesion was tested and rated at 1 "poor" according to the above scale. The failure of adhesion can be attributed to the presence of water that degraded the urethane link of the STP polymer during heating. The best results of adhesion were obtained when the water in the adhesive was removed before applying the STP fluid curable composition.

Example 6: adhesive composition 6

This example tested adhesion of STP fluid curable composition C using a thermal curing adhesive composition where the Dynasylan MEMO was replaced by Dynasylan VTMO (Vinyltrimethoxysilane) (CAS 2768-02-7)

*Thermal curing adhesive composition 6 (Per mol)*

| | | |
|---|---|---|
| *Organosilane* | | |
| glycidoxypropyl trimethoxysilane | Dynasylan® Glymo (Evonik) | 33.3% |
| Vinyltrimethoxysilane | Dynasylan® VTMO (Evonik) | 47.1% |
| *Condensation cure catalyst* | | |
| titanium diisoproposy (bis-2,4-pentanedionate) | Tyzor AKT855 (Gelest) | 4.8% |
| *Thermally activated material (peroxide)* | | |
| Dibenzoyl peroxide | BP 75% water (ACROS) | 2.7% |
| Water * from peroxide | | 12.1% |

A laminated structure of a layer of cured STP fluid curable composition C attached to a sheet of cured acrylic rubber with adhesive composition 6 was prepared using curing method I, substantially as described above.

Adhesion was tested and rated at 3 "good" according to the above scale.

Example 7: adhesive composition 6, curing method II

A laminated structure of a layer of cured STP fluid curable composition C attached to a sheet of cured acrylic rubber with adhesive composition 6 was prepared using curing method II, substantially as described above.

Adhesion was tested and rated at 1 "poor" according to the above scale, confirming the negative effect of water on STP polymers during the heating

Example 8: adhesive composition 4, dilute polymer precursor composition

Dilute STP polymer precursor composition D was formulated by combining a silane-terminated polypropylene glycol polymer of 20,000 MPa.s viscosity (ST XP 2/1228 grade from Hanse Chemie), 20% (of the weight of the STP polymer) of Ethyl Acetate, 0.5% (of the weight of the STP polymer) of BYK-333 (BYK) silicone surfactant additive (for wettability and leveling), 2% (of the weight of the STP polymer) of polydimethylsiloxane silanol-terminated 700-800 cSt (DMS S-27, Gelest), 5% (of the weight of the STP polymer) of ethylpolysilicate (PSI023, Gelest or Ethylsilicate 48, Colcoat); and 2% (of the weight of the silicone) of dibutyl tin dilaurate 95% (CAS 77-58-7, Sigma Aldrich).

A laminated structure of a layer of cured dilute STP fluid curable composition D attached to a sheet of cured acrylic rubber with adhesive composition 4 was prepared using curing method I, substantially as described above. Adhesion was tested and rated at 3 "good" according to the above scale.

Example 9: adhesive composition 6, dilute polymer precursor composition

A laminated structure of a layer of cured dilute STP fluid curable composition D attached to a sheet of cured acrylic rubber with adhesive composition 6 was prepared using curing method I, substantially as described above. Adhesion was tested and rated at 3 "good" according to the above scale.

Example 10: adhesive composition 10

Adhesive composition 10 was prepared by combining:

| | | |
|---|---|---|
| *Condensation cure catalyst* | | |
| dibutyl tin dilaurate | (Sigma-Aldrich) | 2% mol |
| *Thermally activated material / organosilane* | | |
| 6-azidosulfonylhexyl triethoxysilane | SIA0780 (Gelest) | 3.5% mol |
| *Diluent* | | |
| Mixture of o-, m- and p-Xylene | 214736 (Sigma-Aldrich) | 94.5% mol |

A uniform 1 to 5 micrometer thick layer of adhesive composition 10 was applied to an upper face of a 20 cm by 20 cm sheet of the ACM rubber sheet using a Meyer rod.

The rubber sheet with applied adhesive composition 10 was placed in a curing oven and maintained at an elevated temperature of 120°C for 5 minutes during which time the azido function of the thermally activated material decomposed, generating free radicals that initiated reactions that formed covalent bonds between organosilane components of the adhesive composition and the cured acrylic rubber.

Subsequently, the rubber sheet was removed from the curing oven and allowed to cool to room temperature (i.e. about 23°C). A uniform 5 to 100 μm thick layer of the fluid curable silicone polymer composition A was applied on top of the layer of the adhesive composition.

The laminated structure comprising the rubber sheet with the layer of adhesive composition 10 and the layer of fluid curable composition A was allowed to cure 20 hours at room temperature, during which time curable composition A cured to form a solid elastomer bonded to the rubber through the cured adhesive composition 10.

The thus partially-cured laminated structure was placed in a curing oven maintained at 140°C for 1 hour to ensure full curing. The thus fully-cured laminated structure was allowed to cool.

Adhesion was tested and rated at 3 "good" according to the above scale.

Example 11: adhesive composition 11 (thermally activated material is an azo compound)

Adhesive composition 11 was prepared by combining (per mol):

| | | |
|---|---|---|
| *Organosilane* | | |
| glycidoxypropyl trimethoxysilane | Dynasylan® Glymo (Evonik) | 44.1% |
| methacryloxypropyl trimethoxysilane | Dynasylan® Memo (Evonik) | 37.3% |
| *Condensation cure catalyst* | | |
| titanium diisopropoxy (bis-2,4-pentanedionate) | Tyzor AKT855 (Gelest) | 6.4% |
| *Thermally activated material (Azo compound)* | | |
| 2,2 Azobis(2-methylpropionitrile) [solution 0.2M in Toluene] (Sigma Aldrich) | | 0.3% |
| Toluene | | 12.1% |

Fluid curable composition E was prepared by combining polydimethylsiloxane silanol-terminated 700-800 cSt (DMS S-27, Gelest), 7% (of the weight of the silicone) ethylpolysilicate (PSI023, Gelest or Ethylsilicate 48, Colcoat); 3% (of the weight of the silicone) of Oleic Acid (CAS No 112-80-1, JT Baker) and 1.6% (of the weight of the silicone) dibutyl tin dilaurate (CAS No. 77-58-7, Sigma Aldrich).

A laminated structure of a layer of fluid curable composition E attached to a sheet of cured acrylic rubber with adhesive composition 11 was prepared using curing method I. The rubber sheet with applied adhesive composition 11 was placed in a curing oven and maintained at an elevated temperature of 120°C for 5 minutes during which time the 2,2'-Azobis(2-methylpropionitrile) material decomposed, generating $N_2$ and free radicals that initiated reactions that formed covalent bonds between organosilane components of the adhesive composition 11 and the cured acrylic rubber.

Subsequently, the rubber sheet was removed from the curing oven and allowed to cool to room temperature. A uniform 5 to 100 μm thick layer of fluid curable composition E was applied on top of the layer of the adhesive composition. The laminated structure comprising the rubber sheet with the layers was allowed to cure 1 hour at room temperature, during which time fluid curable composition E cured to form a solid elastomer layer where the organosilane components of adhesive composition 11 bonded to the silicone polymer layer through the respective alkoxysilane functions. The thus partially-cured laminated structure was placed in a curing oven maintained at 140°C for 1 hour to ensure full curing of the fluid silicone polymer precursor composition. The thus fully-cured laminated structure was allowed to cool.

Adhesion was tested and rated at 3 "good" according to the above scale. Abrasion resistance was tested and results presented in Table 3.

TABLE 3

| Gloss (75°) | Abrasion cycles numbers | | | | | | Gloss Loss |
|---|---|---|---|---|---|---|---|
| **Adhesive 11** | **0** | **200** | **400** | **600** | **800** | **1000** | **%** |
| **curing method I** | 87.5 | 79.6 | 76.6 | 74.0 | 72.3 | 71.6 | 18.2 |

Example 12: Adhesive composition 12

Fluid curable composition F was prepared by combining polydimethylsiloxane silanol-terminated 700-800 cSt (DMS S-27, Gelest), 10% (of the weight of the silicone) ethylpolysilicate (PSI023, Gelest or Ethylsilicate 48, Colcoat); and 0.8% (of the weight of the silicone) dioctyl tin bis(acetylacetonate) (CAS No. 54068-28-9, Tib Kat® 223, TIB).

Adhesive composition 12 was prepared by combining 95% 3-Aminopropyltriethoxysilane and 5% azidosulfonylhexyltriethyoxysilane. As described above, a uniform 1 to 5 micrometer thick layer of adhesive composition 12 was applied to an upper face of a 20 cm by 20 cm (150 - 250 μm) sheet of a cured acrylic (ACM) rubber layer.

A uniform 5 to 100 micrometer thick layer of fluid curable composition F was applied on top of the uncured layer of adhesive composition 12. The rubber sheet with applied layers was partially cured for 1h at room temperature and then placed in a curing oven and maintained at an elevated temperature of 140°C for 1 hour as described above. The thus fully-cured laminated structure was allowed to cool.

Adhesion was tested and rated at 4 "excellent" according to the above scale.

Example 13: adhesive composition 13

Adhesive composition 13 was formulated by combining 95% 3-Aminopropyltriethoxysilane (Dynasylan® AMEO, Evonik) and 5% 6-azidosulfonylhexyl triethoxysilane (SIA0780, Gelest).

Fluid curable composition G was prepared by combining GP 657 (Genesee), GP 397 (Genesee), PSI-021 (Gelest) and benzenepropanoic acid, 3,5-bis(1,1-dimethylethyl)-4-hydroxy-,C7-C9 branched alkyl ester (Irganox® 1135, Ciba/BASF).

As described above, a uniform 1 to 5 micrometer thick layer of adhesive composition 13 was applied to an upper face of a 20 cm by 20 cm (150 - 250 $\mu$m) sheet of a cured acrylic (ACM) rubber layer. A uniform 5 to 100 micrometer thick layer of fluid curable composition G was applied on top of the uncured layer of adhesive composition 13. The rubber sheet with applied layers was partially cured for 1h at room temperature and then placed in a curing oven and maintained at an elevated temperature of 140 °C for 1 hour. The thus fully-cured laminated structure was allowed to cool.

Adhesion was tested and rated at 4 "excellent" according to the above scale.

Example 14: Adhesive composition 14

Curable adhesive layer composition 14 was formulated by combining 95% 3-Aminopropyltriethoxysilane (Dynasylan® AMEO, Evonik) and 5% 2-hydroxy 2-methyl 1-phenyl 1-propanol photoinitiator (Darocur® 1173 from Ciba/BASF).

As described above, a uniform 1 to 5 micrometer thick layer of adhesive composition 14 was applied to an upper face of a 20 cm by 20 cm (150 - 250 $\mu$m) sheet of a cured acrylic (ACM) rubber layer. A uniform 5 to 100 micrometer thick layer of fluid curable composition G was applied on top of the uncured layer of adhesive composition 14.

The rubber sheet with applied layers was partially cured for 1h at room temperature and then 7 minutes with infrared heating, then placed in a curing oven and maintained at an elevated temperature of 140 °C for 1 hour. The thus fully-cured laminated structure was allowed to cool. Adhesion was tested and rated at 4 "excellent" according to the above scale.

**Curable polymer compositions and intermediate transfer member release layers**

As detailed below, a number of curable polymer compositions according to the teachings herein were prepared.

Sheets of blanket bodies were acquired from Trelleborg including:

a) a 40 micrometer thick low-friction inner layer;
b) contacting a 250 micrometer thick reinforcement layer including a 200 micrometer thick woven 200 gram cotton fabric impregnated with ACM rubber;
c) contacting a 350 micrometer thick compressible layer of ACM rubber sponge (P=2 kg/$cm^2$);
d) contacting a 100 micrometer conductive layer of rubber having a resistivity of 500 Ohm/cm; and
e) contacting a 100 micrometer conformational layer of soft cured ACM rubber, of 30 Shore A.

The upper surface of conformational layer of cured acrylic rubber defined the surface to which embodiments of release layers according to the teachings herein were attached, with or without the use if adhesive. Before use, the bodies were held in a curing oven maintained at 150°C for 20 hours to ensure complete curing of conformational layer.

*Silanol-terminatedpolydialkyl silicone release layers (Table 4)*

Three curable polymer compositions including a silanol-terminated polymer #1, #2 and #3 were made as described in Table 4, including DMS S-27 (Gelest) or Silopren E0.7 (Momentive) silanol-terminated polydimethylsiloxane, 9% (of the weight of the silicone related polymer) polyethylsilicate crosslinker, and 1% (of the weight of the silicone related polymer) dioctyl tin bis(acetylacetonate) fast-curing condensation catalyst. Composition #3 further included 2% oleic acid.

The pot life of compositions #1, #2 and #3, *i.e.,* the period of time for which the uncured polymer composition remained flowable, was determined by weighing about 10g of the composition into an aluminium plate and allowing it to cure at room temperature. Samples were withdrawn periodically with a pipette and checked for flowability.

To make an intermediate transfer member, a uniform 1 to 5 micrometer thick layer of a thermal-curing adhesive composition (example 1 above) was applied to the upper face of the conformation layer of the cured blanket bodies using a Meyer rod.

The polymer compositions #1, #2 and #3 were each applied as a uniform 10 to 15 micrometer thick layer using a Meyer rod on top of the uncured layer of thermal-curing adhesive composition to make a respective incipient blanket.

The incipient blankets was kept for 1 hour at room temperature and relative humidity between 30-70%, and then cured for 2 hours at 140°C (or 1 hour at 150°C), during which time the curable polymer composition cured to form an elastomer layer having a uniform thickness of between 10 and 15 $\mu$m of elastomer, as described herein, constituting a release layer of the blanket, that was adhered to the body portion by the cured adhesive composition. The thus fully-cured laminated structure was allowed to cool. The release layers were examined and demonstrated a very low level of contamination by dirt during the curing process, attributable to the short time required for curing.

A cured sample of each of the elastomers was weighed and then stored in a curing oven for 24 hours at 200°C.

No substantial weight loss was noted after the 24 hours, indicating that the release layers made of the elastomers are thermally stable.

Adhesion of the release layers was tested by hand as described above. All three release layers #1, #2 and #3 were found to have excellent adhesions, see Table 4.

The apparent contact angle of a standing drop of distilled water, as well as the advancing and receding contact angles of a rolling drop of water were tested in the usual way, see Table 4.

The blankets were formed into a loop in the usual way and mounted in a printing system as described in WO2013/132418*. Prior to application of an ink composition, the release layer of each blanket was treated with 0.1% polyethylenimine in water solution as a protonatable chemical agent. Each one of release layers #1, #2 and #3 demonstrated superior printing performance using a ink compositions comprising a water carrier. Of particular note was the observed very high print quality as seen from images printed on paper and evaluated in the usual way. Further, the tested release layers exhibited exceptional abrasion resistance (*i.e.* Gloss Loss less than 10% after 1000 cycles), see Table 4.

The force required to transfer an ink residue film to an adhesive tape was tested as above, as a measure of releasability of ink applied to the surface (after treatment with the protonatable chemical agent). The force was found to be less than 0.04 N, indicative of excellent releasability.

TABLE 4

| | Blanket **#1** | Blanket **#2** | Blanket **#3** |
|---|---|---|---|
| Trials DMS-S27 (silanol terminated pol ydimethylsil oxane, Gelest) Silopren E0.7 (silanol terminated pol ydimethy lsil oxane, Momentive) Polyethylsilicate-48 Oleic Acid (curing inhibitor) condensation cure dioctyl tin bis (acetylacetonate), (TIB) | 100 | - | 100 |
| | - | 100 | - |
| | 9 | 9 | 9 |
| | | - | 2 |
| | 0.8 | 0.8 | 0.8 |
| ***Pot life (minutes)*** | 47 | 60 | 300 |
| Release layer thickness (μ) | 10 | 12 | 15 |
| ***Initial Gloss %*** | 88.5 | 89 | 88.2 |
| Abrasion Gloss Loss % 75° after 1000 cycles | -4.70% | -5.70% | -3.2% |
| Adhesion (Hand) | 4 | 4 | 4 |
| Contact Angle (water RT) | 114 - 103 | 109.3-102 | 112 - 101 |
| Advancing Contact Angle (water RT) | 105-115 | 105-115 | 105-115 |
| Receding Contact Angle (Water RT) | 40-50 | 40-50 | 40-50 |
| Ink residue release force | < 0.04 N | < 0.04 N | < 0.04 N |
| Relative humidity (%) during curing at RT | 24 | 30 | 26 |

*Silyl-terminated polyurethane and polyether release layers (Table 5)*

Four curable polymer compositions were made, two (#4, #5) including a silanol terminated polyurethane and two (#6, #7) including a silyl terminated polyether and 2% (of the weight of the silicone related polymer) dibutyl tin dilaurate fast-curing condensation catalyst.

To make an intermediate transfer member, a uniform 1 to 5 μm thick layer of an adhesive composition (Table 5) was applied to the upper face of the conformation layer of the cured blanket bodies using a Meyer rod. The polymer compositions #4, #5, #6 and #7 were each applied as a uniform 20 to 40 μm thick layer using a Meyer rod on top of the uncured layer of thermal-curing adhesive composition to make a respective incipient blanket.

The incipient blankets was kept for 1 hour at room temperature and relative humidity between 30-70%, and then cured for 2 hours at 140°C (or 1 hour at 150°C), during which time the curable polymer composition cured to form an elastomer layer having a uniform thickness of between 20 and 40 μm of elastomer, as described herein, constituting a release layer of the blanket, that was adhered to the body portion by the cured adhesive composition. The thus fully-cured laminated structure was allowed to cool. The release layers were examined and demonstrated a very low level

of contamination by dirt during the curing process, attributable to the short time required for curing.

Results of the following tests are presented in Table 5, below. A cured sample of each of the elastomers was weighed and then stored in a curing oven for 24 hours at 150°C. The loss of weight of the elastomer gives a measure of the thermal stability.

Adhesion of the release layers was tested by hand as described above. Release layers #4, #5 and #6 were found to have fair adhesion and release layer #7 good adhesion. The apparent contact angle of a standing drop of distilled water, as well as the advancing and receding contact angles of a rolling drop of water were tested in the usual way. The blankets were mounted in a printer and formed into a loop as explained in previous experiment. Prior to application of an ink composition, the release layer of each blanket was treated with 0.1% polyethylenimine in water solution as a protonatable chemical agent. Each one of release layers #4, #5, #6 and #7 demonstrated superior printing performance using a ink compositions comprising a water carrier. However, the release of ink residue was insufficient. Specifically, a substantial amount if ink residue was left on the image transfer surface after a relatively low number of printing cycles.

The force required to transfer an ink residue film to an adhesive tape was tested as above, as a measure of releasability of ink applied to the surface (after treatment with the protonatable chemical agent). The force was found to be between 0.6 and 7 N, an unacceptably high releasability.

TABLE 5

| Trials | Blanket **#4** | Blanket **#5** | Blanket **#6** | Blanket **#7** |
|---|---|---|---|---|
| Adhesive | SS4179 (Momentive) | SS4179 (Momentive) | SS4179 (Momentive) | example 1, above |
| Desmoseal 2749 (silyl terminated polyurethane, Bayer) | 100 | - | - | - |
| SPUR 3200 HM (silyl terminated pol yurethane, Momentive) | - | 100 | - | - |
| ST XP2/1228 (silyl teminated polyether) (Evonik) | - | - | 100 | 100 |
| DMS-S27 (silanol terminated polydimethylsiloxane, Gelest) | - | - | - | 2 |
| Polyethylsilicate-48 | - | - | 2 | 5 |
| Irganox 1141 (antioxidant, BASF) | 0.5 | 0.5 | 0.5 | - |
| BYK333 (surfactant, BYK) | 0.5 | 0.5 | 0.5 | 0.5 |
| condensation cure Dibutyl Tin Dilaurate (SigmaAldrich) | 2 | 2 | 2 | 2 |
| Release layer thickness ($\mu$) | 20 | 34 | 30 | 38 |
| ***Initial Gloss %*** | 89 | 92 | 94 | 92 |
| Abrasion Gloss Loss % (75°) | -80% | -45% | -31% | -12% |
| Adhesion (Hand) | 2 | 2 | 2 | 3 |
| Contact Angle (water RT)* | 95 | 90 -> 80 after 2min | 90 -> 80 after 2min | 98 -> 85 |
| Advancing Contact Angle (water RT) | 88 | 94 | 90 | 90 |
| Receding Contact Angle (Water RT) | 26 | 35 | 30 | 30 |
| Ink residue release force | 0.6 N | 0.8 N | 6N | 6N |
| Thermal stability weight Loss after 24h at 150C (%) (TGA) | -20% | -17% | -4% | -4% |
| printed dot size ($\mu$m) with 12pl ink droplet | 60 | - | - | 58 |

**Anisotropic reinforcement layers**

Experiments relating to anisotropic reinforcement layers were performed. The results are summarized in Table 6, below.

*Tensile Tests*

Mechanical properties of anisotropic reinforcement layers according to the teachings herein were assessed using a tensile meter recording the elongation of a tested sample in any desired direction over time. Unless otherwise indicated the tests were performed under a constant load. A 3 cm wide strip of fabric constituting an anisotropic reinforcement layer was caught at both ends by gripping clamps. One end was hooked at a fixed position in the tensile meter. The other end of the tested strip of fabric was submitted to a constant load at a predetermined temperature. The initial length of the strip between the two clamps internal edges at rest was measured. The increasing distance between the clamps as a result of applied tension was monitored over time and plotted. The samples were typically tested with tension applied in the direction corresponding to the longitudinal (intended printing) direction of an intermediate transfer member in which such fabric would serve as reinforcement layer. Some samples were also tested in the lateral direction.

*Control sample - 750N at 23 °C.*

A blanket intermediate transfer member comprising two plies of a woven cotton fabric was subjected to a constant load of 750N in the longitudinal direction at ambient temperature of about 23°C. This control sample corresponds to a body comprising a mildly anisotropic reinforcement layer, since the cotton fibers in the longitudinal direction (the direction of applied tension during the test) were pre-stretched during fabric manufacture in an attempt to prevent creep. The cotton fibers in the lateral direction were plain cotton fibers having natural elasticity.

Results showing longitudinal elongation of the control sample with time are presented in Figure 17. The first part of the graph showing rapid and substantial longitudinal elongation corresponds to the immediate extension of the sample and relates to the elastic properties of the longitudinal cotton fibers. The first "shoulder" in Figure 17 (labeled 2) corresponds to the crimp of the control sample, i.e., the ability of a woven fabric to elongate without irreversible damage. The subsequent slope in Figure 17 (labeled 3) corresponds predominantly to the creep of the sample, where each step in Figure 17 on this slope (labeled 4) indicates partial tearing or creep failure. A vertical slope (as seen for tests at 150°C) corresponds to final failure and tearing of the sample.

*Control sample - 350N at 150 °C*

The control sample as described above was subjected to a constant tension of 350N in the longitudinal direction at an elevated temperature of about 150°C. Results showing elongation of the control sample with time is shown in Figure 18.

*Isolated single ply fabric layer*

An isolated (not part of a blanket) single ply cotton fabric (as used in the control sample) was subjected to a constant tension of 750N at 23°C. The single ply fabric failed in less than one hour, as shown in Figure 19.

*Single ply isotropic Kevlar® fabric at 750N at 23°C*

An isolated (not part of a blanket) single ply Kevlar® fabric was subjected to a constant tension of 750N at 23 °C. Results are shown in Figure 20.

*Single ply isotropic glass fabric at 750N at 23°C*

An isolated (not part of a blanket) single ply glass fabric was subjected to a constant tension of 750N at about 23°C. Results are shown in Figure 21.

*Anisotropic hybrid sample at 350N at 23°C, longitudinal direction*

A fabric comprising unidirectional glass fibers in the longitudinal direction (20 yarns per cm) and twisted polyamine fibers in the lateral direction (ca. 12 yarns per cm) was subjected to a constant tension of 350N at about 23°C in the longitudinal direction, parallel to the glass fibers. The initial length of sample between the internal edges of the

two grippers was 30 mm. Results are shown in Figure 22.

*Anisotropic hybrid sample - 350N at 23°C, lateral direction*

The fabric comprising unidirectional glass fibers in the longitudinal direction and twisted polyamine fibers in the lateral direction was subjected to a constant tension of 350N at about 23°C in the lateral direction, parallel to the polyamine fibers. The initial length of sample between the internal edges of the two grippers was 60 mm. Results are shown in Figure 23.

*Approximate Slope*

The approximate slope (angle formed by the curve over an horizontal line) for each of the tested samples was evaluated at different time intervals to ease a rough comparison between the elongation behaviour of the above-described samples.

TABLE 6

| | Control, Cotton in Blanket, Fig. 17 | Glass/Nylon in Blanket Fig. 22 | Glass/Nylon in Blanket Fig. 23 | Isotropic Kevlar Fabric, Fig. 20 | Isotropic Glass Fabric Fig. 21 |
|---|---|---|---|---|---|
| | 750N @ RT | 350N @ RT | 350N @ RT | 750N @ RT | 750N @ RT |
| longitudinal fibers | Prestretched Cotton | Glass fiber | Nylon fibers | Kevlar | Glass fiber |
| Between 1 - 2 hrs | 13.74° | 4.82° | 6.83° | 5.71° | 0.57° |
| Between 2 - 3 hrs | 18.82° | 4.82° | 5.13° | 3.43° | 2.86° |
| Between 3 - 4 hrs | 15.52° | 1.38° | 6.15° | 2.29° | NA |
| Between 4 - 5 hrs | 12.53° | <1° | 12.66° | <1° | NA |
| Between 5 - 6 hrs | 9.46° | <1° | Failure | <1° | NA |
| Between 1 - 3 hrs | 16.50° | 4.85° | 6.22° | 4.23° | 2.06° |
| Between 1 - 5 hrs | 15.03° | 3.30° | 7.83° | 7.61° | NA |
| Between 1 - 6 hrs | 14.14° | 2.53° | NA | 6.29° | NA |

**Claims**

1. An intermediate transfer member for a printing system having a support structure that includes rollers about which the transfer member is mounted during use, the transfer member having the form of an elongate flat strip of which the ends are connectable to one another, when the transfer member is installed in the printing system, to form a continuous loop, the intermediate transfer member comprising a body having a first surface attached to and supporting a release layer that has an image transfer surface and a second surface for contacting the rollers of said printing system when mounted therein; the body comprising one or more of a conformational layer, a compressible layer, a thermally-insulating layer, a thermally-conductive layer, an electrically-conductive layer, a low-friction layer, a high-friction layer, a reinforcement layer and a connective layer; when maintained at a temperature of 150°C, the intermediate transfer member is configured to stretch in the longitudinal direction by not more than about 1.5% under 100 Newton per cm with longitudinally-applied tension and is configured to elastically stretch in a lateral direction by not less than about 10% under 2 Newton per cm length applied tension.

2. The intermediate transfer member of claim 1, wherein the ratio of the longitudinal dimension to the lateral dimension of the intermediate transfer member is at least about 7:1, preferably at least about 8:1, more preferably at least about 9:1, and most preferably at least about 10:1.

3. The intermediate transfer member of claim 1 or claim 2, wherein said body includes a plurality of primary fibers oriented substantially parallel to said longitudinal direction, and optionally, wherein said primary fibers comprise a material selected from the group consisting of meta-aramid, para-aramid, polyamide, glass fibers, carbon-fiber fibers, ceramic fibers, metal fibers and combinations thereof.

4. The intermediate transfer member of claim 4, wherein said body further comprises at least one supporting component optionally comprising: a non-fibrous elastomer optionally comprising a material selected from the group consisting of silicone rubber, neoprene rubber, hydrogenated nitrile butadiene rubber (HNBR), nitrile butadiene rubber (NBR), alkyl acrylate copolymer (ACM), ethylene propylene diene monomer (EPDM) and combinations thereof.

5. The intermediate transfer member of claim 5, wherein said primary fibers are impregnated with said elastomer, and/or wherein said primary fibers are embedded within said elastomer.

6. The intermediate transfer member claim 4 or claim 5, wherein said body or at least one of said supporting component comprises secondary fibers, distinct from said primary fibers.

7. The intermediate transfer member of claim 6, wherein said secondary fibers are oriented substantially not-parallel to said primary fibers, and optionally, are oriented to diverge by at least about 30° from parallel to said primary fibers.

8. The intermediate transfer member of claim 7, wherein said secondary fibers are oriented substantially parallel to said lateral direction.

9. The intermediate transfer member of any one of claims 6 to 8, wherein said secondary fibers are substantially elastic.

10. The intermediate transfer member of any one of claims 4 to 9, wherein at least one of said supporting component comprising primary and secondary fibers aggregated together to constitute a single ply of fabric.

11. The intermediate transfer member of claim 10, wherein said primary fibers and said secondary fibers are aggregated together by weaving, thereby together constituting a woven fabric.

12. The intermediate transfer member of any one of claims 6 to 11, wherein at least some of said primary fibers are located in a distinct ply of primary fibers substantially devoid of said secondary fibers.

## Patentansprüche

1. Zwischenübertragungselement für ein Drucksystem, das eine Trägerstruktur aufweist, die Walzen beinhaltet, um die das Übertragungselement in der Verwendung montiert ist, wobei das Übertragungselement die Form eines länglichen flachen Streifens aufweist, dessen Enden miteinander verbunden werden können, wenn das Übertragungselement in dem Drucksystem installiert ist, um eine kontinuierliche Schleife zu bilden, das Zwischenübertragungselement umfassend einen Körper, der eine erste Oberfläche aufweist, die an einer Freisetzungsschicht angebracht ist und diese trägt, die eine Bildübertragungsoberfläche und eine zweite Oberfläche zum Berühren der Walzen des Drucksystems aufweist, wenn sie darin montiert ist; der Körper umfassend eine oder mehrere von einer Anpassungsschicht, einer komprimierbaren Schicht, einer wärmeisolierenden Schicht, einer wärmeleitenden Schicht, einer elektrisch leitenden Schicht, einer Schicht mit geringer Reibung, einer Schicht mit hoher Reibung, einer Verstärkungsschicht und einer Verbindungsschicht aufweist; wobei das Zwischenübertragungselement, wenn es auf einer Temperatur von 150 °C gehalten wird, konfiguriert ist, sich bei einer ausgeübten Spannung von 100 Newton pro cm in Längsrichtung nicht mehr als etwa 1,5 % auszudehnen und konfiguriert ist, sich bei einer ausgeübten Spannung von 2 Newton pro cm Länge um nicht weniger als etwa 10 % in einer seitlichen Richtung elastisch auszudehnen.

2. Zwischenübertragungselement nach Anspruch 1, wobei das Verhältnis der Längsabmessung zur Querabmessung des Zwischenübertragungselements mindestens etwa 7:1, vorzugsweise mindestens etwa 8:1, bevorzugter mindestens etwa 9:1 und am meisten bevorzugt mindestens etwa 10:1 ist.

3. Zwischenübertragungselement nach Anspruch 1 oder Anspruch 2, wobei der Körper eine Vielzahl von Primärfasern beinhaltet, die im Wesentlichen parallel zu der Längsrichtung ausgerichtet sind, und wobei die Primärfasern optional ein Material umfassen, das aus der Gruppe ausgewählt ist, bestehend aus Meta-Aramid, Para-Aramid, Polyamid, Glasfasern, Kohlefaserfasern, Keramikfasern, Metallfasern und Kombinationen davon.

4. Zwischenübertragungselement nach Anspruch 4, wobei der Körper ferner mindestens eine Tragkomponente umfasst, die optional Folgendes umfasst: ein nichtfaseriges Elastomer, optional umfassend ein Material, das aus der Gruppe ausgewählt ist, bestehend aus Silikonkautschuk, Neoprenkautschuk, hydriertem Nitrilbutadienkautschuk (HNBR), Nitrilbutadienkautschuk (NBR), Alkylacrylat-Copolymer (ACM), Ethylenpropylendienmonomer (EPDM) und Kombinationen davon.

5. Zwischenübertragungselement nach Anspruch 5, wobei die Primärfasern mit dem Elastomer imprägniert sind, und/oder wobei die Primärfasern in das Elastomer eingebettet sind.

6. Zwischenübertragungselement nach Anspruch 4 oder Anspruch 5, wobei der Körper oder mindestens eine der Tragkomponenten Sekundärfasern umfasst, die sich von den Primärfasern unterscheiden.

7. Zwischenübertragungselement nach Anspruch 6, wobei die Sekundärfasern im Wesentlichen nicht-parallel zu den Primärfasern ausgerichtet sind und optional ausgerichtet sind, um mindestens etwa 30° von der Parallelen zu den Primärfasern abzuweichen.

8. Zwischenübertragungselement nach Anspruch 7, wobei die Sekundärfasern im Wesentlichen parallel zu der Querrichtung ausgerichtet sind.

9. Zwischenübertragungselement nach einem der Ansprüche 6 bis 8, wobei die Sekundärfasern im Wesentlichen elastisch sind.

10. Zwischentransferelement nach einem der Ansprüche 4 bis 9, wobei mindestens eine der Tragkomponenten, die Primär- und Sekundärfasern umfasst, zusammengefügt sind, um eine einzelne Gewebelage zu bilden.

11. Zwischenübertragungselement nach Anspruch 10, wobei die Primärfasern und die Sekundärfasern durch Weben zusammengefügt werden, wodurch sie zusammen einen gewebten Stoff bilden.

12. Zwischenübertragungselement nach einem der Ansprüche 6 bis 11, wobei mindestens einige der Primärfasern in einer anderen Lage von Primärfasern angeordnet sind, die im Wesentlichen frei von den Sekundärfasern ist.

## Revendications

1. Elément de transfert intermédiaire pour un système d'impression possédant une structure de support qui comprend des rouleaux autour desquels l'élément de transfert est monté durant l'utilisation, l'élément de transfert possédant la forme d'une bande plate allongée dont les extrémités peuvent être raccordées l'une à l'autre, lorsque l'élément de transfert est installé dans le système d'impression, pour former une boucle continue, l'élément de transfert intermédiaire comprenant un corps possédant une première surface fixée à une couche antiadhésive, et supportant celle-ci, qui possède une surface de transfert d'image et une seconde surface destinée à entrer en contact avec les rouleaux dudit système d'impression lorsque il est monté dans celui-ci ; le corps comprenant une ou plusieurs d'une couche conformationnelle, d'une couche compressible, d'une couche thermiquement isolante, d'une couche thermoconductrice, d'une couche électroconductrice, d'une couche à faible frottement, d'une couche à frottement élevé, d'une couche de renforcement et d'une couche conjonctive ; lorsqu'il est maintenu à une température de 150°C, l'élément de transfert intermédiaire est conçu pour s'étirer dans la direction longitudinale de pas plus d'environ 1,5% sous 100 Newton par cm avec une tension appliquée longitudinalement et est conçu pour s'étirer élastiquement dans une direction latérale par pas moins d'environ 10 % sous 2 Newton par cm de longueur de tension appliquée.

2. Elément de transfert intermédiaire selon la revendication 1, ledit rapport de la dimension longitudinale à la dimension latérale de l'élément de transfert intermédiaire étant supérieur ou égal à environ 7:1, de préférence au moins environ 8:1, de plus grande préférence supérieur ou égal à environ 9:1, et idéalement au moins environ 10:1.

3. Elément de transfert intermédiaire selon la revendication 1 ou 2, ledit corps comprenant une pluralité de fibres

primaires orientées sensiblement parallèlement à ladite direction longitudinale, et éventuellement, lesdites fibres primaires comprenant un matériau choisi dans le groupe constitué par un méta-aramide, un para-aramide, un polyamide, des fibres de verre, des fibres de carbone, des fibres céramiques, des fibres métalliques et des combinaisons de ceux-ci.

**4.** Elément de transfert intermédiaire selon la revendication 4, ledit corps comprenant en outre au moins un composant de support comprenant éventuellement : un élastomère non fibreux comprenant éventuellement un matériau choisi dans le groupe constitué par le caoutchouc silicone, le caoutchouc néoprène, le caoutchouc nitrile butadiène hydrogéné (HNBR), le caoutchouc nitrile butadiène (NBR), le copolymère d'acrylate d'alkyle (ACM), le monomère éthylène-propylène-diène (EPDM) et des combinaisons de ceux-ci.

**5.** Elément de transfert intermédiaire selon la revendication 5, lesdites fibres primaires étant imprégnées dudit élastomère, et/ou lesdites fibres primaires étant incorporées dans ledit élastomère.

**6.** Elément de transfert intermédiaire revendication 4 ou 5, ledit corps ou au moins l'un dudit composant de support comprenant des fibres secondaires, distinctes desdites fibres primaires.

**7.** Elément de transfert intermédiaire selon la revendication 6, lesdites fibres secondaires étant orientées sensiblement non parallèles auxdites fibres primaires, et éventuellement, étant orientées pour diverger d'au moins environ 30° de la parallèle auxdites fibres primaires.

**8.** Elément de transfert intermédiaire selon la revendication 7, lesdites fibres secondaires étant orientées sensiblement parallèles à ladite direction latérale.

**9.** Elément de transfert intermédiaire selon l'une quelconque des revendications 6 à 8, lesdites fibres secondaires étant sensiblement élastiques.

**10.** Elément de transfert intermédiaire selon l'une quelconque des revendications 4 à 9, au moins l'un dudit composant de support comprenant des fibres primaires et secondaires étant agrégées ensemble pour constituer un seul pli de tissu.

**11.** Elément de transfert intermédiaire selon la revendication 10, lesdites fibres primaires et lesdites fibres secondaires étant agrégées ensemble par tissage, constituant ainsi ensemble un tissu tissé.

**12.** Elément de transfert intermédiaire selon l'une quelconque des revendications 6 à 11, au moins certaines desdites fibres primaires étant situées dans un pli distinct de fibres primaires sensiblement dépourvues desdites fibres secondaires.

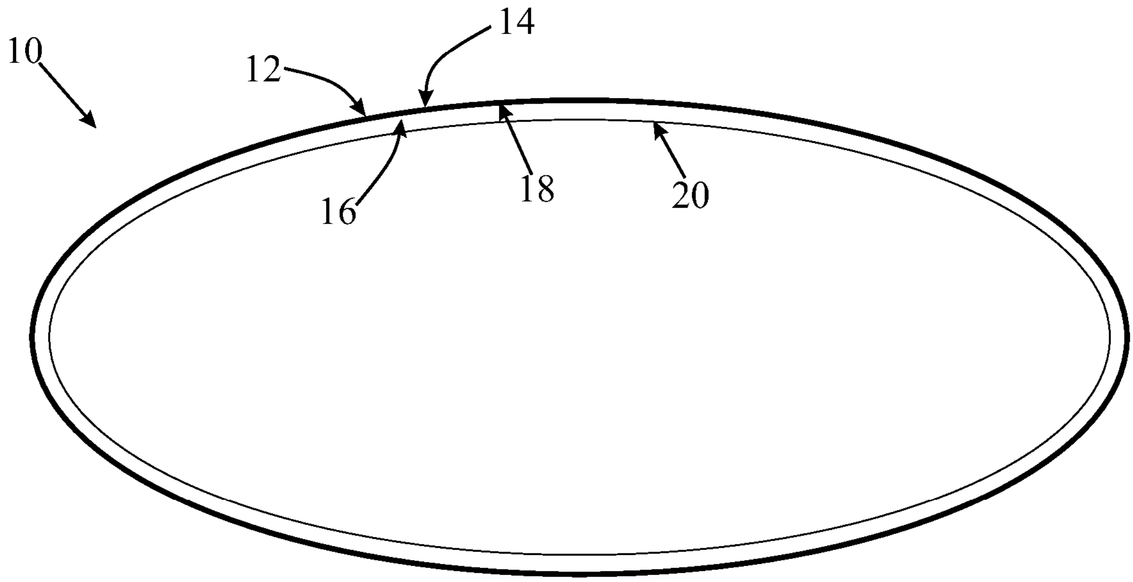


Figure 1A

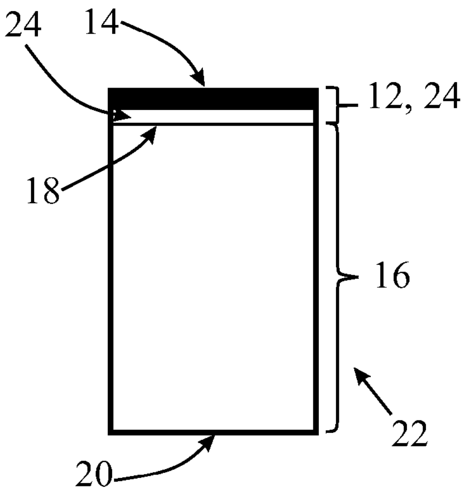


Figure 1B

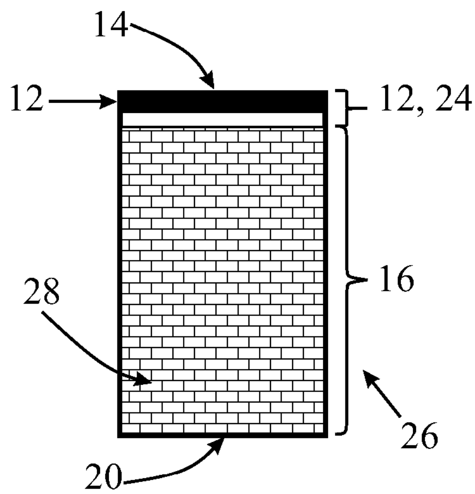


Figure 2

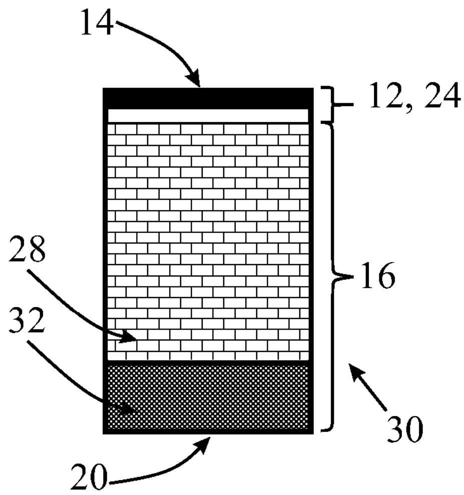


Figure 3

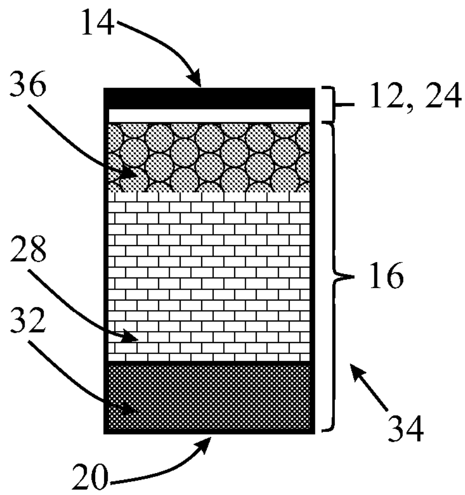


Figure 4

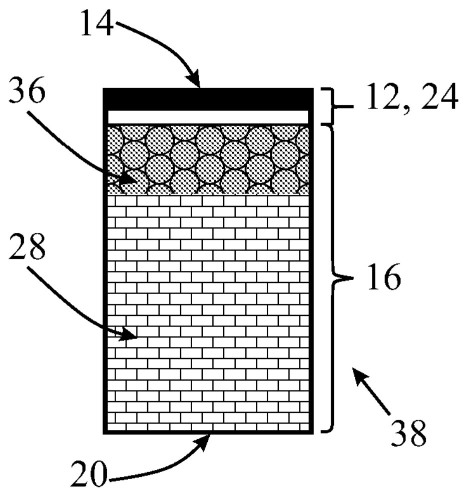


Figure 5

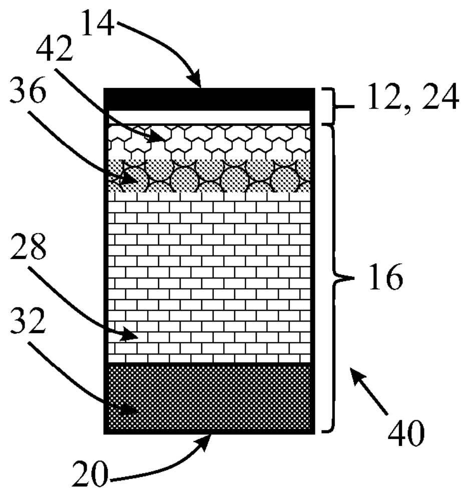


Figure 6

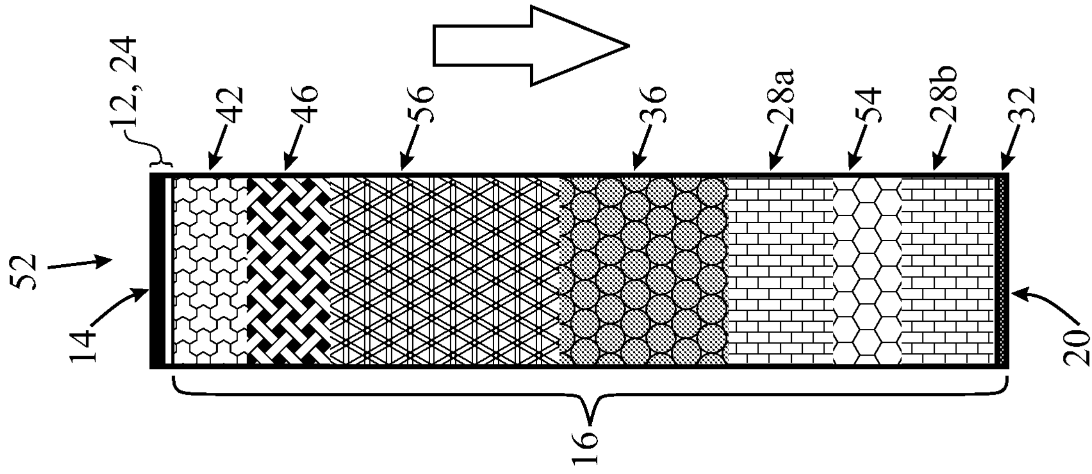


Figure 9

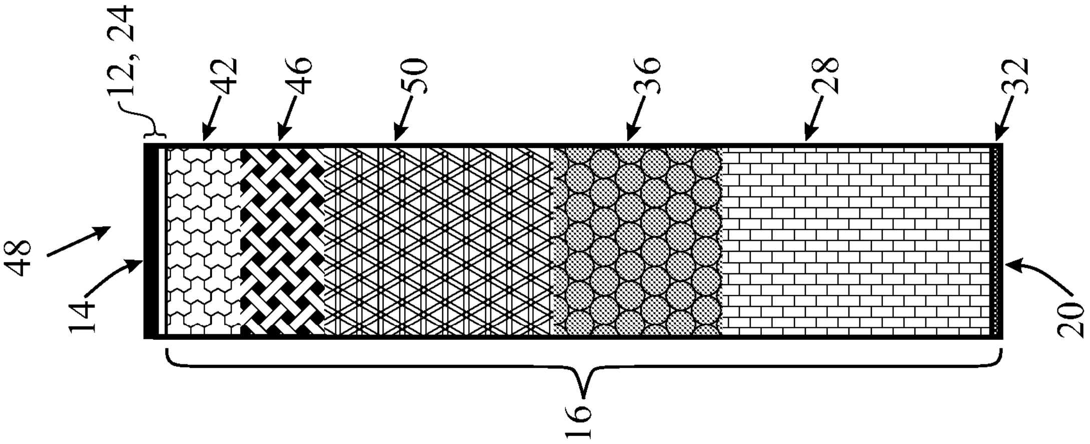


Figure 8

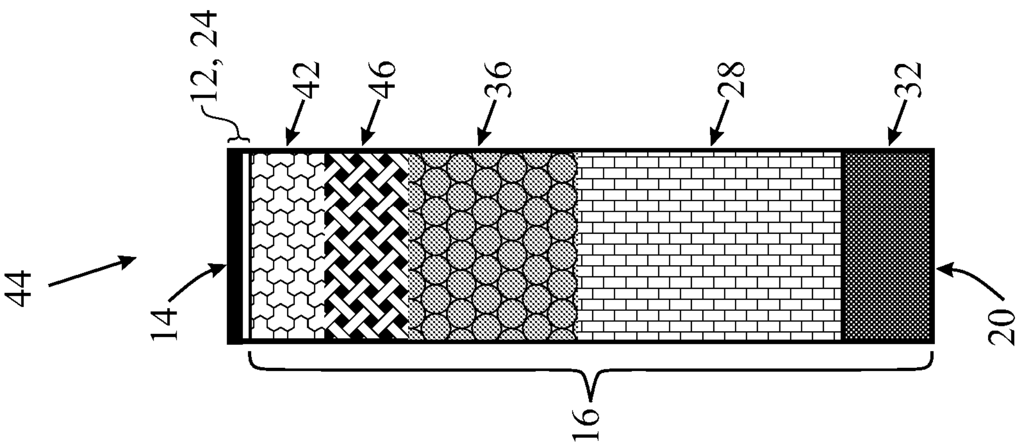


Figure 7

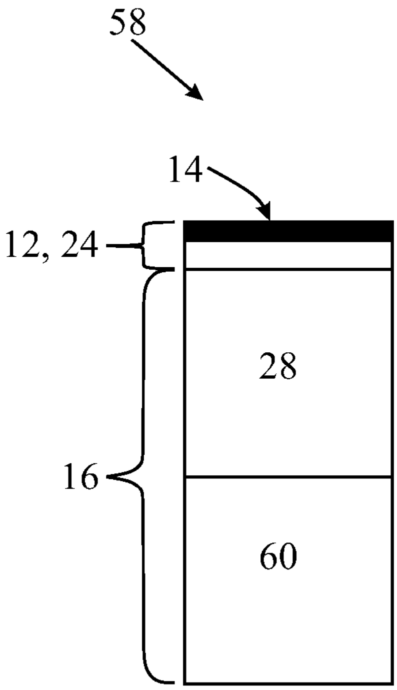


Figure 10

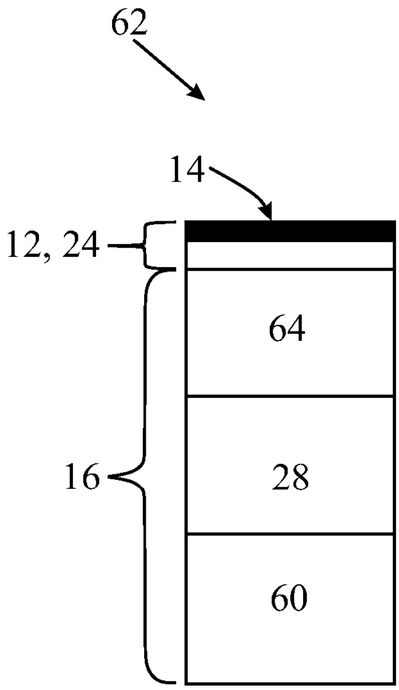


Figure 11

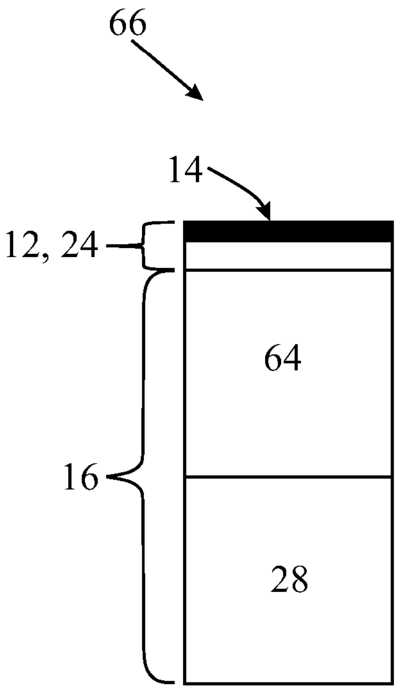


Figure 12

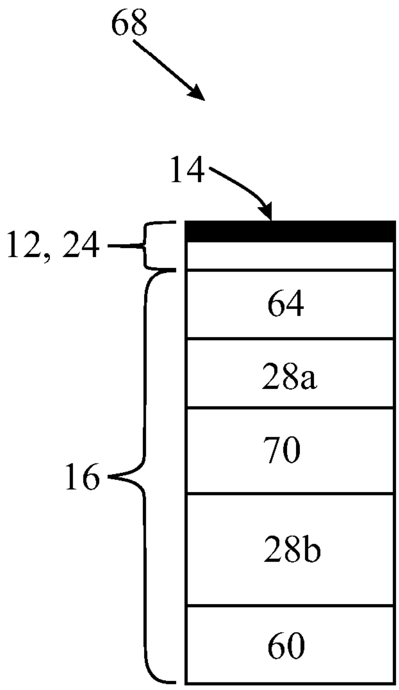


Figure 13

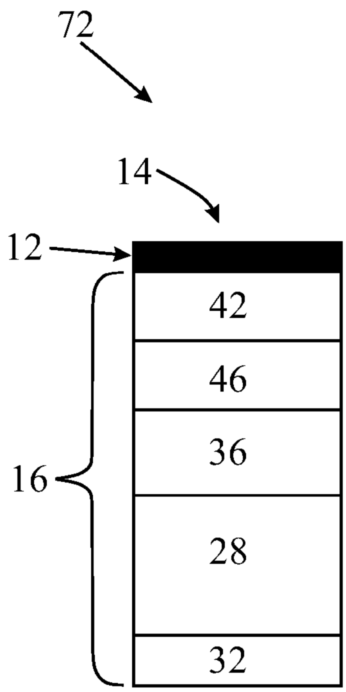


Figure 14

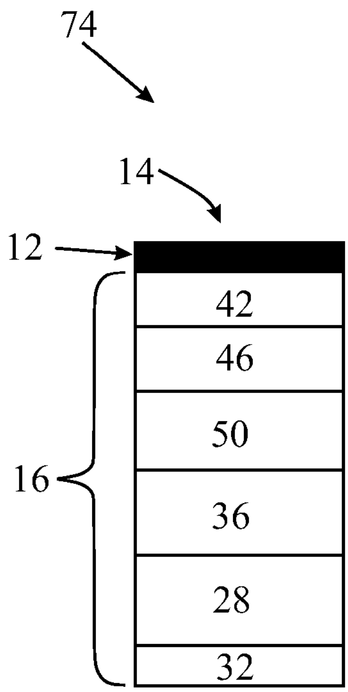


Figure 15

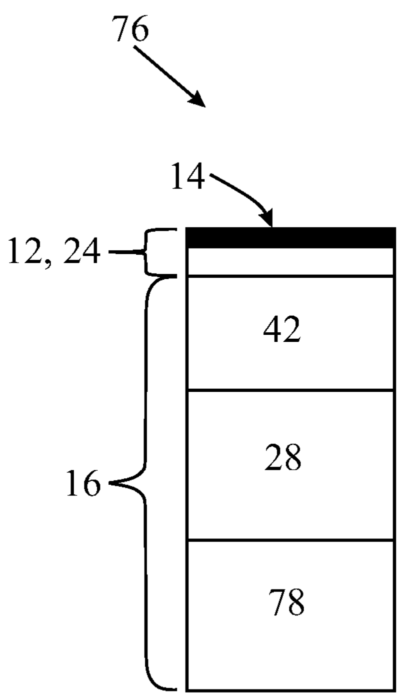


Figure 16

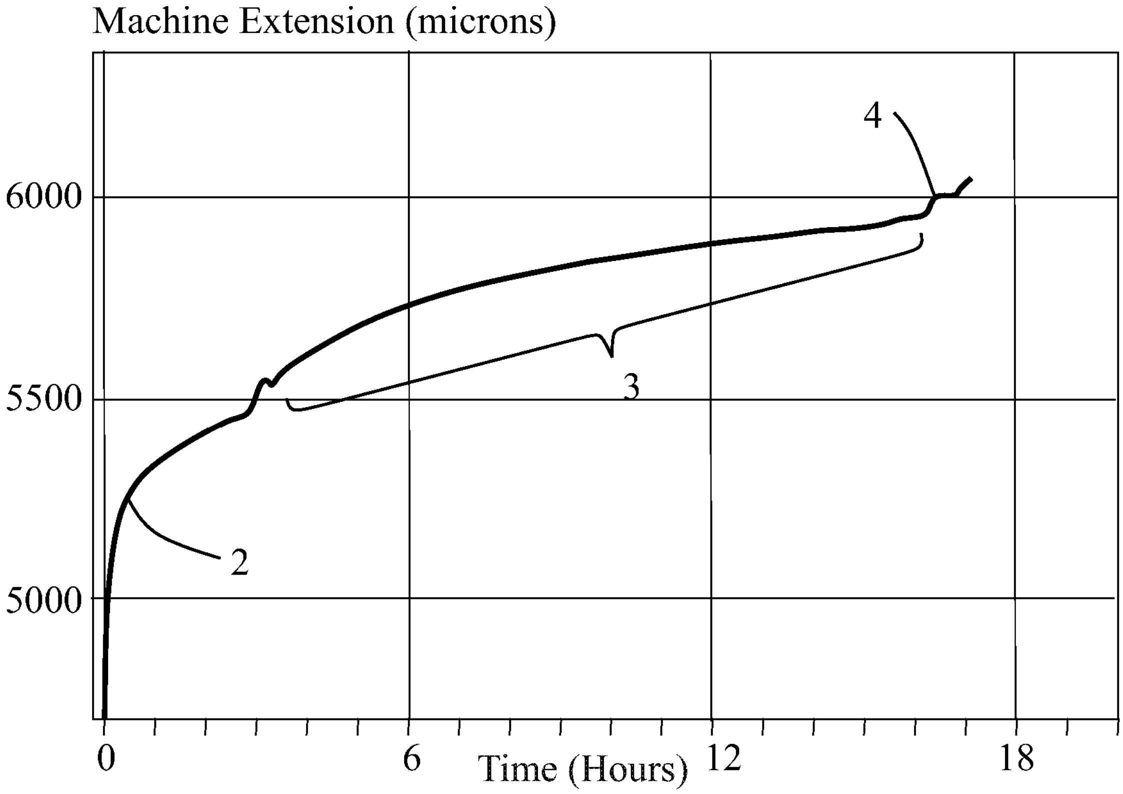


Figure 17

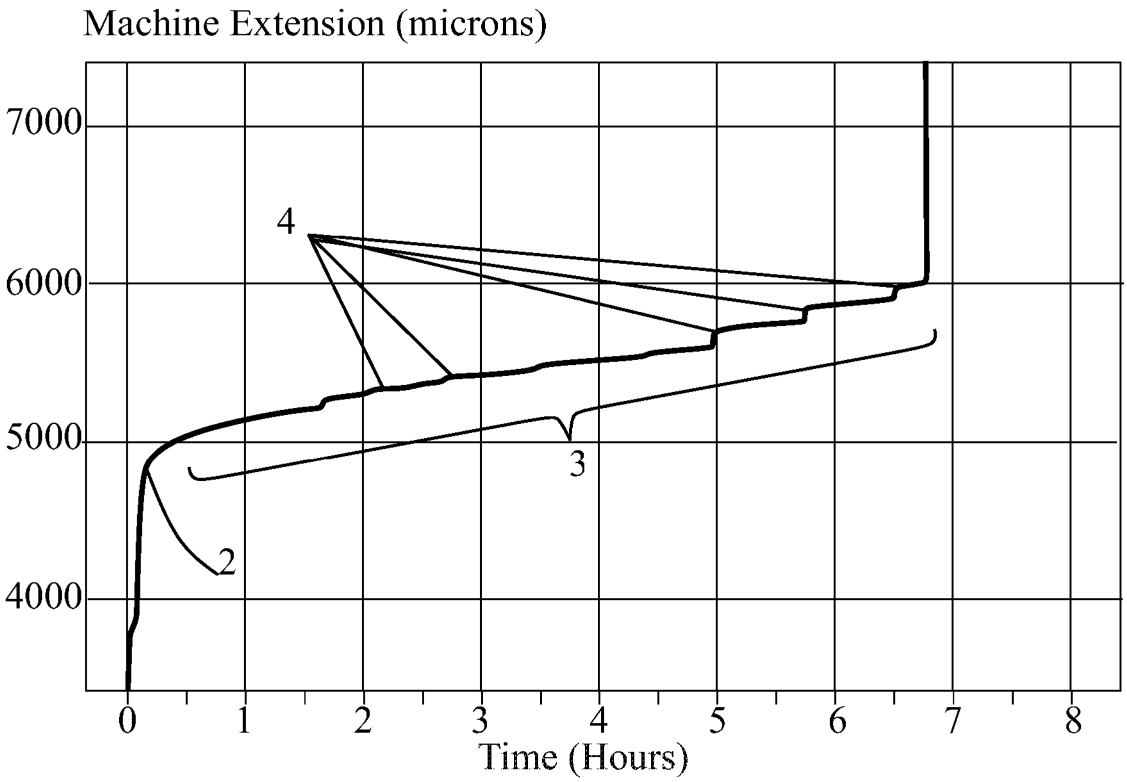


Figure 18

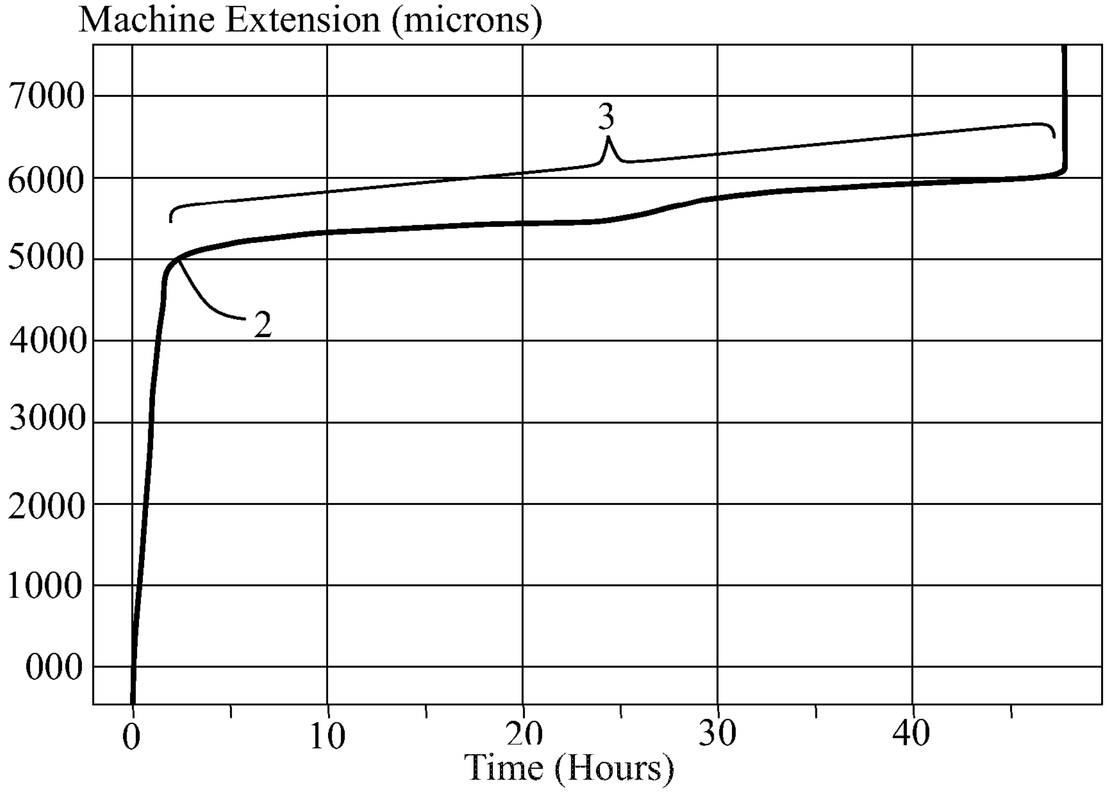


Figure 19

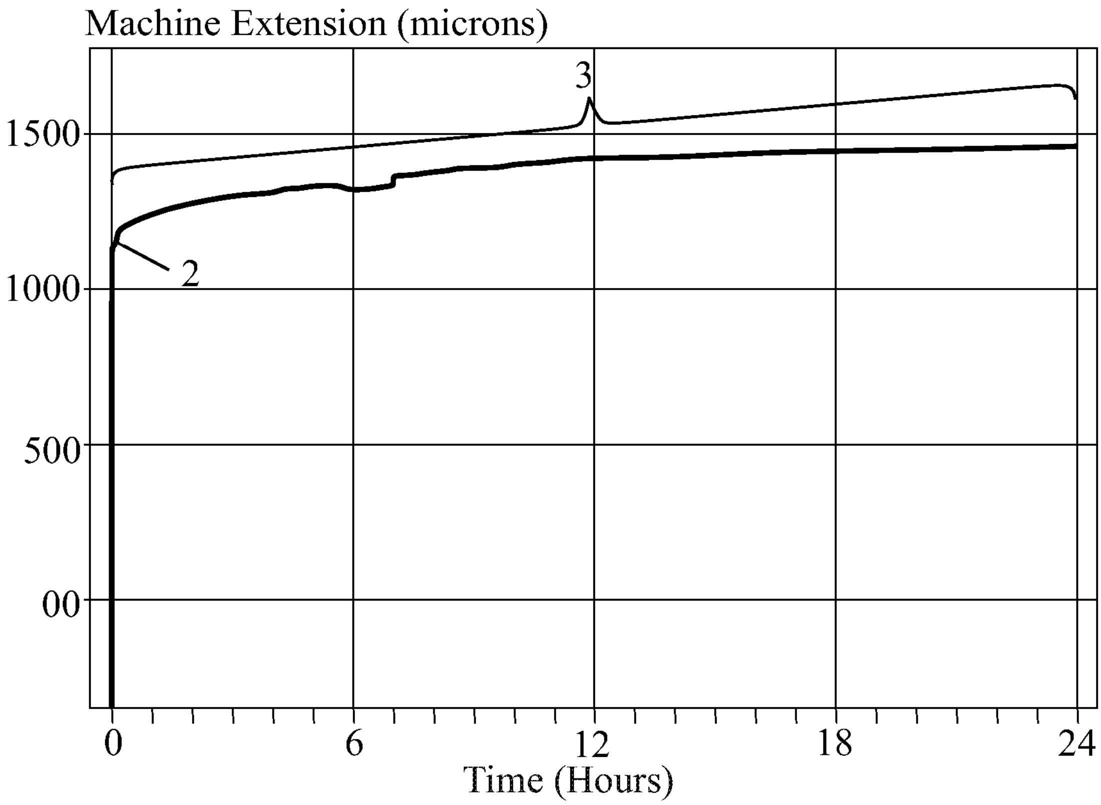


Figure 20

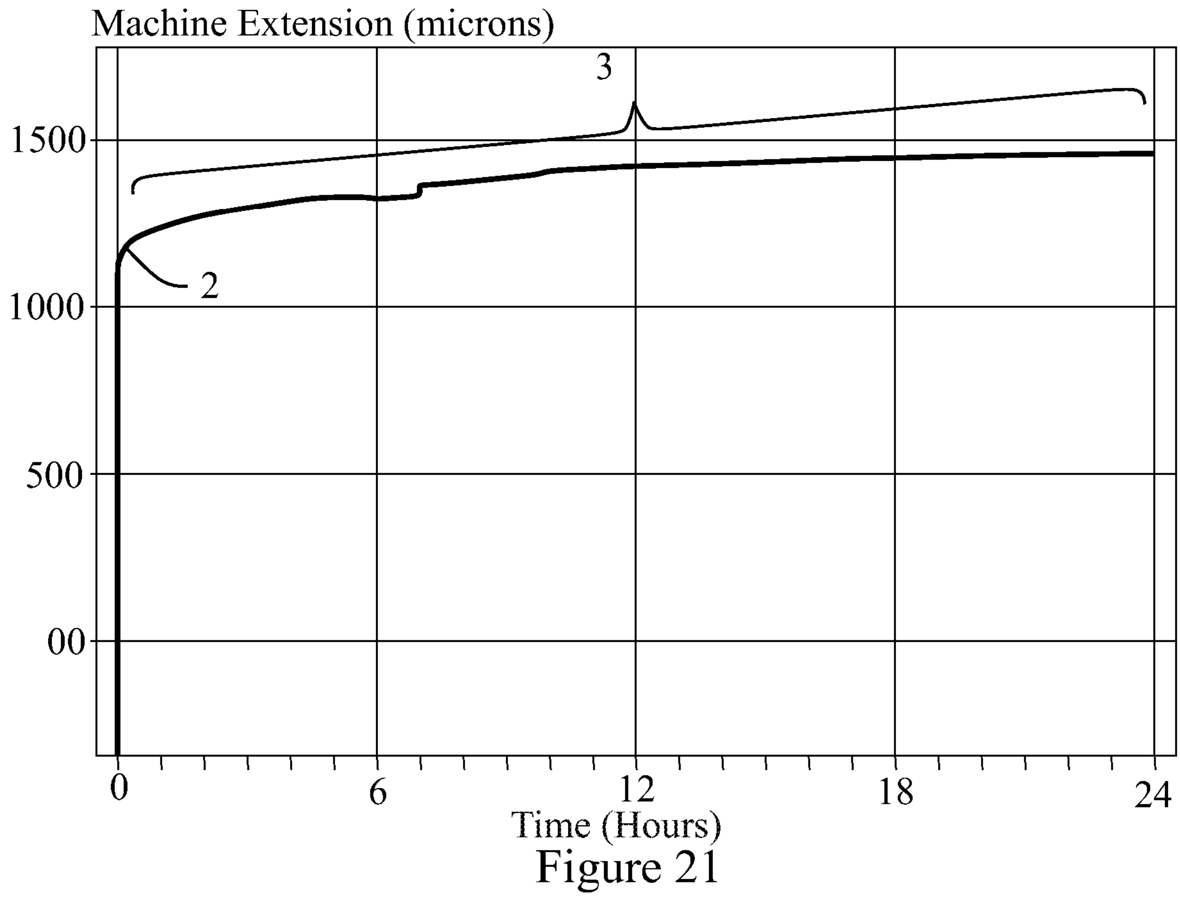


Figure 21

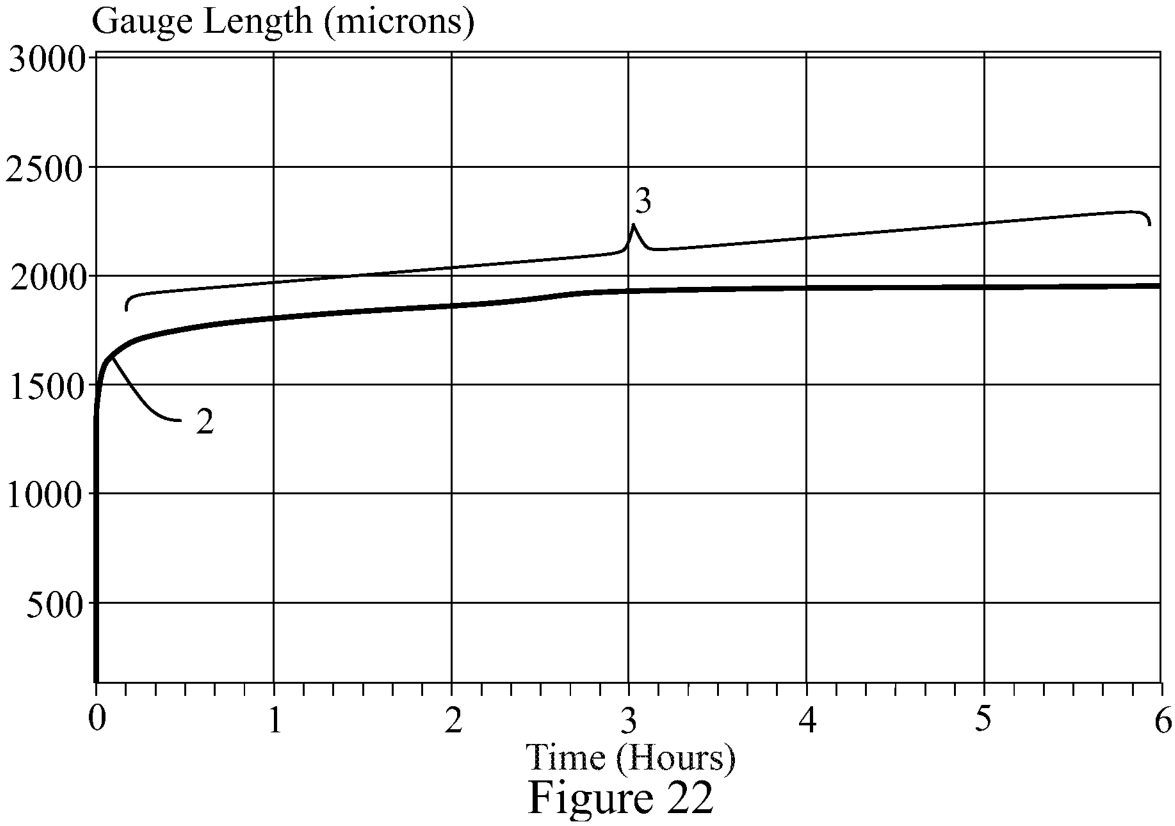


Figure 22

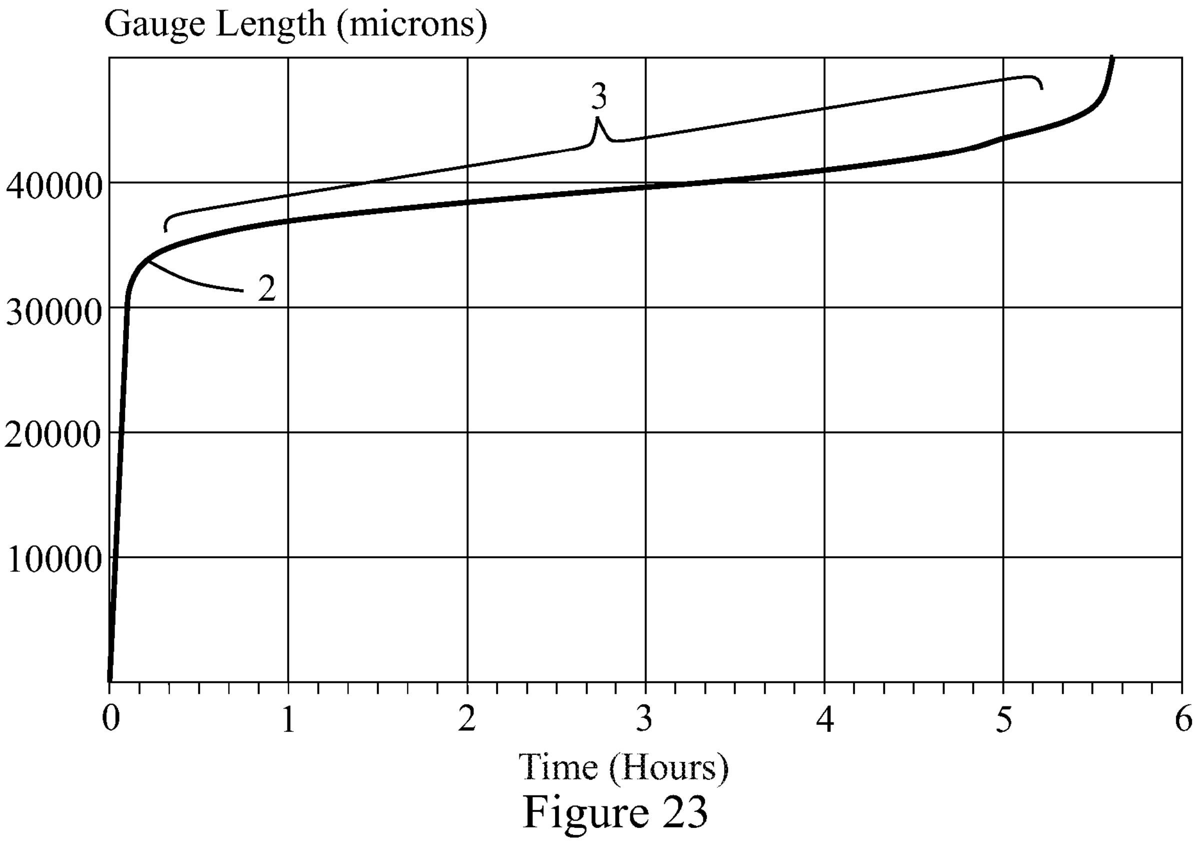
Gauge Length (microns)
40000
30000
20000
10000
0
1
2
3
4
5
6
Time (Hours)
2
3

Figure 23

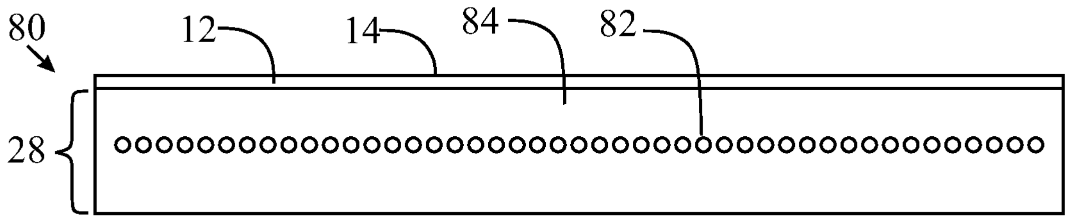


Figure 24

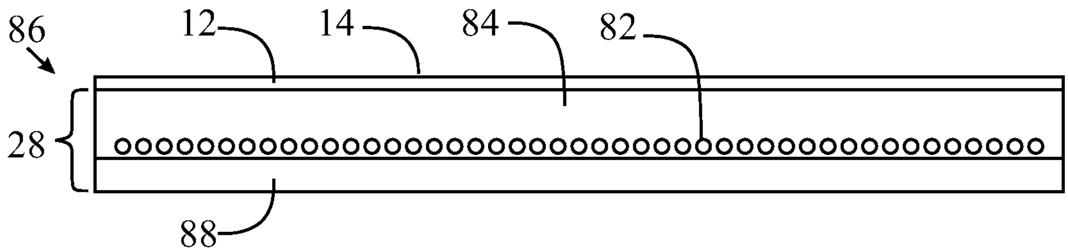


Figure 25

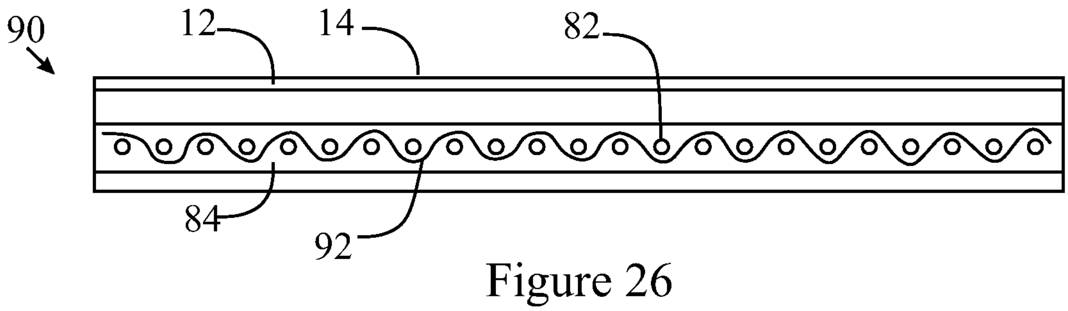


Figure 26

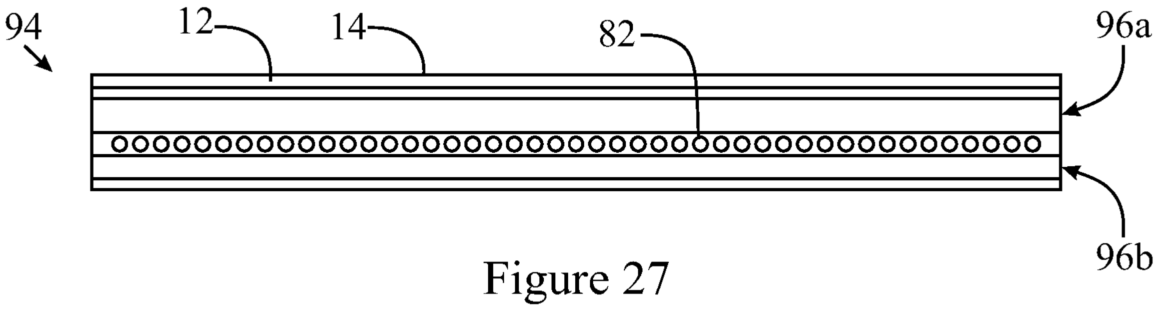


Figure 27

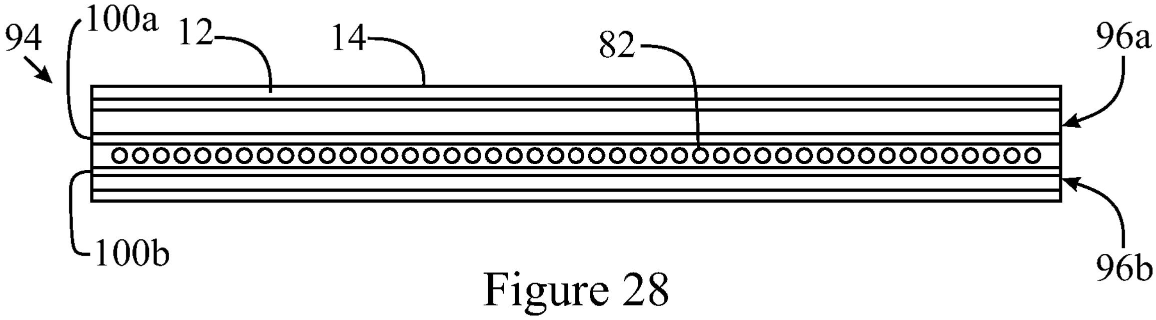


Figure 28

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0613791 A
- US 5884559 A
- EP 0784244 A
- WO 2013132339 A
- WO 2013136220 A
- WO 2013132424 A
- WO 2013132420 A
- US 3697551 A
- US 4401500 A
- US 20020197481 A
- US 20080138546 A
- WO 2002094912 A
- WO 2010042784 A
- WO 2013132418 A
- WO 2013132419 A
- WO 2013132439 A


### Non-patent literature cited in the description


- *CHEMICAL ABSTRACTS,* 77-58-7
- *CHEMICAL ABSTRACTS,* 54068-28-9
- *CHEMICAL ABSTRACTS,* 112-80-1